# EUROPÄISCHE PATENTSCHRIFT

(11) **EP 2 393 902 B1**
(45) Veröffentlichungstag und Bekanntmachung des Hinweises auf die Patenterteilung: **02.10.2013**
(21) Anmeldenummer: 10703416.7
(22) Anmeldetag: 03.02.2010
(51) Int. Cl.: C09K 19/42, C09K 19/04, C09K 19/54

(54) **FLÜSSIGKRISTALLINES MEDIUM UND FLÜSSIGKRISTALLANZEIGE**
LIQUID CRYSTALLINE MEDIUM AND LIQUID CRYSTAL DISPLAY
MILIEU CRISTAL LIQUIDE ET DISPOSITIF D'AFFICHAGE À BASE DE CRISTAUX LIQUIDES

(30) Priorität: 06.02.2009 DE 102009007942; 23.02.2009 DE 102009009951
(43) Veröffentlichungstag der Anmeldung: 14.12.2011
(73) Patentinhaber: Merck Patent GmbH, 64293 Darmstadt (DE)
(72) Erfinder: CZANTA, Markus, 64285 Darmstadt (DE); SAITO, Izumi, 64285 Darmstadt (DE); SCHOENEFELD, Christian, 64397 Modautal (DE); LEE, Seung-Eun, Seoul 140-212 (KR); LEE, Sang-Kyu, Seoul 137-919 (KR); BAE, Ji-Hong, Gunpo 435-826 (KR)
(86) Internationale Anmeldenummer: PCT/EP2010/000651
(87) Internationale Veröffentlichungsnummer: WO 2010/089092

(56) Entgegenhaltungen:
- EP-A1- 1 889 894
- EP-A1- 1 908 811
- WO-A1-2008/061606
- WO-A1-2009/156118
- US-A1- 2008 124 492
- US-A1- 2008 128 653
- US-A1- 2008 236 727

## Beschreibung

### Gebiet der Erfindung

Die vorliegende Erfindung betrifft flüssigkristalline Medien, insbesondere Medien die durch ein Polymer stabilisiert sind und diese Medien enthaltende Flüssigkristallanzeigen, speziell Anzeigen, die durch eine Aktivmatrix adressiert werden und insbesondere Anzeigen des Typs In Plane Switching (IPS), Fringe Field Switching (FFS) oder positive Δε-Vertical Aligned (Posi-VA) und ganz besonders derartige Flüssigkristallanzeigen des PS- (Polymer Stabilized) oder PSA- (Polymer Sustained Alignment) Typs.

### Stand der Technik und zu lösendes Problem

Die derzeit verwendeten Flüssigkristallanzeigen (auch kurz FK-Anzeigen, "Displays" oder "LCDs" genannt) sind meist solche des TN-(Twisted Nematic) Typs. Diese weisen allerdings den Nachteil einer starken Blickwinkelabhängigkeit des Kontrastes auf.

Daneben sind sogenannte VA-Anzeigen ("vertical alignment") bekannt, die einen breiteren Blickwinkel aufweisen. Die Flüssigkristallzelle einer VA-Anzeige enthält eine Schicht eines flüssigkristallinen Mediums zwischen zwei transparenten Elektroden, wobei das flüssigkristalline Medium üblicherweise einen negativen Wert der dielektrischen (DK-) Anisotropie (Δε) aufweist. Die Moleküle der Flüssigkristallschicht sind im ausgeschalteten Zustand senkrecht zu den Elektrodenflächen (homöotrop) oder gekippt homöotrop (Englisch "tilted") orientiert. Bei Anlegen einer elektrischen Spannung an die Elektroden findet eine Umorientierung der Flüssigkristallmoleküle parallel zu den Elektrodenflächen statt.

Weiterhin sind OCB-Anzeigen (optically compensated bend) bekannt, die auf einem Doppelbrechungseffekt beruhen und eine Flüssigkristallschicht mit einer sogenannten "bend"-Orientierung und üblicherweise positiver (DK-) Anisotropie aufweisen. Bei Anlegen einer elektrischen Spannung findet eine Umorientierung der Flüssigkristallmoleküle senkrecht zu den Elektrodenflächen statt. Darüber hinaus enthalten OCB-Anzeigen normalerweise einen oder mehrere doppelbrechende, optische Retardationsfilme, um unerwünschte Lichtdurchlässigkeit der "bend"-Zelle im dunklen Zustand zu vermeiden. OCB-Anzeigen besitzen gegenüber TN-Anzeigen einen weiteren Blickwinkel und kürzere Schaltzeiten.

Insbesondere sind IPS-Anzeigen (In-Plane Switching) bekannt, die eine Flüssigkristallschicht zwischen zwei Substraten enthalten, wovon nur eines eine Elektrodenschicht mit üblicherweise kammförmiger Struktur aufweist. Dadurch wird bei Anlegen einer Spannung ein elektrisches Feld erzeugt, welches eine signifikante Komponente parallel zur Flüssigkristallschicht aufweist. Dieses bewirkt eine Umorientierung der Flüssigkristallmoleküle in der Schichtebene.

Des Weiteren wurden sogenannte FFS-Anzeigen ("Fringe-Field-Switching") vorgeschlagen (siehe u.a. S.H. Jung et al., Jpn. J. Appl. Phys., Band 43, No. 3, 2004, 1028), die ebenfalls zwei Elektroden auf dem gleichen Substrat beinhalten, wovon jedoch im Gegensatz zu IPS-Anzeigen nur eine als strukturierte (kammförmige) Elektrode ausgebildet ist, und die andere Elektrode unstrukturiert ist. Dadurch wird ein starkes sogenanntes "fringe field" erzeugt, also ein starkes elektrisches Feld nahe am Rand der Elektroden und in der gesamten Zelle ein elektrisches Feld, welches sowohl eine starke vertikale als auch eine starke horizontale Komponente aufweist. Sowohl IPS-Anzeigen als auch FFS-Anzeigen weisen eine geringe Blickwinkelabhängigkeit des Kontrastes auf.

Eine Weiterentwicklung der oben genannten Anzeigentypen stellen die sogenannten "PS"-Anzeigen ("polymer stabilized") dar, die auch unter dem Begriff "PSA" ("polymer sustained alignment") bekannt sind. Darin wird dem flüssigkristallinen Medium eine geringe Menge (zum Beispiel 0,3 %, typischerweise im Bereich von ≥ 0,1 % bis ≤ 5 %, bevorzugt bis ≤ 3 %) einer polymerisierbaren Verbindung zugesetzt, welche nach Einfüllen in die Flüssigkristallzelle bei angelegter elektrischer Spannung zwischen den Elektroden in situ polymerisiert bzw. vernetzt wird, üblicherweise durch UV-Photopolymerisation. Optional können diese Mischungen auch einen Initiator enthalten, wie beispielsweise in der U.S. 6,781,665 beschrieben. Der Initiator, z. B. Irganox®-1076 der Fa. Ciba, wird vorzugsweise der Mischung enthaltend polymerisierbare Verbindungen in Mengen von 0 - 1 % zugesetzt. Als besonders geeignet hat sich der Zusatz von polymerisierbaren mesogenen oder flüssigkristallinen Verbindungen, auch als "reaktive Mesogene" (RM) bezeichnet, zur Flüssigkristallmischung erwiesen. Mittlerweile wird das PSA-Prinzip in diversen klassischen Flüssigkristallanzeigen angewendet. So sind beispielsweise PSA-VA-, PSA-OCB-, PS-IPS/FFS- und PS-TN-Anzeigen bekannt. Wie man in Testzellen nachweisen kann, führt das PSA-Verfahren zu einer Stabilisierung der Ausgangsorientierung der Flüssigkristalle in der Zelle. Bei PSA-OCB-Anzeigen kann man daher erreichen, dass die Bend-Struktur stabilisiert wird, so dass man die Offset-Spannung reduzieren kann sogar ganz ohne Offset-Spannung auskommt. Im Falle von PSA-VA-Anzeigen verringert sich der von der Normalen zur Oberfläche der Anzeige gemessene "Pretilt", was sich dort positiv auf die Schaltzeiten auswirkt. Bei den PSA-Anzeigen soll eine Polymerisierung der reaktiven Mesogene in der flüssigkristallinen Mischung erfolgen. Voraussetzung hierfür ist, dass die Flüssigkristallmischung selbst keine polymerisierbaren Komponenten enthält. Geeignete polymerisierbare Verbindungen sind beispielsweise in Tabelle G aufgelistet.

Außerdem haben sich sogenannte Positiv VA-Anzeigen, also Anzeigen als besonders günstige Ausführungsform erwiesen. In diesen Anzeigen werden dielektrisch positive Flüssigkristallmedien verwendet. Die Ausgangsorientierung der Flüssigkristalle im spannungsfreien Ausgangszustand ist hier homeotrop, also, im Wesentlichen senkrecht zu den Substraten. Durch Anlegen einer elektrischen Spannung an interdigitale Elektroden, die ein im Wesentlichen zur Schicht des Flüssigkristallmediums parallelen Feld erzeugen, werden die Flüssigkristalle in eine im Wesentlichen zu den Substraten parallele Orientierung überführt. Derartige interdigitale Elektroden werden auch üblicherweise bei IPS-Anzeigen verwendet. Auch bei dienen Posi-VA-Anziegen bewährt sich eine entsprechende Polymerstabilisierung (PSA). Auch kann ist eine erhebliche Reduzierung der Schaltzeiten realisiert werden.

Insbesondere für Monitor- und vor allem TV-Anwendungen, aber auch für mobile Anwendungen(Mobile TV) und "Note Book" TV (NB TV), ist nach wie vor die Optimierung der Schaltzeiten, wie aber auch des Kontrastes und der Luminanz (also auch Transmission) der Flüssigkristallanzeige gefragt. Hier kann das PSA-Verfahren entscheidende Vorteile bringen. Insbesondere bei PSA-IPS, PSA-FFS und PSA-Posi-VA kann man ohne nennenswerte Einbußen sonstiger Parameter, wie insbesondere der günstigen Blickwinkelabhängigkeit des Kontrasts dieser Anzeigen, eine Verkürzung der Schaltzeiten erreichen.

In diesem Zusammenhang sind beispielsweise Flüssigkristallmischungen mit dielektrisch positiver Anisotropie, welche für PSA-Anzeigen geeignet sind und eine polymerisierbare Komponente enthalten, in WO 2008-061606 A1, WO 2009-156118 A1, EP 1 889 894 A1, US 2008-236727 A1, US2008- 124492 A1 US2008-128653 A1 und EP1 908 811 A1 offenbart.

Es hat sich jedoch gezeigt, dass bei Verwendung in PSA-Anzeigen die aus dem Stand der Technik bekannten Flüssigkristallmischungen und RMs noch verschiedene Nachteile aufweisen. Bevorzugt soll die Polymerisation mittels UV-Licht ohne den Zusatz von Photoinitiatoren erfolgen, was für bestimmte Anwendungen von Vorteil sein kann. Darüber hinaus sollte das gewählte "Materialsystem" aus Flüssigkristallmischung (nachfolgend auch als "Flüssigkristallhostmischung" oder auch einfach kurz "Hostmischung" bezeichnet) und polymerisierbarer Komponente eine möglichst geringe Rotationsviskosität, sowie möglichst gute elektrische Eigenschaften aufweisen. Hierbei ist die sog. "Voltage Holding Ratio" (VHR oder kurz HR) hervorzuheben. Im Zusammenhang mit PSA-Anzeigen ist insbesondere eine hohe VHR nach Bestrahlung mit UV-Licht von zentraler Bedeutung, da die UV-Belichtung meist ein notwendiger Teil des Herstellungsprozesses der Anzeige ist, aber natürlich auch als "normale" Belastung in der fertigen Anzeige auftritt.

Es ergibt sich jedoch das Problem, dass bei weitem nicht alle Kombinationen Flüssigkristallmischung und polymerisierbarer Komponente für PSA-Anzeigen geeignet sind, weil zum Beispiel die VHR für die Anwendung in TFT-Anzeigen oft unzureichend ist oder weil die Stabilisierung der Orientierung der Flüssigkristallmischungen zu wünschen übrig lässt.

Insbesondere ist es wünschenswert, neue Materialien für PSA-Anzeigen zur Verfügung zu haben, die deutlich weniger Nachteile für die praktische Anwendung haben.

Es besteht somit immer noch ein großer Bedarf an PSA-Anzeigen, insbesondere vom IPS- und FFS-Typ, sowie Flüssigkristallmedien und polymerisierbaren Verbindungen zur Verwendung in solchen Anzeigen, welche die oben beschriebenen Nachteile nicht oder nur in geringem Maße zeigen und verbesserte Eigenschaften besitzen. Insbesondere besteht ein großer Bedarf nach PSA-Anzeigen, sowie Materialien zur Verwendung in PSA-Anzeigen, die einen hohen spezifischen Widerstand bei gleichzeitig großem Arbeitstemperaturbereich, kurze Schaltzeiten auch bei tiefen Temperaturen und niedriger Schwellenspannung, eine Vielzahl von Graustufen, einen hohen Kontrast und einen weiten Blickwinkel ermöglichen, sowie hohe Werte der Voltage Holding Ratio, insbesondere auch noch nach UV-Belastung aufweisen und insbesondere verbesserte Schaltzeiten aufweisen.

Der Erfindung liegt die Aufgabe zugrunde, neue Flüssigkristallmischungen und neue flüssigkristalline Medien für die Verwendung in PSA-Anzeigen bereitzustellen, welche die oben angegebenen Nachteile nicht oder in geringerem Maße aufweisen, die gleichzeitig sehr hohe spezifische Widerstände, hohe VHR-Werte, breite Blickwinkelbereiche, niedrige Schwellenspannungen und besonders niedrige Schaltzeiten ermöglichen.

Diese Aufgabe wurde erfindungsgemäß gelöst durch flüssigkristalline Medien und Flüssigkristallanzeigen wie in der vorliegenden Anmeldung beschrieben. Insbesondere wurde überraschend gefunden, dass die Verwendung erfindungsgemäßer flüssigkristalliner Medien in PSA-Anzeigen die Realisierung besonders schneller Schaltzeiten ermöglichen.

Für diese Anzeigen im Allgemeinen und insbesondere bei den PSA-IPS- und den PSA-FFS-Anzeigen, sind neue flüssigkristalline Medien mit verbesserten Eigenschaften erforderlich. Insbesondere müssen die Ansprechzeiten für viele Arten von Anwendungen verbessert werden. Es sind daher flüssigkristalline Medien mit geringeren Viskositäten (η), speziell mit geringeren Rotationsviskositäten (γ₁) erforderlich. Die Rotationsviskosität sollte insbesondere für Monitoranwendungen 100 mPa·s oder weniger, bevorzugt 80 mPa·s oder weniger, vorzugsweise 60 mPa·s oder weniger und speziell 55 mPa·s oder weniger betragen.

Neben diesem Parameter müssen die Medien über einen Bereich der nematischen Phase mit geeigneter Breite und Lage, sowie eine geeignete Doppelbrechung (An) verfügen und dielektrische Anisotropie (Δε) sollte hoch genug sein, um eine einigermaßen niedrige Betriebsspannung zu ermöglichen. Vorzugsweise sollte Δε höher als 2 und sehr bevorzugt höher als 3, vorzugsweise jedoch nicht höher als 20, besonders bevorzugt jedoch nicht höher als 15 und ganz besonders bevorzugt nicht höher als 12 liegen, da dies einem zumindest einigermaßen hohen spezifischen Widerstand entgegenstehen würde.

Für Anwendungen als Anzeigen für Notebooks oder andere mobile Anwendungen sollte die Rotationsviskosität bevorzugt 120 mPa·s oder weniger und besonders bevorzugt 100 mPa·s oder weniger betragen. Hier sollte die dielektrische Anisotropie vorzugsweise höher als 6, bevorzugt höher als 8 und besonders bevorzugt höher als 12 sein.

Für Anwendungen als Anzeigen für Fernseher sollte die dielektrische Anisotropie vorzugsweise höher als 2 und besonders bevorzugt höher als 3, aber vorzugsweise kleiner als 20, bevorzugt kleiner als 15 und besonders bevorzugt kleiner als 12 sein. Hier sollte der Klärpunkt im Bereich von 50°C oder mehr bis 100°C oder und die weniger und die Doppelbrechung im Bereich von 0,08 oder mehr bis 0,13 oder weniger liegen.

Abweichend von den oben gegebenen Anforderungen werden für PSA-Posi-VA-Anzeigen neue flüssigkristalline Medien mit Rotationsviskositäten (γ₁) von 200 mPa·s oder weniger und bevorzugt 150 mPa·s oder weniger benötigt. Für diese Anwendungen sollte die dielektrische Anisotropie (Δε) vorzugsweise im Bereich von 2 oder mehr, bevorzugt von 4 oder mehr bis 30 oder weniger, bevorzugt bis 25 oder weniger betragen. Gang besonders bevorzugte Bereiche für Δε sind 10 oder mehr bis 15 oder weniger, sowie auch 25 oder mehr bis 30 oder weniger.

Es besteht daher ein erheblicher Bedarf an flüssigkristallinen Medien mit geeigneten Eigenschaften für praktische Anwendungen, wie einem breiten nematischen Phasenbereich, geeigneter optischer Anisotropie (Δn) entsprechend dem verwendeten Anzeigetyp, einem hohen Δε und speziell geringen Viskositäten für besonders kurze Schaltzeiten.

### Vorliegende Erfindung

Überraschenderweise wurde nun gefunden, dass flüssigkristalline Medien mit einem geeignet hohen Δε, einem geeigneten Phasenbereich und Δn verwirklicht werden können, welche die Nachteile der Materialien des Standes der Technik nicht oder zumindest nur in erheblich geringerem Maße aufweisen.

Diese verbesserten flüssigkristallinen Medien gemäß der vorliegenden Anmeldung enthalten mindestens die folgenden Verbindungen:
- eine oder mehrere polymerisierbare Verbindungen und
- eine oder mehrere dielektrisch positive Verbindungen der Formel III 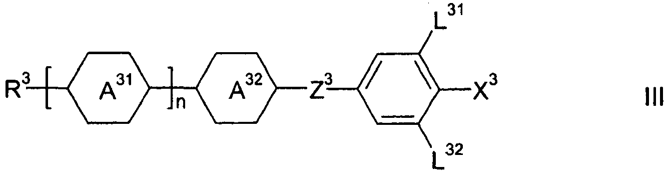 worin
   - R³: Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeuten, 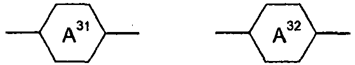 bei jedem Erscheinen unabhängig voneinander
- eine oder mehrere polymerisierbare Verbindungen und
- eine oder mehrere dielektrisch positive Verbindungen der Formel III 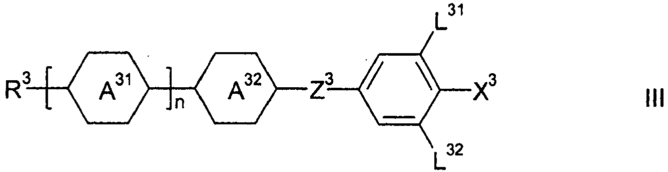 worin
   - R³: Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeuten, 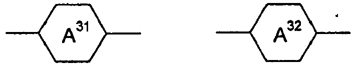 bei jedem Erscheinen unabhängig voneinander 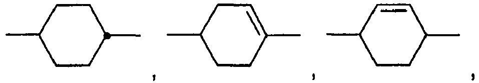 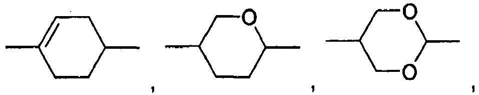 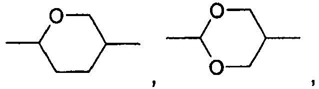 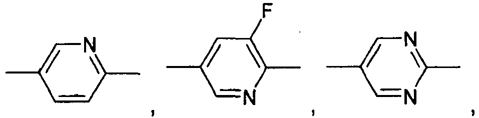 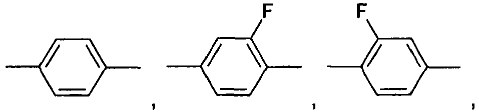 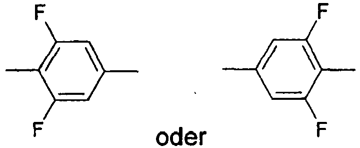 bedeuten
   - L³¹ und L³²: unabhängig voneinander H oder F bedeuten,
   - X³: Cl, -O-CH=CF₂ oder -OCF₃ bedeuten,
   - Z³: -CH₂CH₂-, -CF₂CF₂-, -COO-, *trans-* -CH=CH-, *trans-*-CF=CF-, -CH₂O- oder eine Einfachbindung bedeutet und
   - n: 0,1, 2 oder 3 bedeuten, und
- eine oder mehrere dielektrisch neutrale Verbindungen ausgewählt aus der Gruppe der Verbindungen der Formeln IV und VI 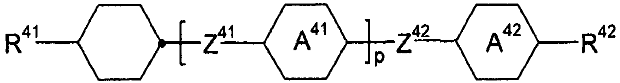 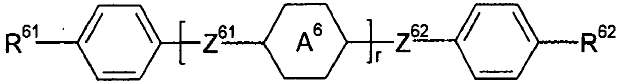 worin
   - R⁴¹ und R⁴²: unabhängig voneinander die unter Formel II für R² angegebene Bedeutung besitzen, 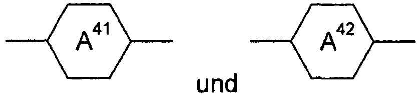 unabhängig voneinander und bei zweifachem Auftreten von 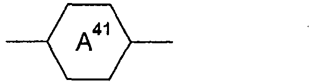 auch diese unabhängig voneinander 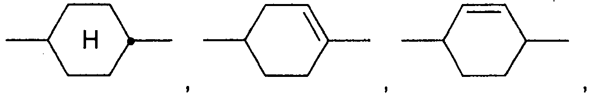 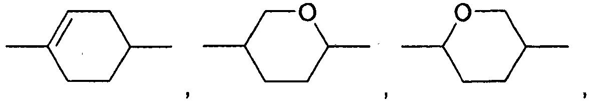 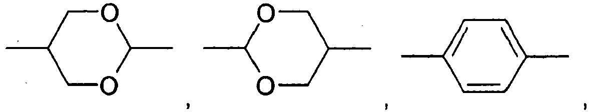 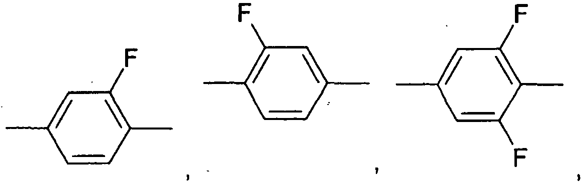 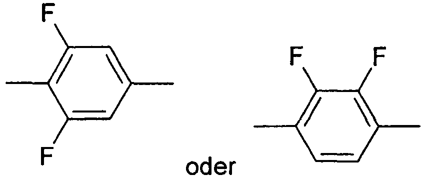 bedeuten,
   - Z⁴¹ und Z⁴²: unabhängig voneinander und bei zweifachem Auftreten von Z⁴¹ auch diese unabhängig voneinander -CH₂CH₂-, -COO-, *trans-* -CH=CH-, *trans-* -CF=CF-, -CH₂O-, -CF₂O- -C≡C- oder eine Einfachbindung bedeuten und
   - p: 0, 1 oder 2 bedeutet,
   - R⁶¹ und R⁶²: unabhängig voneinander die für R² angegebene Bedeutung besitzen, 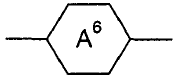 und bei zweifachem Auftreten bei jedem Auftreten unabhängig voneinander 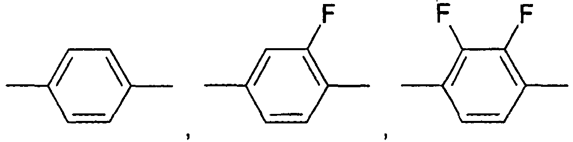 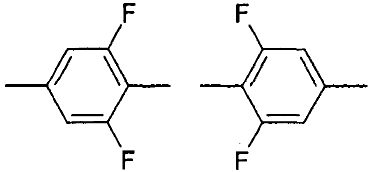 oder 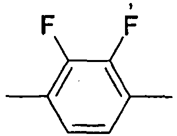 bedeuten,
   - Z⁶¹ und Z⁶²: unabhängig voneinander und bei zweifachem Auftreten von Z⁶¹ auch diese unabhängig voneinander -CH₂CH₂-, -COO-, *trans-* -CH=CH-, *trans-* -CF=CF-, -CH₂O-, -CF₂O- oder eine Einfachbindung bedeuten und
   - r: 0, 1 oder 2 bedeutet, enthält und
- eine nematische Phase und
- einen Klärpunkt von 55°C oder mehr aufweisen.

Die flüssigkristallinen Medien gemäß der vorliegenden Anmeldung enthalten bevorzugt eine oder mehrere mindestens monoreaktive, polymerisierbare Verbindung. In einer besonders bevorzugten Ausführungsform enthalten die flüssigkristallinen Medien eine oder mehrere direaktive, polymerisierbare Verbindung.

Optional können die flüssigkristallinen Medien gemäß der vorliegenden Anmeldung einen oder mehrere Polymerisationsinitiatoren, bevorzugt einen oder mehrere Photoinitiatoren, enthalten. Die Konzentration des Initiators bzw. die Gesamtkonzentration der Initiatoren in den Medien beträgt bevorzugt 0,001 % bis 1 %, bevorzugt 0.1 % bis 10 % bezogen auf die Gesamtkonzentration der polymerisierbaren Verbindungen.

Diese flüssigkristallinen Medien gemäß der vorliegenden Anmeldung weisen eine nematische Phase auf.

Ein weiterer Gegenstand der Erfindung ist ein flüssigkristallines Medium enthaltend eine erfindungsgemäße Flüssigkristallmischung wie vor- und nachstehend beschrieben, sowie eine oder mehrere polymerisierbare Verbindungen, vorzugsweise ausgewählt aus reaktiven Mesogenen.

Ein weiterer Gegenstand der Erfindung ist ein flüssigkristallines Medium enthaltend
- eine polymerisierbare Komponente (Komponente A), enthaltend eine oder mehrere polymerisierbare Verbindungen, vorzugsweise ausgewählt aus reaktiven Mesogenen, sowie
- eine (nichtpolymerisierbare) flüssigkristalline Komponente (Komponente B), im Folgenden auch als "Flüssigkristallhostmischung" oder "Hostmischung" bezeichnet, bestehend aus einer erfindungsgemäßen Flüssigkristallmischung enthaltend ≥ 5 % einer oder mehrerer Verbindungen der Formeln II und III wie vor- und nachstehend beschrieben.

Ein weiterer Gegenstand der Erfindung ist die Verwendung von erfindungsgemäßen Flüssigkristallmischungen und flüssigkristallinen Medien in PS- und PSA-Anzeigen, insbesondere die Verwendung in PS- und PSA-Anzeigen enthaltend ein flüssigkristallines Medium, zur Verbesserung der Schaltzeiten durch "in situ"-Polymerisation der polymerisierbare(n) Verbindung(en) in der PA- bzw. PSA-Anzeige, bevorzugt ohne Anlegen eines elektrischen und/oder magnetischen Feldes. Allerdings kann die Polymerisation der polymerisierbare(n) Verbindung(en) gegebenenfalls auch unter Anlegen eines elektrischen und/oder magnetischen Feldes, bevorzugt eines elektrischen Feldes, erfolgen. Die dabei angelegte Spannung sollte eher klein sein und insbesondere im Bereich zwischen 0 V und der Schwellenspannung (Vₜₕ) des verwendeten elektrooptischen Effektes liegen.

Ein weiterer Gegenstand der Erfindung ist eine Flüssigkristallanzeige enthaltend ein erfindungsgemäßes flüssigkristallines Medium, insbesondere eine PS- oder PSA-Anzeige, besonders bevorzugt eine PS-IPS-, PSA-IPS-, PS-FFS- oder PSA-FFS-Anzeige oder eine PS-Posi-VA- oder PSA-Posi-VA-Anzeige.

Ein weiterer Gegenstand der Erfindung ist eine Flüssigkristallanzeige des PS- oder PSA-Typs, enthaltend eine Flüssigkristallzelle bestehend aus zwei Substraten, wobei mindestens ein Substrat lichtdurchlässig ist und mindestens ein Substrat eine Elektrodenschicht aufweist, sowie einer zwischen den Substraten befindlichen Schicht eines flüssigkristallinen Mediums enthaltend eine polymerisierte Komponente und eine niedermolekulare Komponente, wobei die polymerisierte Komponente erhältlich ist durch Polymerisation einer oder mehrerer polymerisierbarer Verbindungen zwischen den Substraten der Flüssigkristallzelle im flüssigkristallinen Medium, bevorzugt unter Anlegen einer elektrischen Spannung, und wobei die niedermolekulare Komponente eine erfindungsgemäße Flüssigkristallmischung wie vor- und nachstehend beschrieben ist.

Ein weiterer Gegenstand der Erfindung ist eine Flüssigkristallanzeige, die ein erfindungsgemäßes Medium enthält, das durch Polymerisation der polymerisierbaren Verbindung(en) stabilisiert ist.

Vorzugsweise werden die Anzeigen gemäß der vorliegenden Erfindung durch eine Aktivmatrix (active matrix LCDs, kurz AMDs), bevorzugt durch eine Matrix aus Dünnschichttransistoren (TFTs), adressiert. Die erfindungsgemäßen Flüssigkristalle können jedoch in vorteilhafter Weise auch in Anzeigen mit anderen bekannten Adressierungsmitteln verwendet werden.

Ein weiterer Gegenstand der Erfindung ist ein Verfahren zur Herstellung eines erfindungsgemäßen flüssigkristallinen Mediums, indem man eine oder mehrere niedermolekulare flüssigkristalline Verbindungen, oder eine erfindungsgemäße Flüssigkristallmischung, mit einer oder mehreren polymerisierbaren Verbindungen, und gegebenenfalls mit weiteren flüssigkristallinen Verbindungen und/oder Additiven, mischt.

Ein weiterer Gegenstand der Erfindung ist ein Verfahren zur Herstellung einer erfindungsgemäßen Flüssigkristallanzeige, indem man eine erfindungsgemäße Flüssigkristallmischung mit einer oder mehreren polymerisierbaren Verbindungen, und gegebenenfalls mit weiteren flüssigkristallinen Verbindungen und/oder Additiven, mischt, die so erhaltene Mischung in eine Flüssigkristallzelle wie vor- und nachstehend beschrieben füllt, und die polymerisierbare(n) Verbindung(en), gegebenenfalls unter Anlegen einer elektrischen Spannung, bevorzugt im Bereich zwischen 0 V und Vₜₕ und besonders bevorzugt ohne Anlegen einer elektrischen Spannung, polymerisiert.

Ein weiterer Gegenstand der Erfindung ist ein Verfahren zur Herstellung einer Flüssigkristallanzeige bei dem ein erfindungsgemäßes Medium in der Anzeige durch Polymerisation der polymerisierbaren Verbindung(en), gegebenenfalls unter Anlegung einer Spannung, stabilisiert wird.

Vor- und nachstehend gelten folgende Bedeutungen:
Der Begriff "PSA" wird, falls nicht anders angegeben, stellvertretend für PS-Anzeigen und PSA-Anzeigen verwendet.
Die Begriffe "Tilt" und "Tiltwinkel" beziehen sich auf eine gekippte oder geneigte Orientierung der Moleküle eines flüssigkristallinen Mediums relativ zu den Oberflächen der Zelle in einer Flüssigkristallanzeige (hier vorzugsweise einer PS- oder PSA-Anzeige). Der Tiltwinkel bezeichnet dabei den durchschnittlichen Winkel zwischen den Moleküllängsachsen der Flüssigkristallmoleküle (dem Flüssigkristalldirektor) und der Oberfläche der planparallelen Trägerplatten, welche die Flüssigkristallzelle bilden.
Der Begriff "mesogene Gruppe" ist dem Fachmann bekannt und in der Literatur beschrieben, und bedeutet eine Gruppe, die durch die Anisotropie ihrer anziehenden und abstoßenden Wechselwirkungen wesentlich dazu beiträgt, in niedermolekularen oder polymeren Substanzen eine flüssigkristalline (FK) Phase hervorzurufen. Verbindungen enthaltend mesogene Gruppen (mesogene Verbindungen) müssen nicht unbedingt selbst eine flüssigkristalline Phase aufweisen. Es ist auch möglich, dass mesogene Verbindungen flüssigkristallines Phasenverhalten nur nach Vermischung mit anderen Verbindungen und/oder nach Polymerisation zeigen. Typische mesogene Gruppen sind beispielsweise starre stäbchen- oder scheibchenförmige Einheiten. Ein Überblick über die im Zusammenhang mit mesogenen bzw. flüssigkristalline Verbindungen verwendeten Begriffe und Definitionen findet sich in Pure Appl. Chem. 73(5), 888 (2001) und C. Tschierske, G. Pelzl, S. Diele, Angew. Chem. 2004, 116, 6340-6368.
Der Begriff "Abstandsgruppe" (Englisch "spacer group" oder kurz "spacer"), vor- und nachstehend auch als "Sp"" bezeichnet, ist dem Fachmann bekannt und in der Literatur beschrieben, siehe beispielsweise Pure Appl. Chem. 73(5), 888 (2001) und C. Tschierske, G. Pelzl, S. Diele, Angew. Chem. 2004, 116, 6340-6368. Falls nicht anders angegeben, bezeichnet der Begriff "Abstandsgruppe" bzw. "Spacer" vor- und nachstehend eine flexible Gruppe, die in einer polymerisierbaren mesogenen Verbindung die mesogene Gruppe und die polymerisierbare(n) Gruppe(n) miteinander verbindet.
Der Begriff "reaktives Mesogen" oder "RM" bezeichnet eine Verbindung enthaltend eine mesogene Gruppe und eine oder mehrere funktionelle Gruppen, die zur Polymerisation geeignet sind (auch als polymerisierbare Gruppe oder Gruppe "P" bezeichnet).
Die Begriffe "niedermolekulare Verbindung" und "unpolymerisierbare Verbindung" bezeichnen, üblicherweise monomere Verbindungen, die keine funktionelle Gruppe aufweisen, welche zur Polymerisation unter den üblichen dem Fachmann bekannten Bedingungen, insbesondere unter den zur Polymerisation der RMs verwendeten Bedingungen, geeignet ist. "Unpolymerisierbar" bedeutet, dass die Verbindungen gegenüber einer Polymerisationsreaktion, zumindest unter den zur Polymerisation der polymerisierbaren Verbindungen verwendeten Bedingungen, stabil bzw. unreaktiv sind.
Für die Zwecke dieser Erfindung soll der Begriff "flüssigkristallines Medium" ein Medium bezeichnen, welches eine Flüssigkristallmischung sowie eine oder mehrere polymerisierbare Verbindungen (wie beispielsweise reaktive Mesogene) enthält. Der Begriff "Flüssigkristallmischung" oder "Host-Mischung") soll eine flüssigkristalline Mischung bezeichnen, welche ausschließlich aus unpolymerisierbaren, niedermolekularen Verbindungen besteht, vorzugsweise aus zwei oder mehr flüssigkristallinen Verbindungen und ggf. weiteren Additiven wie zum Beispiel chiralen Dotierstoffen oder Stabilisatoren.

Erfindungsgemäß sind Flüssigkristallmischungen und flüssigkristalline Medien, die eine nematische Phase aufweisen, insbesondere bei Raumtemperatur.

Die erfindungsgemäßen Flüssigkristallmischungen und flüssigkristallinen Medien können auch weitere, dem Fachmann bekannte und in der Literatur beschriebene Zusätze oder Additive enthalten, wie beispielsweise Polymerisationsinitiatoren, Inhibitoren, Stabilisatoren, oberflächenaktive Substanzen oder chirale Dotierstoffe. Diese können polymerisierbar oder unpolymerisierbar sein. Polymerisierbare Additive werden dementsprechend der polymerisierbaren Komponente zugerechnet. Unpolymerisierbare Additive werden dementsprechend der Flüssigkristallmischung (Hostmischung) bzw. der unpolymerisierbaren Komponente zugerechnet.

Zur Herstellung von PSA-Anzeigen werden die polymerisierbaren Verbindungen im flüssigkristallinen Medium zwischen den Substraten der Flüssigkristallanzeige gegebenenfalls unter Anlegen einer Spannung, bevorzugt im Bereich von 0 V bis Vₜₕ, besonders bevorzugt jedoch ohne Anlegen einer Spannung, durch "in-situ"-Polymerisation polymerisiert oder vernetzt (falls eine Verbindung zwei oder mehr polymerisierbare Gruppen enthält). Die Polymerisation kann in einem Schritt durchgeführt werden. Es ist auch möglich, zunächst in einem ersten Schritt die Polymerisation unter Anlegen einer Spannung durchzuführen, um eine Stabilisierung der Orientierung zu erzeugen, und anschließend in einem zweiten Polymerisationsschritt ohne anliegende Spannung die im ersten Schritt nicht abreagierten Verbindungen zu polymerisieren bzw. zu vernetzen ("end curing").

Geeignete und bevorzugte Polymerisationsmethoden sind beispielsweise die thermische oder Photopolymerisation, vorzugsweise Photopolymerisation, insbesondere UV-Photopolymerisation. Dabei können gegebenenfalls auch ein oder mehrere initiatoren zugesetzt werden. Geeignete Bedingungen für die Polymerisation, sowie geeignete Arten und Mengen der Initiatoren, sind dem Fachmann bekannt und in der Literatur beschrieben. Für die radikalische Polymerisation eignen sich zum Beispiel die kommerziell erhältlichen Photoinitiatoren Irgacure651^{®}, Irgacure184^{®}, Irgacure907^{®}, Irgacure369^{®} oder Darocure1173^{®} (alle Ciba AG). Falls ein Initiator eingesetzt wird, beträgt dessen Anteil vorzugsweise 0,001 bis 5 %, besonders bevorzugt 0,001 bis 1 % bezogen auf die Gesamtmischung. Die Polymerisation kann aber auch ohne Zusatz eines Initiators erfolgen. In einer weiteren bevorzugten Ausführungsform enthält das flüssigkristalline Medium keinen Polymerisationsinitiator.

Die polymerisierbare Komponente (Komponente A) oder das flüssigkristalline Medium (Komponente B) können auch einen oder mehrere Stabilisatoren enthalten, um eine unerwünschte spontane Polymerisation der RMs, beispielsweise während der Lagerung oder des Transports, zu verhindern. Geeignete Arten und Mengen der Stabilisatoren sind dem Fachmann bekannt und in der Literatur beschrieben. Besonders geeignet sind zum Beispiel die kommerziell erhältlichen Stabilisatoren der Serie Irganox^{®} (Ciba AG), wie beispielsweise Irganox^{®} 1076 (ebenfalls Ciba AG). Falls Stabilisatoren eingesetzt werden, beträgt deren Anteil, bezogen auf die Gesamtmenge der RMs beziehungsweise der polymerisierbaren Komponente A), vorzugsweise 10 bis 10.000 ppm, besonders bevorzugt 50 bis 500 ppm.

Die polymerisierbaren Verbindungen eignen sich auch für die Polymerisation ohne Initiator, was erhebliche Vorteile mit sich bringt, wie beispielsweise geringere Materialkosten und insbesondere eine geringere Verunreinigung des flüssigkristallinen Mediums durch mögliche Restmengen des Initiators oder dessen Abbauprodukte.

Die erfindungsgemäßen flüssigkristallinen Medien zur Verwendung in PSA-Anzeigen enthalten vorzugsweise ≤ 5 %, besonders bevorzugte ≤ 3, und vorzugsweise ≥ 0,01 %, besonders bevorzugt ≥ 0,1 %, an polymerisierbaren Verbindungen, insbesondere polymerisierbaren Verbindungen der vor- und nachstehend genannten Formeln.

Besonders bevorzugt sind flüssigkristalline Medien enthaltend eine, zwei oder drei polymerisierbare Verbindungen.

Ferner bevorzugt sind achirale, polymerisierbare Verbindungen, sowie flüssigkristalline Medien worin die Verbindungen der Komponente A) und/oder B) ausschließlich aus der Gruppe bestehend aus achiralen Verbindungen ausgewählt sind.

Ferner bevorzugt sind flüssigkristalline Medien, worin die polymerisierbare Komponente bzw. Komponente A) eine oder mehrere polymerisierbare Verbindungen mit einer polymerisierbaren Gruppe (monoreaktiv) und eine oder mehrere polymerisierbare Verbindungen mit zwei oder mehr, vorzugsweise zwei polymerisierbaren Gruppen (di- oder multireaktiv) enthält.

Ferner bevorzugt sind PSA-Anzeigen und flüssigkristalline Medien, worin die polymerisierbare Komponente (bzw. Komponente A) ausschließlich polymerisierbare Verbindungen mit zwei polymerisierbaren Gruppen (direaktiv) enthält.

Die polymerisierbaren Verbindungen können einzeln den Flüssigkristallmischungen zugesetzt werden, es können aber auch Mischungen enthaltend zwei oder mehr erfindungsgemäß einzusetzende polymerisierbare Verbindungen verwendet werden. Bei Polymerisation solcher Mischungen entstehen Copolymere. Die vor- und nachstehend genannten polymerisierbaren Mischungen sind ein weiterer Gegenstand der Erfindung. Die polymerisierbaren Verbindungen können mesogen oder nicht-mesogen sein. Besonders bevorzugt sind polymerisierbare mesogene Verbindungen, auch als reaktive Mesogene (RMs) bezeichnet.

Geeignete und bevorzugte RMs für die Verwendung in erfindungsgemäßen flüssigkristallinen Medien und PSA-Anzeigen sind nachfolgend beschrieben.

In einer bevorzugten Ausführungsform der Erfindung sind die polymerisierbaren Verbindungen ausgewählt aus Formel I

R^{a}-A¹-(Z¹-A²)ₘ₁-R^{b} I

worin die einzelnen Reste folgende Bedeutung haben
- R^{a} und R^{b}: jeweils unabhängig voneinander P, P-Sp-, H, Halogen, SF₅, NO₂, eine Alkyl-, Alkenyl- oder Alkinylgruppe, wobei bevorzugt mindestens einer der Reste R^{a} und R^{b} eine Gruppe P oder P-Sp- bedeutet oder enthält,
- P: bei jedem Erscheinen unabhängig voneinander eine polymerisierbare Gruppe,
- Sp: bei jedem Erscheinen unabhängig voneinander eine Abstandsgruppe oder eine Einfachbindung,
- A¹ und A²: jeweils unabhängig voneinander und auch A² bei jedem Erscheinen unabhängig voneinander eine aromatische, heteroaromatische, alicyclische oder heterocyclische Gruppe, vorzugsweise mit 4 bis 25 Ringatomen, bevorzugt C-Atomen, welche auch anellierte Ringe umfasst oder enthalten kann, und die optional ein- oder mehrfach durch L substituiert sein kann,
- L: P, P-Sp-, OH, CH₂OH, F, Cl, Br, I, -CN, -NO₂, -NCO, -NCS, -OCN, -SCN, -C(=O)N(R^{x})₂, -C(=O)Y¹ -C(=O)R^{x}, -N(R^{x})₂, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonlyoxy oder Alkoxycarbonyloxy mit 1 bis 25 C-Atomen, worin auch ein oder mehrere H-Atome durch F, Cl, P oder P-Sp- ersetzt sein können, bevorzugt P, P-Sp-, H, OH, CH₂OH, Halogen, SF₅, NO₂, eine Alkyl-, Alkenyl- oder Alkinylgruppe,
- Z¹: bei jedem Erscheinen unabhängig voneinander -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-, -COO-, -OCO-CH=CH-, CR⁰R⁰⁰ oder eine Einfachbindung,
- R⁰ und R⁰⁰: jeweils unabhängig voneinander H oder Alkyl mit 1 bis 12 C-Atomen,
- R^{x}: P, P-Sp-, H, Halogen, geradkettiges, verzweigtes oder cyclisches Alkyl mit 1 bis 25 C-Atomen, worin auch eine oder mehrere nicht benachbarte CH₂-Gruppen durch -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, P oder P-Sp- ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen,
- m1: 0, 1, 2, 3 oder 4 und
- n1: 1, 2, 3 oder 4,
wobei mindestens einer, bevorzugt einer, zwei oder drei, besonders bevorzugt einer oder zwei, aus der Gruppe R^{a}, R^{b} und der vorhandenen Substituenten L eine Gruppe P oder P-Sp- bedeutet oder mindestens eine Gruppe P oder P-Sp- enthält.

Besonders bevorzugte Verbindungen der Formel I sind solche, worin
- R^{a} und R^{b}: jeweils unabhängig voneinander P, P-Sp-, H, F, Cl, Br, I, -CN, -NO₂, -NCO, -NCS, -OCN, -SCN, SF₅ oder geradkettiges oder verzweigtes Alkyl mit 1 bis 25 C-Atomen, worin auch eine oder mehrere nicht benachbarte CH₂-Gruppen jeweils unabhängig voneinander durch -C(R⁰)=C(R⁰⁰)-, -C≡C-, -N(R⁰⁰)-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, Br, I, CN, P oder P-Sp- ersetzt sein können, wobei bevorzugt mindestens einer der Reste R^{a} und R^{b} eine Gruppe P oder P-Sp- bedeutet oder enthält
- A¹ und A²: jeweils unabhängig voneinander 1,4-Phenylen, Naphthalin-1,4-diyl, Naphthalin-2,6-diyl, Phenanthren-2,7-diyl, Anthracen-2,7-diyl, Fluoren-2,7-diyl, Cumarin, Flavon, wobei in diesen Gruppen auch eine oder mehrere CH-Gruppen durch N ersetzt sein können, Cyclohexan-1,4-diyl, worin auch eine oder mehrere nicht-benachbarte CH₂-Gruppen durch O und/oder S ersetzt sein können, 1,4-Cyclohexenylen, Bicyclo[1.1.1]pentan-1,3-diyl, Bicyclo[2.2.2]octan-1,4-diyl, Spiro[3.3]heptan-2,6-diyl, Piperidin-1,4-diyl, Decahydronaphthalin-2,6-diyl, 1,2,3,4-Tetrahydronaphthalin-2,6-diyl, Indan-2,5-diyl oder Octahydro-4,7-methano-indan-2,5-diyl, wobei alle diese Gruppen unsubstituiert oder durch L ein- oder mehrfach substituiert sein können,
- L: P, P-Sp-, OH, CH₂OH, F, Cl, Br, I, -CN, -NO₂, -NCO, -NCS, - OCN, -SCN, -C(=O)N(R^{x})₂, -C(=O)Y¹, -C(=O)R^{x}, -N(R^{x})₂, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonlyoxy oder Alkoxycarbonyloxy mit 1 bis 25 C-Atomen, worin auch ein oder mehrere H-Atome durch F, Cl, P oder P-Sp- ersetzt sein können,
- P: eine polymerisierbare Gruppe,
- Y¹: Halogen und
- R^{x}: P, P-Sp-, H, Halogen, geradkettiges, verzweigtes oder cyclisches Alkyl mit 1 bis 25 C-Atomen, worin auch eine oder mehrere nicht benachbarte CH₂-Gruppen durch -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, P oder P-Sp- ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen,
bedeuten.

Ganz besonders bevorzugt sind Verbindungen der Formel I worin einer von R^{a} und R^{b} oder beide P oder P-Sp- bedeuten.

Bevorzugt enthalten die flüssigkristallinen Medien gemäß der vorliegenden Anmeldung insgesamt 0,5 bis 10 %, bevorzugt 1,0 bis 4,0 %, besonders bevorzugt 1,0 bis 2,0 %, an polymerisierbaren Verbindungen, bevorzugt der Formel I.

Besonders bevorzugte Verbindungen der Formel I sind aus folgenden Unterformeln (I1 bis I19) ausgewählt 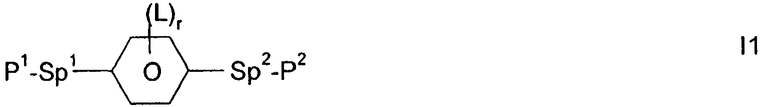 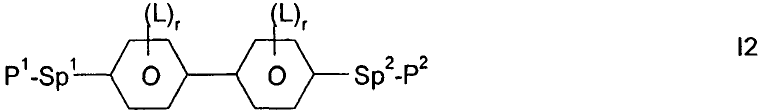 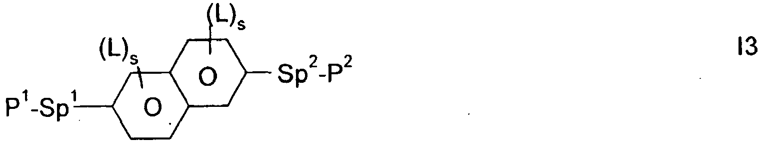 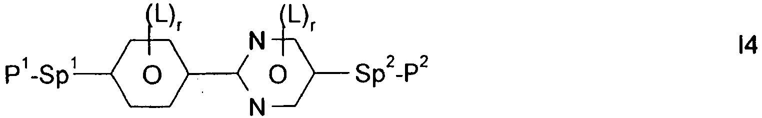 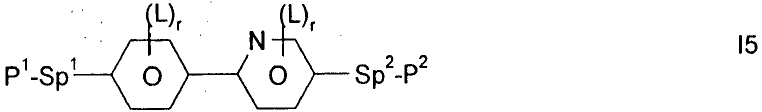 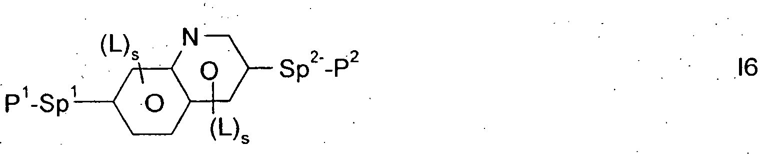 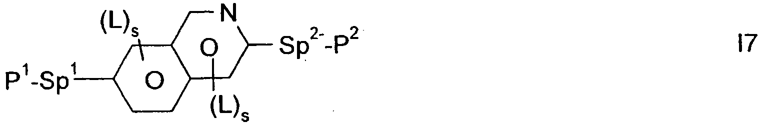 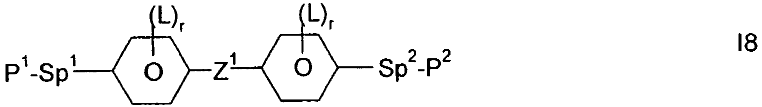 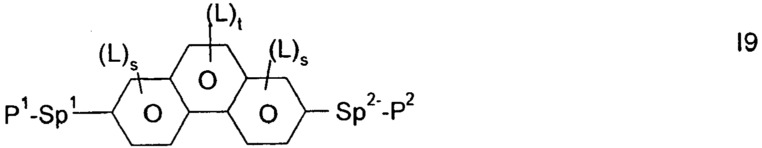 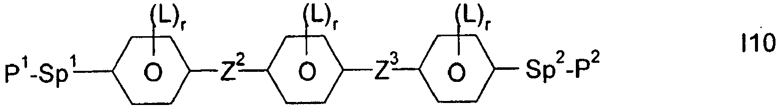 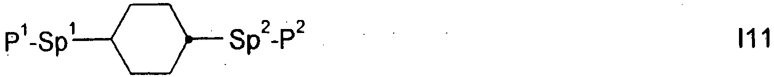 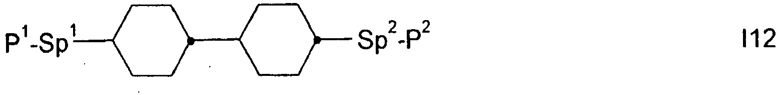 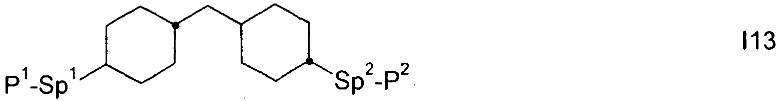 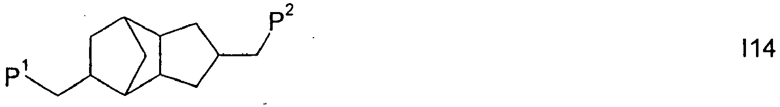 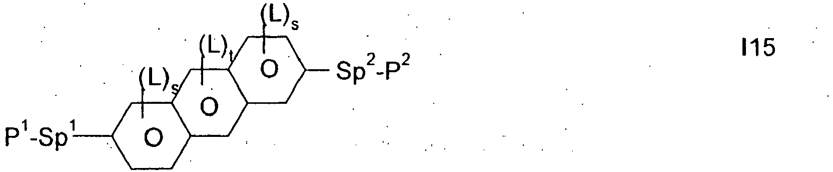 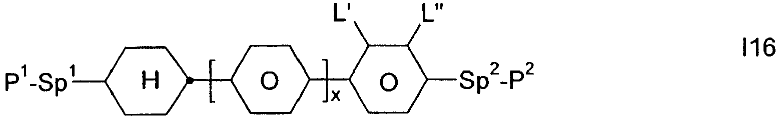 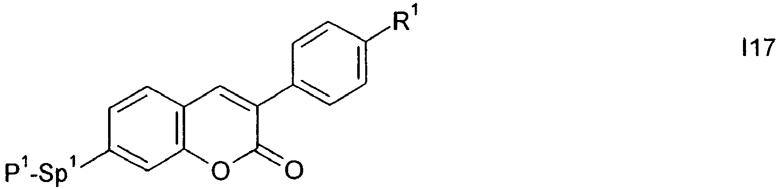 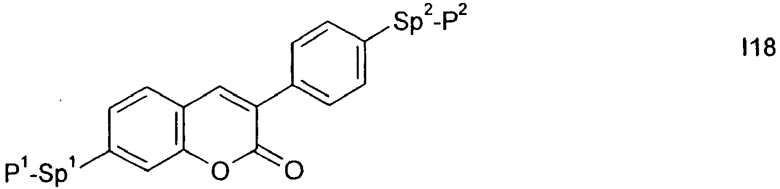 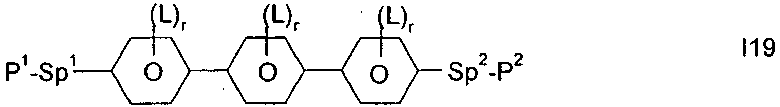 worin
- P¹ und P²: eine der für P angegebenen Bedeutungen besitzen und vorzugsweise Acrylat oder Methacrylat bedeuten,
- Sp¹ und Sp²: eine der für Sp angegebenen Bedeutungen besitzen oder eine Einfachbindung bedeuten,
- Z¹: -O-, -CO-, -C(R^{y}R²)-, oder -CF₂CF₂- bedeutet,
- Z² und Z³: jeweils unabhängig voneinander -COO-, -OCO-, -CH₂O-, -OCH₂-, -CF₂O-, -OCF₂-, oder -(CH₂)ₙ-, bedeuten, wobei n 2, 3 oder 4 ist,
bedeuten,
- L: die oben für Formel I angegebene Bedeutung besitzt,
- L' und L": jeweils unabhängig voneinander H, F oder Cl bedeuten,
- r: 0, 1, 2, 3 oder 4 bedeutet,
- s: 0, 1, 2 oder 3 bedeutet,
- t: 0, 1 oder 2 bedeutet,
- x: 0 oder 1 und
- R^{y} und R^{z}: jeweils unabhängig voneinander H, CH₃ oder CF₃, bevorzugt H oder CH₃, bedeuten.

In einer weiteren bevorzugten Ausführungsform der Erfindung sind die polymerisierbaren Verbindungen chirale oder optisch aktive Verbindungen ausgewählt aus Formel I* (chirale RMs):

(R^{c}-(A¹-Z¹)ₘ)ₖ-Q I*

worin A¹, Z¹ und m bei jedem Auftreten gleich oder verschieden eine der in Formel I angegebenen Bedeutungen besitzen,
- R^{c}: bei jedem Auftreten gleich oder verschieden eine der für R^{a} in Formel I* angegebenen Bedeutungen besitzt, wobei R^{c} chiral oder achiral sein kann,
- Q: eine chirale Gruppe mit k Valenzen bedeutet, welche optional ein- oder mehrfach mit L wie in Formel I definiert substituiert ist,
- k: 1, 2, 3, 4, 5 oder 6 ist,
wobei die Verbindungen mindestens einen Rest R^{c} oder L enthalten, der eine Gruppe P oder P-Sp- wie oben definiert bedeutet oder enthält.

Besonders bevorzugte Verbindungen der Formel I* enthalten eine monovalente Gruppe Q der Formel I*A 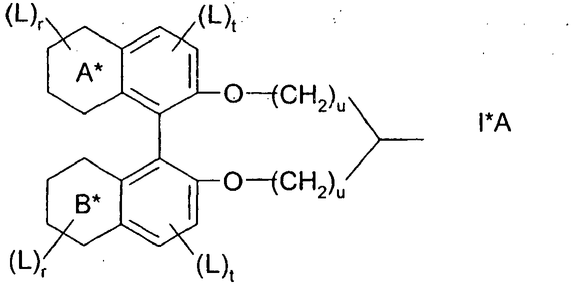 worin L und r bei jedem Auftreten gleich oder verschieden die oben angegebene Bedeutung besitzen,
- A* und B*: jeweils unabhängig voneinander anelliertes Benzol, Cyclohexan oder Cyclohexen,
- t: bei jedem Auftreten gleich oder verschieden 0, 1 oder 2, und
- u: bei jedem Auftreten gleich oder verschieden 0, 1 oder 2
bedeutet. Besonders bevorzugt sind Gruppen der Formel I*A, worin u 1 bedeutet.

Weitere bevorzugte Verbindungen der Formel I* enthalten eine monovalente Gruppe Q oder eine oder mehrere Gruppen R^{c} der Formel I*B 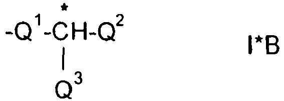 worin
- Q¹: Alkylen oder Alkylenoxy mit 1 bis 9 C-Atomen oder eine Einfachbindung,
- Q²: optional fluoriertes Alkyl oder Alkoxy mit 1 bis 10 C-Atomen, worin auch eine oder zwei nicht benachbarte CH₂-Gruppen durch -O-, -S-, -CH=CH-, -CO-, -OCO-, -COO-, -O-COO-, -S-CO-, -CO-S- oder -C≡C- so ersetzt sein können, dass O- und/oder S-Atome nicht direkt miteinander verknüpft sind,
- Q³: F, Cl, CN oder Alkyl oder Alkoxy wie für Q² definiert, aber von Q² verschieden
bedeuten.

Bevorzugte Gruppen der Formel I*B sind beispielsweise 2-butyl (=1-methylpropyl), 2-methylbutyl, 2-methylpentyl, 3-methylpentyl, 2-ethylhexyl, 2-propylpentyl, insbesondere 2-methylbutyl, 2-methylbutoxy, 2-methylpentoxy, 3-methylpentoxy, 2-ethylhexoxy, 1-methylhexoxy, 2-octyloxy, 2-oxa-3-methylbutyl, 3-oxa-4-methylpentyl, 4-methylhexyl, 2-hexyl, 2-octyl, 2-nonyl, 2-decyl, 2-dodecyl, 6-methoxyoctoxy, 6-methyloctoxy, 6-methyloctanoyloxy, 5-methylheptyloxycarbonyl, 2-methylbutyryloxy, 3-methylvaleroyloxy, 4-methylhexanoyloxy, 2-chlorpropionyloxy, 2-chloro-3-methylbutyryloxy, 2-chloro-4-methylvaleryloxy, 2-chloro-3-methylvaleryloxy, 2-methyl-3-oxapentyl, 2-methyl-3-oxahexyl, 1-methoxypropyl-2-oxy, 1-ethoxypropyl-2-oxy, 1-propoxypropyl-2-oxy, 1-butoxypropyl-2-oxy, 2-fluorooctyloxy, 2-fluorodecyloxy, 1,1,1-trifluoro-2-octyloxy, 1,1,1-trifluoro-2-octyl, 2-fluoromethyloctyloxy.

Weitere bevorzugte Verbindungen der Formel I* enthalten eine bivalente Gruppe Q der Formel I*C 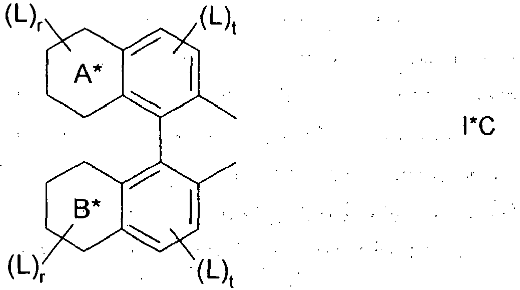 worin L, r, t, A* und B* die oben angegebene Bedeutung besitzen.

Weitere bevorzugte Verbindungen der Formel I* enthalten eine bivalente Gruppe Q ausgewählt aus folgenden Formeln 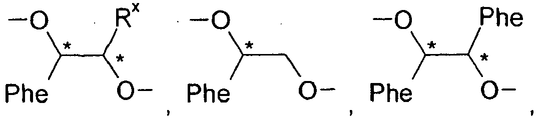 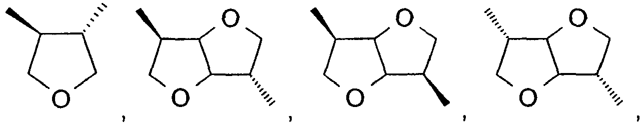 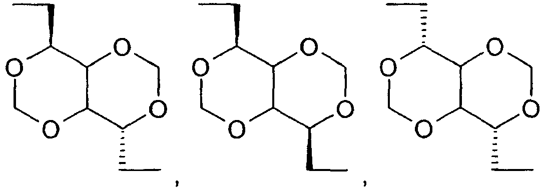 worin Phe Phenyl bedeutet, welches optional durch L ein- oder mehrfach substituiert ist, und R^{x} F oder optional fluoriertes Alkyl mit 1 bis 4 C-Atomen bedeutet.
Geeignete chirale RMs sind beispielsweise in GB 2 314 839 A, US 6,511,719, US 7,223,450, WO 02/34739 A1, US 7,041,345, US 7,060,331 oder US 7,318,950 beschrieben. Geeignete RMs mit Binaphthylgruppen sind beispielsweise in US 6,818,261, US 6,916,940, US 7,318,950 und US 7,223,450 beschrieben.

Die vor- und nachstehend gezeigten chiralen Strukturelemente, sowie polymerisierbare und polymerisierte Verbindungen enthaltend solche chiralen Strukturelemente, können in optisch aktiver Form, also als reine Enantiomere oder als beliebige Mischung beider Enantiomere, oder auch als Racemat eingesetzt werden. Bevorzugt ist die Verwendung von Racematen. Die Verwendung der Racemate besitzt gegenüber der Verwendung von reinen Enantiomeren einige Vorteile, wie beispielsweise ein deutlich geringerer Syntheseaufwand und geringere Materialkosten.

Besonders bevorzugte Verbindungen der Formel I* sind aus folgenden Unterformeln ausgewählt 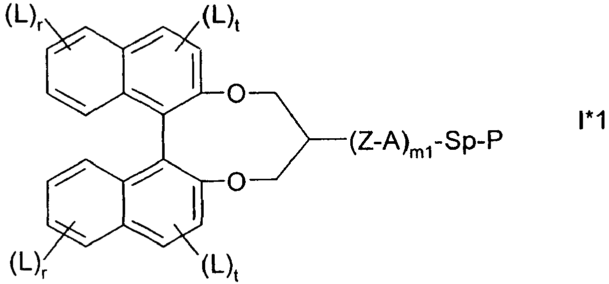 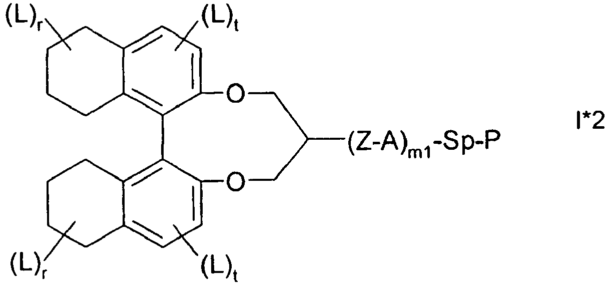 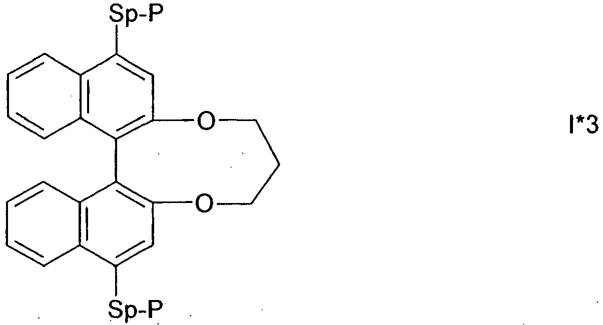 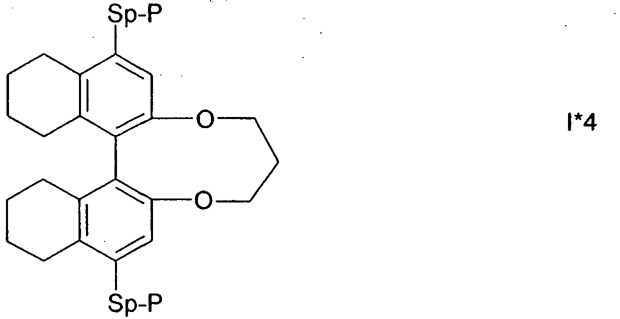 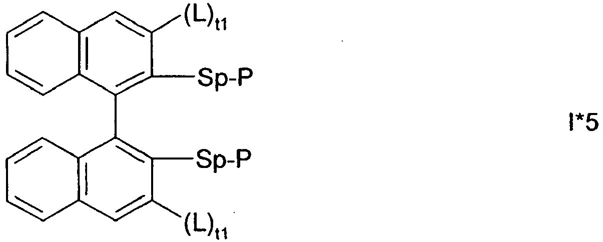 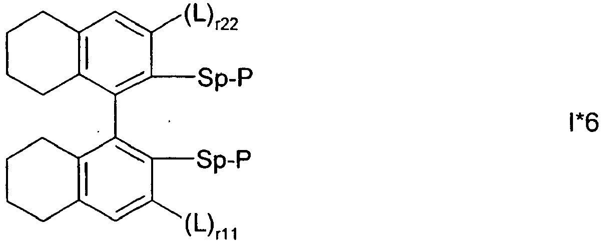 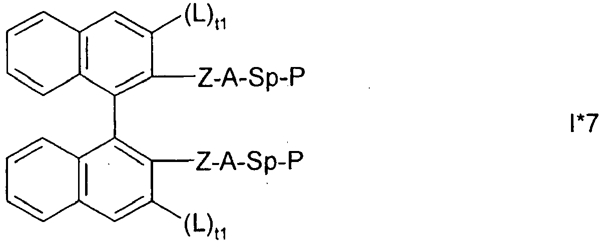 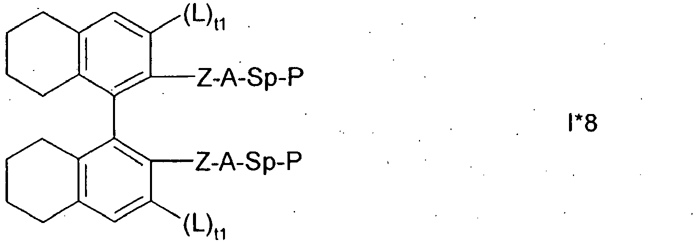 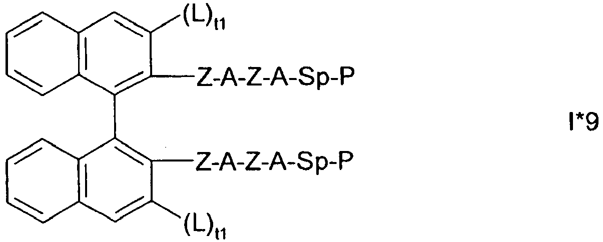 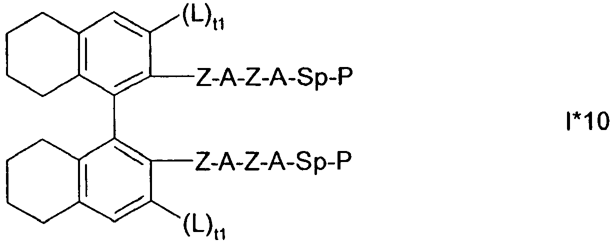 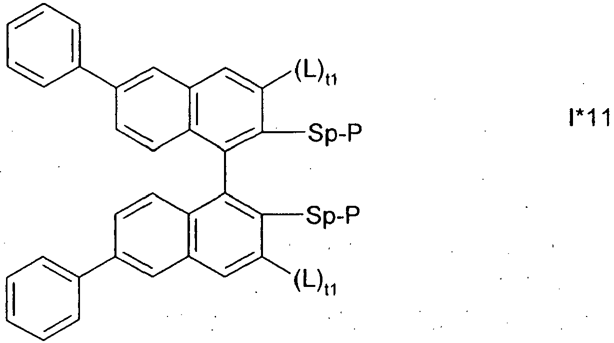 worin L, P, Sp, m, r und t die oben angegebene Bedeutung haben, Z bzw. A bei jedem Auftreten gleich oder verschieden eine der für Z¹ bzw. A¹ angegebenen Bedeutungen haben, und t1 bei jedem Auftreten gleich oder verschieden 0 oder 1 bedeutet.

Der Begriff "Kohlenstoffgruppe" bedeutet eine ein- oder mehrbindige organische Gruppe enthaltend mindestens ein Kohlenstoffatom, wobei diese entweder keine weiteren Atome enthält (wie z.B. -C≡C-), oder gegebenenfalls ein oder mehrere weitere Atome wie beispielsweise N, O, S, P, Si, Se, As, Te oder Ge enthält (z.B. Carbonyl etc.). Der Begriff "Kohlenwasserstoffgruppe" bedeutet eine Kohlenstoffgruppe, die zusätzlich ein oder mehrere H-Atome und gegebenenfalls ein oder mehrere Heteroatome wie beispielsweise N, O, S, P, Si, Se, As, Te oder Ge enthält.

"Halogen" bedeutet F, Cl, Br oder I, bevorzugt F oder Cl und besonders bevorzugt F.

Eine Kohlenstoff- oder Kohlenwasserstoffgruppe kann eine gesättigte oder ungesättigte Gruppe sein. Ungesättigte Gruppen sind beispielsweise Aryl-, Alkenyl- oder Alkinylgruppen. Ein Kohlenstoff- oder Kohlenwasserstoffrest mit mehr als 3 C-Atomen kann geradkettig, verzweigt und/oder cyclisch sein, und kann auch Spiroverküpfungen oder kondensierte Ringe aufweisen.

Die Begriffe "Alkyl", "Aryl", "Heteroaryl" etc. umfassen auch mehrbindige Gruppen, beispielsweise Alkylen, Arylen, Heteroarylen etc.

Der Begriff "Aryl"" bedeutet eine aromatische Kohlenstoffgruppe oder eine davon abgeleitete Gruppe. Der Begriff "Heteroaryl" bedeutet "Ary"" gemäß vorstehender Definition, enthaltend ein oder mehrere Heteroatome.

Bevorzugte Kohlenstoff- und Kohlenwasserstoffgruppen sind gegebenenfalls substituiertes Alkyl, Alkenyl, Alkinyl, Alkoxy, Adkylcarbonyl, Alkoxycarbonyl, Alkylcarbonyloxy und Alkoxycarbonyloxy mit 1 bis 40, vorzugsweise 1 bis 25, besonders bevorzugt 1 bis 18 C-Atomen, gegebenenfalls substituiertes Aryl oder Aryloxy mit 6 bis 40, vorzugsweise 6 bis 25 C-Atomen, oder gegebenenfalls substituiertes Alkylaryl, Arylalkyl, Alkylaryloxy, Arylalkyloxy, Arylcarbonyl, Aryloxycarbonyl, Arylcarbonyloxy und Aryloxycarbonyloxy mit 6 bis 40, vorzugsweise 6 bis 25 C-Atomen.

Weitere bevorzugte Kohlenstoff- und Kohlenwasserstoffgruppen sind C₁-C₄₀ Alkyl, C₂-C₄₀ Alkenyl, C₂-C₄₀ Alkinyl, C₃-C₄₀ Allyl, C₄-C₄₀ Alkyldienyl, C₄-C₄₀ Polyenyl, C₆-C₄₀ Aryl, C₆-C₄₀ Alkylaryl, C₆-C₄₀ Arylalkyl, C₆-C₄₀ Alkylaryloxy, C₆-C₄₀ Arylalkyloxy, C₂-C₄₀ Heteroaryl, C₄-C₄₀ Cycloalkyl, C₄-C₄₀ Cycloalkenyl, etc. Besonders bevorzugt sind C₁-C₂₂ Alkyl, C₂-C₂₂ Alkenyl, C₂ -C₂₂ Alkinyl, C₃-C₂₂ Allyl, C₄-C₂₂ Alkyldienyl, C₆-C₁₂ Aryl, C₆-C₂₀ Arylalkyl und C₂-C₂₀ Heteroaryl.

Weitere bevorzugte Kohlenstoff- und Kohlenwasserstoffgruppen sind geradkettige, verzweigte oder cyclische Alkylreste mit 1 bis 40, vorzugsweise 1 bis 25 C-Atomen, welche unsubstituiert oder durch F, Cl, Br, I oder CN ein- oder mehrfach substituiert sind, und worin ein mehrere nicht benachbarte CH₂-Gruppen jeweils unabhängig voneinander durch - C(R^{x})=C(R^{x})-, -C≡C-, -N(R^{x})-, -O-, -S-, -CO-, -CO-O-, -O-CO-, -O-CO-O- so ersetzt sein können, dass O- und/oder S-Atome nicht direkt miteinander verknüpft sind.

R^{x} bedeutet vorzugsweise H, Halogen, eine geradkettige, verzweigte oder cyclische Alkylkette mit 1 bis 25 C-Atomen, in der auch ein oder mehrere nicht benachbarte C-Atome durch -O-, -S-, -CO-, -CO-O-, -O-CO-, -O-CO-O- ersetzt sein können, wobei auch ein oder mehrere H-Atome durch Fluor ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen.

Bevorzugte Alkylgruppen sind beispielsweise Methyl, Ethyl, n-Propyl, Isopropyl, n-Butyl, Isobutyl, s-Butyl, t-Butyl, 2-Methylbutyl, n-Pentyl, s-Pentyl, Cyclopentyl, n-Hexyl, Cyclohexyl, 2-Ethylhexyl, n-Heptyl, Cycloheptyl, n-Octyl, Cyclooctyl, n-Nonyl, n-Decyl, n-Undecyl, n-Dodecyl, Dodecanyl, Trifluoromethyl, Perfluoro-n-butyl, 2,2,2-Trifluoroethyl, Perfluorooctyl, Perfluorohexyl etc. Besonders bevorzugte Alkylgruppen sind beispielsweise Methyl, Ethyl, n-Propyl, Isopropyl, n-Butyl, Isobutyl, s-Butyl, t-Butyl, 2-Methylbutyl, n-Pentyl, s-Pentyl, n-Hexyl, 2-Ethylhexyl, n-Heptyl, n-Octyl, n-Nonyl, n-Decyl, n-Undecyl, n-Dodecyl.

Bevorzugte Alkenylgruppen sind beispielsweise Ethenyl, Propenyl, Butenyl, Pentenyl, Cyclopentenyl, Hexenyl, Cyclohexenyl, Heptenyl, Cycloheptenyl, Octenyl, Cyclooctenyl etc. Besonders bevorzugte Alkenylgruppen sind beispielsweise Ethenyl, Propenyl, Butenyl, Pentenyl, Hexenyl, Heptenyl, Octenyl.

Bevorzugte Alkinylgruppen sind beispielsweise Ethinyl, Propinyl, Butinyl, Pentinyl, Hexinyl, Octinyl etc.

Bevorzugte Alkoxygruppen sind beispielsweise Methoxy, Ethoxy, 2-Methoxyethoxy, n-Propoxy, i-Propoxy, n-Butoxy, i-Butoxy, s-Butoxy, t-Butoxy, 2-Methylbutoxy, n-Pentoxy, n-Hexoxy, n-Heptoxy, n-Octoxy, n-Nonoxy, n-Decoxy, n-Undecoxy, n-Dodecoxy, etc. Besonders bevorzugte Alkoxygruppen sind beispielsweise Methoxy, Ethoxy, 2-Methoxyethoxy, n-Propoxy, i-Propoxy, n-Butoxy, i-Butoxy, s-Butoxy und t-Butoxy.

Aryl- und Heteroarylgruppen können einkernig oder mehrkernig sein, d.h. sie können einen Ring (wie z.B. Phenyl) oder zwei oder mehr Ringe aufweisen, welche auch anelliert (wie z.B. Naphthyl) oder kovalent verknüpft sein können (wie z.B. Biphenyl), oder eine Kombination von anellierten und verknüpften Ringen beinhalten. Heteroarylgruppen enthalten ein oder mehrere Heteroatome, vorzugsweise ausgewählt aus O, N, S und Se.

Besonders bevorzugt sind ein-, zwei- oder dreikernige Arylgruppen mit 6 bis 25 C-Atomen sowie ein-, zwei- oder dreikernige Heteroarylgruppen mit 2 bis 25 C-Atomen, welche optional anellierte Ringe enthalten und optional substituiert sind. Ferner bevorzugt sind 5-, 6- oder 7-gliedrige Aryl- und Heteroarylgruppen, worin auch eine oder mehrere CH-Gruppen durch N, S oder O so ersetzt sein können, dass O-Atome und/oder S-Atome nicht direkt miteinander verknüpft sind.

Bevorzugte Arylgruppen sind beispielsweise Phenyl, Biphenyl, Terphenyl, [1,1':3',1"]Terphenyl-2'-yl, Naphthyl, Anthracen, Binaphthyl, Phenanthren, Pyren, Dihydropyren, Chrysen, Perylen, Tetracen, Pentacen, Benzpyren, Fluoren, Inden, Indenofluoren, Spirobifluoren, etc.

Bevorzugte Heteroarylgruppen sind beispielsweise 5-gliedrige Ringe wie Pyrrol, Pyrazol, Imidazol, 1,2,3-Triazol, 1,2,4-Triazol, Tetrazol, Furan, Thiophen, Selenophen, Oxazol, Isoxazol, 1,2-thiazol, 1,3-Thiazol, 1,2,3-Oxadiazol, 1,2,4-Oxadiazol, 1,2,5-Oxadiazol, 1,3,4-Oxadiazol, 1,2,3-Thiadiazol, 1,2,4-Thiadiazol, 1,2,5-Thiadiazol, 1,3,4-Thiadiazol, 6-gliedrige Ringe wie Pyridin, Pyridazin, Pyrimidin, Pyrazin, 1,3,5-Triazin, 1,2,4-Triazin, 1,2,3-Triazin, 1,2,4,5-Tetrazin, 1,2,3,4-Tetrazin, 1,2,3,5-Tetrazin, oder kondensierte Gruppen wie Indol, Isoindol, Indolizin, Indazol, Benzimidazol, Benzotriazol, Purin, Naphthimidazol, Phenanthrimidazol, Pyridimidazol, Pyrazinimidazol, Chinoxalinimidazol, Benzoxazol, Naphthoxazol, Anthroxazol, Phenanthroxazol, Isoxazol, Benzothiazol, Benzofuran, Isobenzofuran, Dibenzofuran, Chinolin, Isochinolin, Pteridin, Benzo-5,6-chinolin, Benzo-6,7-chinolin, Benzo-7,8-chinolin, Benzoisochinolin, Acridin, Phenothiazin, Phenoxazin, Benzopyridazin, Benzopyrimidin, Chinoxalin, Phenazin, Naphthyridin, Azacarbazol, Benzocarbolin, Phenanthridin, Phenanthrolin, Thieno[2,3b]thiophen, Thieno[3,2b]thiophen, Dithienothiophen, Isobenzothiophen, Dibenzothiophen, Benzothiadiazothiophen, oder Kombinationen dieser Gruppen. Die Heteroarylgruppen können auch mit Alkyl, Alkoxy, Thioalkyl, Fluor, Fluoralkyl oder weiteren Aryl- oder Heteroarylgruppen substituiert sein.

Die (nicht-aromatischen) alicyclischen und heterocyclischen Gruppen umfassen sowohl gesättigte Ringe, d.h. solche die ausschließlich Einfachbindungen enthalten, als auch teilweise ungesättigte Ringe, d.h. solche die auch Mehrfachbindungen enthalten können. Heterocyclische Ringe enthalten ein oder mehrere Heteroatome, vorzugsweise ausgewählt aus Si, O, N, S und Se.

Die (nicht-aromatischen) alicyclischen und heterocyclischen Gruppen können einkernig sein, d.h. nur einen Ring enthalten (wie z.B. Cyclohexan), oder mehrkernig sein, d.h. mehrere Ringe enthalten (wie z.B. Decahydronaphthalin oder Bicyclooctan). Besonders bevorzugt sind gesättigte Gruppen. Ferner bevorzugt sind ein-, zwei- oder dreikernige Gruppen mit 3 bis 25 C-Atomen, welche optional anellierte Ringe enthalten und optional substituiert sind. Ferner bevorzugt sind 5-, 6-, 7- oder 8-gliedrige carbocyclische Gruppen worin auch ein oder mehrere C-Atome durch Si ersetzt sein können und/oder eine oder mehrere CH-Gruppen durch N ersetzt sein können und/oder eine oder mehrere nicht-benachbarte CH₂-Gruppen durch -O- und/oder -S- ersetzt sein können.

Bevorzugte alicyclische und heterocyclische Gruppen sind beispielsweise 5-gliedrige Gruppen wie Cyclopentan, Tetrahydrofuran, Tetrahydrothiofuran, Pyrrolidin, 6-gliedrige Gruppen wie Cyclohexan, Silinan, Cyclohexen, Tetrahydropyran, Tetrahydrothiopyran, 1,3-Dioxan, 1,3-Dithian, Piperidin, 7- gliedrige Gruppen wie Cycloheptan, und anellierte Gruppen wie Tetrahydronaphthalin, Decahydronaphthalin, Indan, Bicyclo[1.1.1]pentan-1,3-diyl, Bicyclo[2.2.2]octan-1,4-diyl, Spiro[3.3]heptan-2,6-diyl, Octahydro-4,7-methano-indan-2,5-diyl.

Bevorzugte Substituenten sind beispielsweise löslichkeitsfördernde Gruppen wie Alkyl oder Alkoxy, elektronenziehende Gruppen wie Fluor, Nitro oder Nitril, oder Substituenten zur Erhöhung der Glastemperatur (Tg) im Polymer, insbesondere voluminöse Gruppen wie z.B. t-Butyl oder gegebenenfalls substituierte Arylgruppen.

Bevorzugte Substituenten, vor- und nachstehend auch als "L" bezeichnet, sind beispielsweise F, Cl, Br, I, -CN, -NO₂. -NCO, -NCS, -OCN, -SCN, - C(=O)N(R^{x})₂, -C(=O)Y¹, -C(=O)R^{x}, -N(R^{x})2, worin R^{x} die oben angegebene Bedeutung hat und Y¹ Halogen bedeutet, optional substituiertes Silyl oder Aryl mit 6 bis 40, vorzugsweise 6 bis 20 C Atomen, und geradkettiges oder verzweigtes Alkyl, Alkoxy, Alkylcarbonyl, Alkoxycarbonyl, Alkylcarbonyloxy oder Alkoxycarbonyloxy mit 1 bis 25 C-Atomen, worin ein oder mehrere H-Atome gegebenenfalls durch F oder Cl ersetzt sein können.

"Substituiertes Silyl oder Aryl" bedeutet vorzugsweise durch Halogen, -CN, R⁰, -OR⁰, -CO-R⁰, -CO-O-R⁰, -O-CO-R⁰ oder -O-CO-O-R⁰ substituiert, worin R⁰ die oben angegebene Bedeutung hat.

Besonders bevorzugte Substituenten L sind beispielsweise F, Cl, CN, NO₂, CH₃, C₂H₅, OCH₃, OC₂H₅, COCH₃, COC₂H₅, COOCH₃, COOC₂H₅, CF₃, OCF₃, OCHF₂, OC₂F₅, ferner Phenyl. 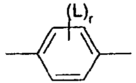 ist vorzugsweise 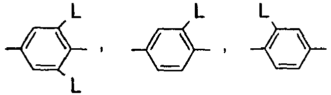 oder 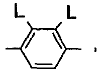 worin L eine der oben angegebenen Bedeutungen hat.

Die polymerisierbare Gruppe P ist eine Gruppe, die für eine Polymerisationsreaktion, wie beispielsweise die radikalische oder ionische Kettenpolymerisation, Polyaddition oder Polykondensation, oder für eine polymeranaloge Umsetzung, beispielsweise die Addition oder Kondensation an eine Polymerhauptkette, geeignet ist. Besonders bevorzugt sind Gruppen für die Kettenpolymerisation, insbesondere solche enthaltend eine C=C-Doppelbindung oder C≡C-Dreifachbindung, sowie zur Polymerisation unter Ringöffnung geeignete Gruppen wie beispielsweise Oxetan- oder Epoxygruppen

Bevorzugte Gruppen P sind ausgewählt aus CH₂=CW¹-COO-, CH₂=CW¹-CO-, 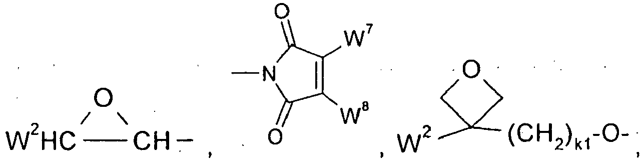 CH₂=CW²-(O)ₖ₃-, CW¹=CH-CO-(O)ₖ₃-, CW¹=CH-CO-NH-, CH₂=CW¹-CO-NH-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-,_{'} CH₂=CH-(CO)ₖ₁-Phe-(O)ₖ₂-, Phe-CH=CH-, HOOC-, OCN-, und W⁴W⁵W⁶Si-, worin W¹ H, F, Cl, CN, CF₃, Phenyl oder Alkyl mit **1** bis 5 C-Atomen, insbesondere H, F, Cl oder CH₃ bedeutet, W² und W³ jeweils unabhängig voneinander H oder Alkyl mit 1 bis 5 C-Atomen, insbesondere H, Methyl, Ethyl oder n-Propyl bedeuten, W⁴, W⁵ und W⁶ jeweils unabhängig voneinander Cl, Oxaalkyl oder Oxacarbonylalkyl mit 1 bis 5 C-Atomen bedeuten, W⁷ und W⁸ jeweils unabhängig voneinander H, Cl oder Alkyl mit 1 bis 5 C-Atomen bedeuten, Phe 1,4-Phenylen bedeutet, welches optional mit einen oder mehreren, von P-Sp- verschiedenen, Resten L wie oben definiert substituiert ist, k₁, k₂ und k₃ jeweils unabhängig voneinander 0 oder 1 bedeuten, k₃ vorzugsweise 1 bedeutet.

Besonders bevorzugte Gruppen P sind CH₂=CW¹-COO-, insbesondere CH₂=CH-COO-, CH₂=C(CH₃)-COO- und CH₂=CF-COO-, ferner CH₂=CH-O-, (CH₂=CH)₂CH-OCO-, (CH₂=CH)₂CH-O-, 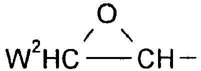 und

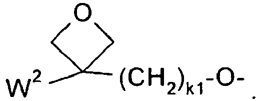

Ganz besonders bevorzugte Gruppen P sind Vinyloxy, Acrylat, Methacrylat, Fluoracrylat, Chloracrylat, Oxetan und Epoxy, insbesondere Acrylat und Methacrylat.

Bevorzugte Abstandsgruppen Sp sind ausgewählt aus der Formel Sp'-X', so dass der Rest P-Sp- der Formel P-Sp'-X'- entspricht, wobei
- Sp': Alkylen mit 1 bis 20, vorzugsweise 1 bis 12 C-Atomen bedeutet, welches optional durch F, Cl, Br, I oder CN ein- oder mehrfach substituiert ist, und worin auch eine oder mehrere nicht benachbarte CH₂-Gruppen jeweils unabhängig voneinander so durch -O-, -S-, -NH-, -NR⁰-, -SiR⁰⁰R⁰⁰⁰-, -CO-, -COO-, -OCO-, -OCO-O-, -S-CO-, -CO-S-, -NR⁰⁰-CO-O-, -O-CO-NR⁰⁰-, -NR⁰⁰-CO-NR⁰⁰-, -CH=CH- oder -C=C- ersetzt sein können, dass O- und/oder S-Atome nicht direkt miteinander verknüpft sind,
- X': -O-, -S-, -CO-, -COO-, -OCO-, -O-COO-, -CO-NR⁰⁰-, -NR⁰⁰-CO-, -NR⁰⁰-CO-NR⁰⁰-, -OCH₂-, -CH₂O-, -SCH₂-, -CH₂S-, -CF₂O-, -OCF₂-, -CF₂S-, -SCF₂-, -CF₂CH₂-, -CH₂CF₂-, -CF₂CF₂-, -CH=N-, -N=CH-, -N=N-, -CH=CR⁰-, -CY²=CY³-, -C≡C-, -CH=CH-COO-, -OCO-CH=CH- oder eine Einfachbindung bedeutet,
- R⁰⁰ und R⁰⁰⁰: jeweils unabhängig voneinander H oder Alkyl mit 1 bis 12 C-Atomen bedeuten, und
- Y² und Y³: jeweils unabhängig voneinander H, F, Cl oder CN bedeuten.
- X': ist vorzugsweise -O-, -S -CO-, -COO-, -OCO-, -O-COO-, -CO-NR⁰-,-NR⁰-CO-, -NR⁰-CO-NR⁰- oder eine Einfachbindung.

Typische Abstandsgruppen Sp' sind beispielsweise -(CH₂)ₚ₁-, -(CH₂CH₂O)_{q1}-CH₂CH₂-, -CH₂CH₂-S-CH₂CH₂-, -CH₂CH₂-NH-CH₂CH₂- oder -(SiR⁰⁰R⁰⁰⁰-O)ₚ₁- , worin p1 eine ganze Zahl von 1 bis 12 ist, q1 eine ganze Zahl von 1 bis 3 ist, und R⁰⁰ und R⁰⁰⁰ die oben angegebenen Bedeutungen besitzen.

Besonders bevorzugte Gruppen -X'-Sp'- sind -(CH₂)ₚ₁-, -O-(CH₂)ₚ₁-, -OCO-(CH₂)ₚ₁-, -OCOO-(CH₂)ₚ₁-.

Besonders bevorzugte Gruppen Sp' sind beispielsweise jeweils geradkettiges Ethylen, Propylen, Butylen, Pentylen, Hexylen, Heptylen, Octylen, Nonylen, Decylen, Undecylen, Dodecylen, Octadecylen, Ethylenoxyethylen, Methylenoxybutylen, Ethylenthioethylen, Ethylen-N-methyl-iminoethylen, 1-Methylalkylen, Ethenylen, Propenylen und Butenylen.

In einer weiteren bevorzugten Ausführungsform der Erfindung bedeutet P-Sp- einen Rest mit zwei oder mehreren polymerisierbaren Gruppen (multifunktionelle polymerisierbare Reste). Geeignete Reste dieses Typs, sowie diese enthaltende polymerisierbare Verbindungen und ihre Herstellung sind beispielsweise in US 7,060,200 B1 oder US 2006/0172090 A1 beschrieben. Besonders bevorzugt sind multifunktionelle polymerisierbare Reste P-Sp- ausgewählt aus folgenden Formeln

-X-alkyl-CHP¹-CH₂-CH₂P² Ia

-X-alkyl-C(CH₂P¹)(CH₂P²)-CH₂P³ Ib

-X-alkyl-CHP¹CHP²-CH₂P³ Ic

-X-alkyl-C(CH₂P¹)(CH₂P²)-CₐₐH₂ₐₐ₊₁ Id

-X-alkyl-CHP¹-CH₂P² Ie

-X-alkyl-CHP¹P² If

-X-alkyl-CP¹P²-CₐₐH₂ₐₐ₊₁ Ig

-X-alkyl-C(CH₂P¹)(CH₂P²)-CH₂OCH₂-C(CH₂P³)(CH₂P⁴)CH₂P⁵ Ih

-X-alkyl-CH((CH₂)ₐₐP¹)((CH₂)_{bb}P²) Ii

-X-alkyl-CHP¹CHP²-CₐₐH₂ₐₐ₊₁ Ik

-X'-alkyl-C(CH₃)(CH₂P¹)(CH₂P²) Im

worin
- alkyl: eine Einfachbindung oder geradkettiges oder verzweigtes Alkylen mit 1 bis 12 C-Atomen bedeutet, worin eine oder mehrere nicht benachbarte CH₂-Gruppen jeweils unabhängig voneinander durch -C(R⁰⁰)=C(R⁰⁰⁰)-, -C≡C-, -N(R⁰⁰)-, -O-, -S-, -CO-, -CO-O-,-O-CO-, -O-CO-O- so ersetzt sein können, dass O- und/oder S-Atome nicht direkt miteinander verknüpft sind, und worin auch ein oder mehrere H-Atome durch F, Cl oder CN ersetzt sein können, wobei R⁰⁰ und R⁰⁰⁰ die oben angegebene Bedeutung haben,
aa und bb jeweils unabhängig voneinander 0, 1, 2, 3, 4, 5 oder 6 bedeuten,
- X: eine der für X' angegebenen Bedeutungen besitzt, und
- P¹⁻⁵: jeweils unabhängig voneinander eine der für P angegebenen Bedeutungen besitzen.

Die polymerisierbaren Verbindungen und RMs können in Analogie zu dem Fachmann bekannten und in Standardwerken der organischen Chemie beschriebenen Verfahren, wie beispielsweise in Houben-Weyl, Methoden der organischen Chemie, Thieme-Verlag, Stuttgart, hergestellt werden. Weitere Syntheseverfahren finden sich in den vor- und nachstehend zitierten Dokumenten. Im einfachsten Fall erfolgt die Synthese solcher RMs zum Beispiel durch Veresterung oder Veretherung von 2,6-Dihydroxynaphthalin oder 4,4'-Dihydroxybiphenyl mit entsprechenden Säuren, Säurederivaten, oder halogenierten Verbindungen enthaltend eine Gruppe P, wie zum Beispiel (Meth)acrylsäurechlorid oder (Meth)acrylsäure, in Gegenwart von einem wasserentziehenden Reagens wie zum Beispiel DCC (Dicyclohexylcarbodiimid).

Die Herstellung der erfindungsgemäß verwendbaren flüssigkristallinen Medien erfolgt in an sich üblicher Weise, beispielsweise indem man eine oder mehrere der oben genannten Verbindungen mit einer oder mehreren polymerisierbaren Verbindungen wie oben definiert, und ggf. mit weiteren flüssigkristallinen Verbindungen und/oder Additiven mischt. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation. Das Verfahren zur Herstellung der erfindungsgemäßen flüssigkristallinen Medien ist ein weiterer Gegenstand der Erfindung.

Es versteht sich für den Fachmann von selbst, daß die erfindungsgemäßen flüssigkristallinen Medien auch Verbindungen enthalten können, worin beispielsweise H, N, O, Cl, F durch die entsprechenden Isotope ersetzt sind.

Der Aufbau der erfindungsgemäßen Flüssigkristallanzeigen entspricht der für PSA-Anzeigen üblichen Geometrie, wie er im eingangs zitierten Stand der Technik beschrieben ist. Es sind Geometrien ohne Protrusions bevorzugt, insbesondere diejenigen, bei denen darüber hinaus die Elektrode auf der Farbfilter-Seite unstrukturiert ist und lediglich die Elektrode auf der TFT-Seite Schlitze aufweist. Besonders geeignete und bevorzugte Elektrodenstrukturen für PS-VA-Anzeigen sind beispielsweise in US 2006/0066793 A1 beschrieben.

Die erfindungsgemäßen Flüssigkristallmischungen und flüssigkristallinen Medien eignen sich prinzipiell für jede Art von PS- oder PSA-Anzeige, insbesondere solche beruhend auf flüssigkristallinen Medien mit positiver dielektrischer Anisotropie, besonders bevorzugt für PSA-IPS- oder PSA-FFS-Anzeigen. Der Fachmann kann jedoch, ohne erfinderisches Zutun, geeignete erfindungsgemäße Flüssigkristallmischungen und flüssigkristalline Medien auch in anderen Anzeigen des PS- oder PSA-Typs einsetzen, die sich von den oben genannten Anzeigen beispielsweise durch ihren prinzipiellen Aufbau oder durch die Art, Anordnung oder Struktur der einzelnen verwendeten Komponenten, wie beispielsweise der Substrate, Orientierungsschichten, Elektroden, Ansteuerelemente, Hintergrundbeleuchtung, Polarisatoren, Farbfilter, ggf. vorhandenen Kompensationsfolien etc., unterscheiden.

Die einzelnen Verbindungen der Formeln II bis VIII werden in einer Konzentration von 1 bis 20 %, bevorzugt von 1 bis 15 % eingesetzt. Diese Grenzen gelten insbesondere wenn jeweils zwei oder mehr homologe Verbindungen, also Verbindungen der gleichen Formel, eingesetzt werden. Wird von den Verbindungen einer Formel nur eine einzelne Substanz, also nur ein Homologes, eingesetzt so kann dessen Konzentration im Bereich von 2 bis 20 % und bei einigen Verbindungen bis 30 % oder darüber liegen.

In einer bevorzugten Ausführungsform der vorliegenden Erfindung enthält das Flüssigkristallmedium eine oder mehrere Verbindungen der Formel II 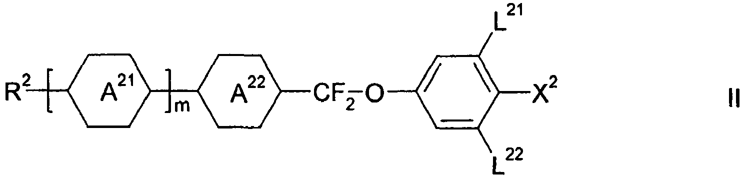 worin
- R2: Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeutet, 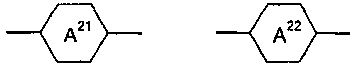 bei jedem Erscheinen unabhängig voneinander 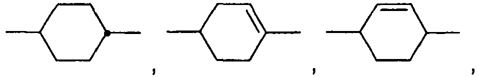 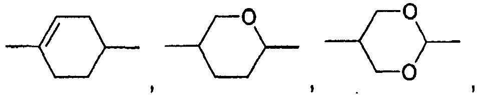 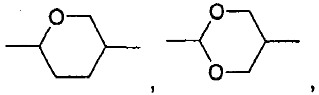 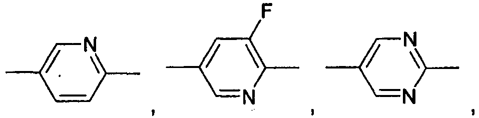 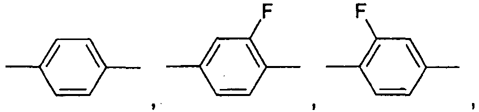 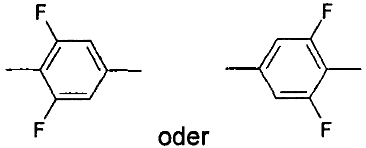 bedeuten
- L²¹ und L²²: unabhängig voneinander H oder F bedeuten,
- X²: Halogen, halogeniertes Alkyl oder Alkoxy mit 1 bis 3 C-Atomen oder halogeniertes Alkenyl oder Alkenyloxy mit 2 oder 3 C-Atomen bedeutet,
- m²: 0, 1, 2 oder 3 bedeutet,
enthält.

In einer bevorzugten Ausführungsform der vorliegenden Erfindung enthält das Flüssigkristallmedium eine oder mehrere dielektrisch positive Verbindungen mit einer dielektrischen Anisotropie von mehr als 3, ausgewählt aus der Gruppe der Verbindungen der Formeln II-1 bis II-4, bevorzugt der Formeln II-1 und/oder bis II-2 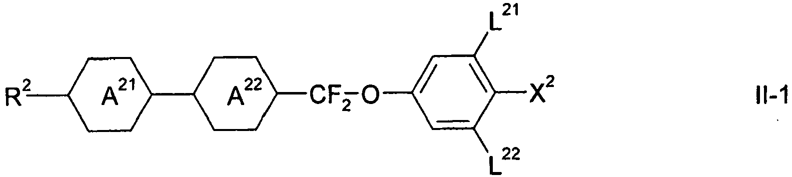 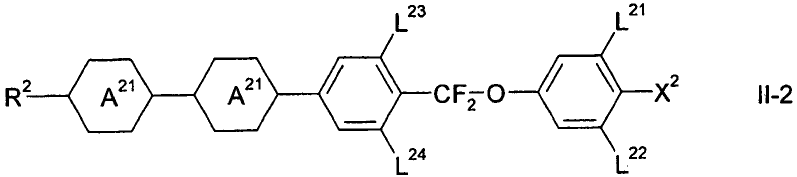 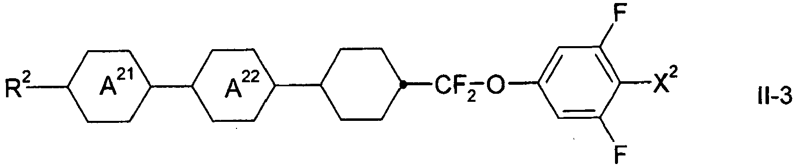 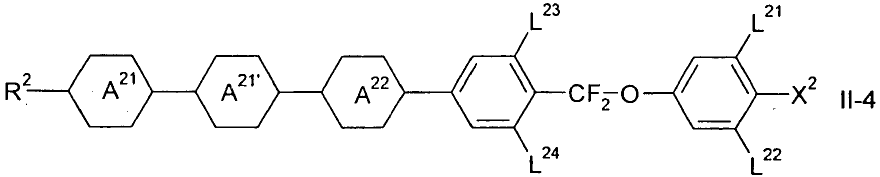 worin die Parameter die jeweiligen oben unter Formel II angegebenen Bedeutungen besitzen und L²³ und L²⁴ unabhängig voneinander H oder F, bevorzugt L²³ F, bedeutet und 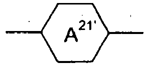 eine der bei 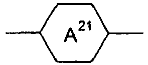 gegebenen Bedeutungen hat und bei Formeln II-1 und II-4 X² bevorzugt F oder OCF₃, besonders bevorzugt F, und bei Formel II-3 vorzugsweise 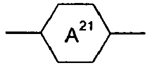 und 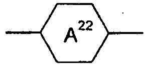 unabhängig voneinander 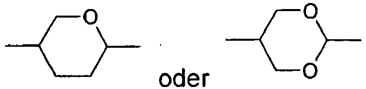 bedeuten,
und/oder ausgewählt aus der Gruppe der Verbindungen der Formeln III-1 und III-2: 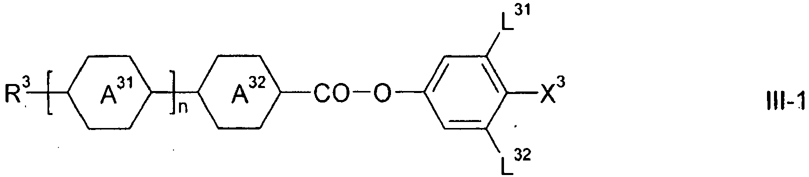 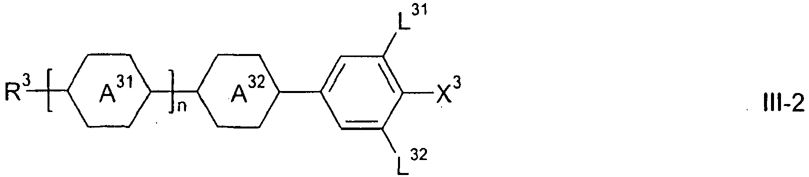 worin die Parameter die unter Formel III gegeben Bedeutung haben
und die Medien gemäß der vorliegenden Erfindung alternativ oder zusätzlich zu den Verbindungen der Formeln III-1 und/oder III-2 eine oder mehrere Verbindungen der Formel III-3 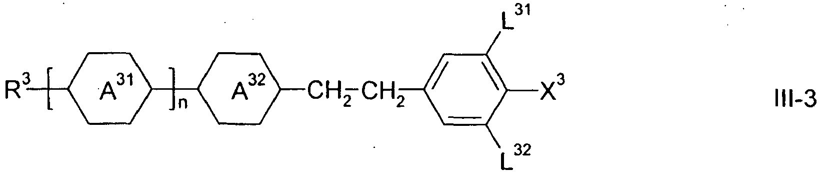 worin die Parameter die jeweiligen oben angegebenen Bedeutungen besitzen und die Parameter L³³ und L³⁴ unabhängig voneinander und von den anderen Parametern H oder F bedeuten enthalten können.

Vorzugsweise enthält das Flüssigkristallmedium Verbindungen, die ausgewählt sind aus der Gruppe der Verbindungen der Formeln II-1 bis II-4, worin L²¹ und L²² und/oder L²³ und L²⁴ beide F bedeuten.

In einer bevorzugten Ausführungsform enthält das Flüssigkristallmedium Verbindungen, die ausgewählt sind aus der Gruppe der Verbindungen der Formeln II-2 und II-3, worin L²¹, L²², L²³ und L²⁴ alle F bedeuten.

Vorzugsweise enthält das Flüssigkristallmedium eine oder mehrere Verbindungen der Formel II-1. Vorzugsweise sind die Verbindungen der Formel II-1 ausgewählt aus der Gruppe der Verbindungen der Formeln II-1a bis II-1e 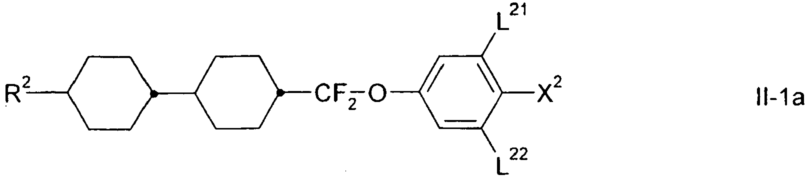 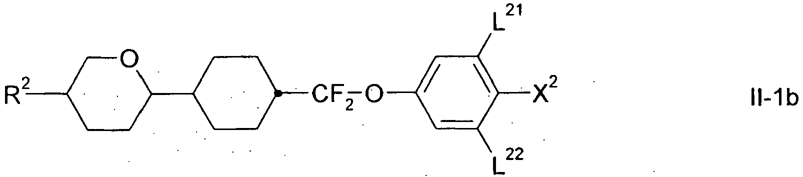 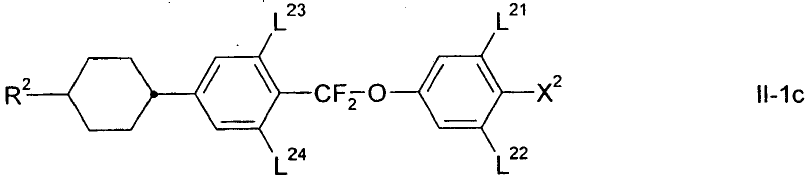 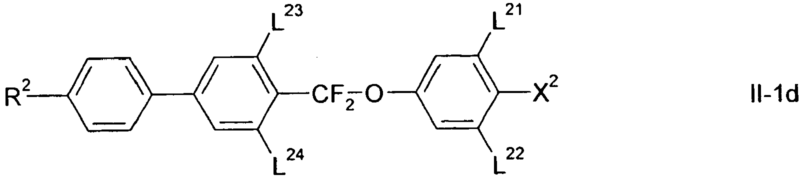 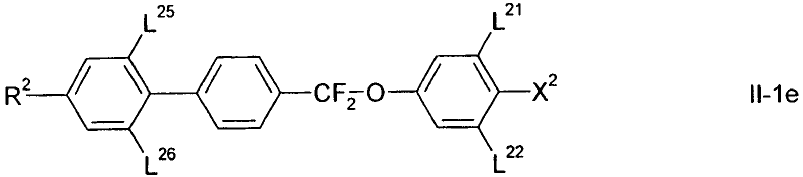 worin die Parameter die jeweiligen oben angegebenen Bedeutungen besitzen und L²⁵ und L²⁶ unabhängig voneinander und von den anderen Parametern H oder F bedeuten und vorzugsweise
in den Formeln II-1a und II-1b
L²¹ und L²² beide F bedeuten,
in den Formeln II-1c und II-1d
L²¹ und L²² beide F und/oder L²³ und L²⁴ beide F bedeuten und in Formel II-1e
L²¹ , L²² und L²³ F bedeuten.

Speziell bevorzugte Verbindungen der Formel II-1 sind 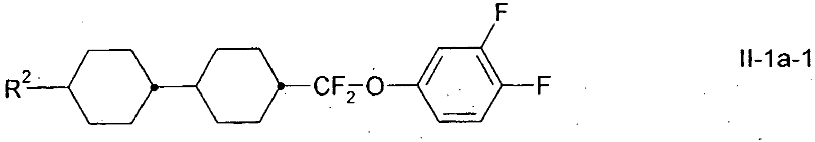 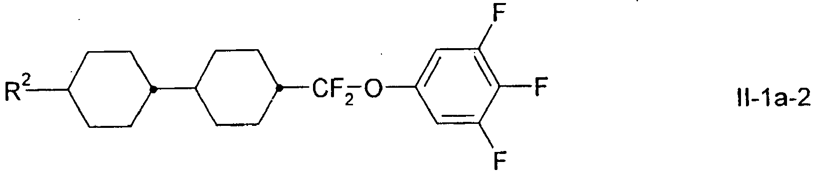 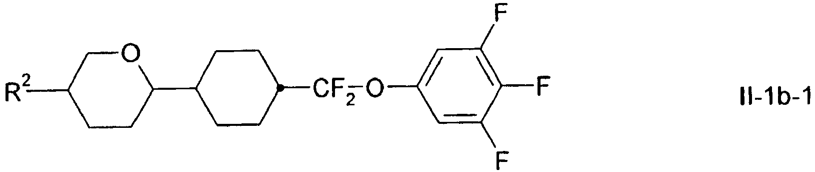 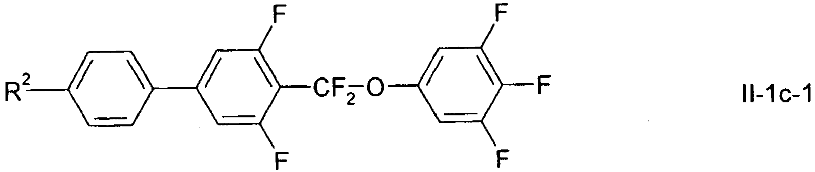 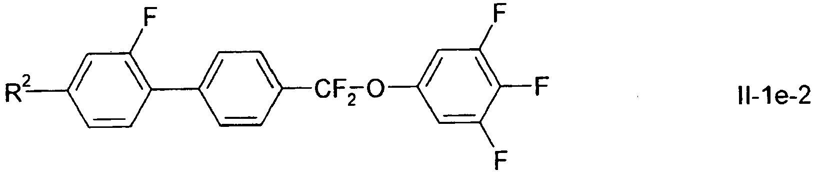 worin R² die oben angegebene Bedeutung besitzt.

Vorzugsweise enthält das Flüssigkristallmedium eine oder mehrere Verbindungen der Formel II-2, die bevorzugt ausgewählt sind aus der Gruppe der Verbindungen der Formeln II-2a bis II-2j 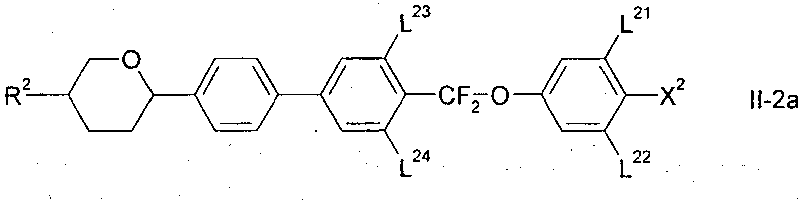 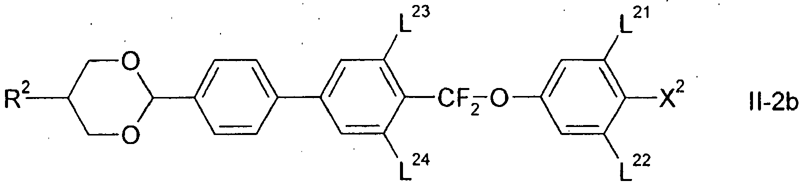 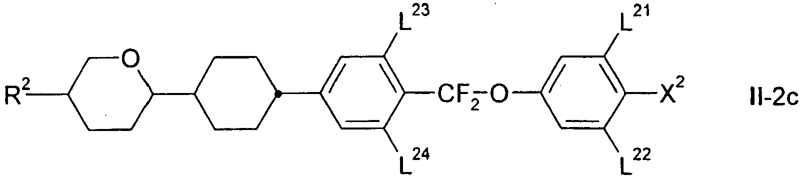 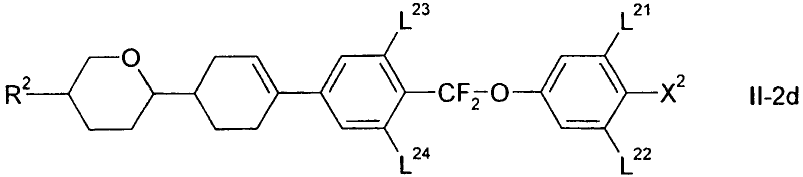 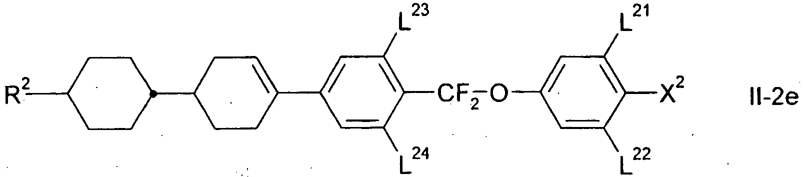 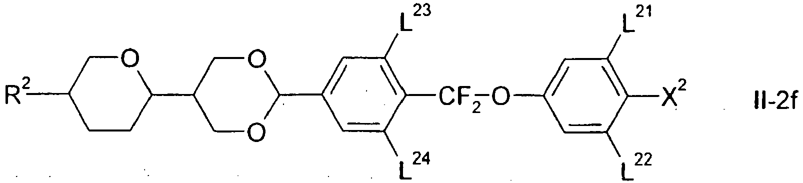 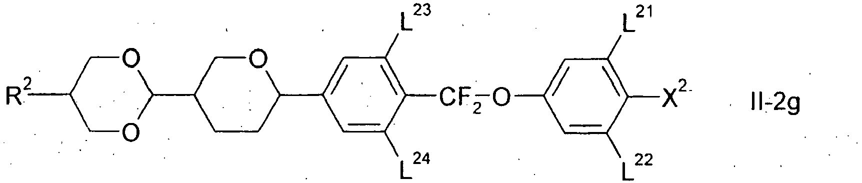 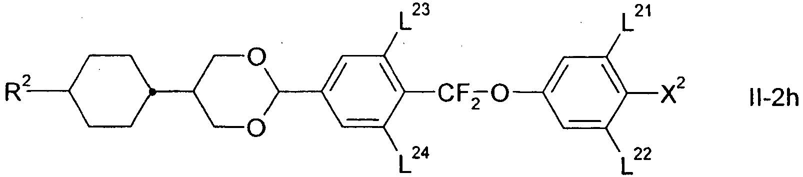 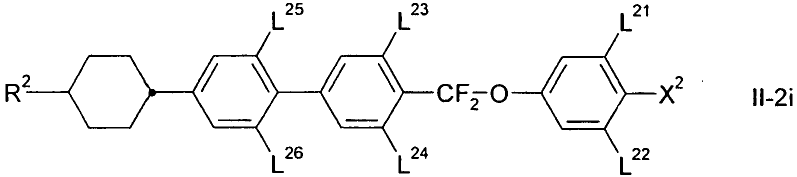 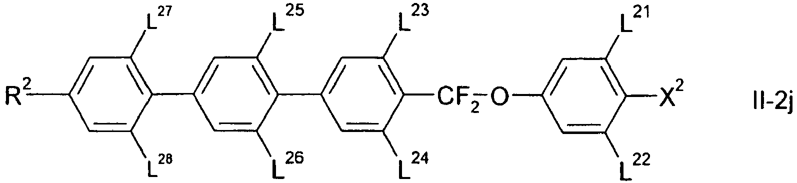 worin die Parameter die jeweiligen oben angegebenen Bedeutungen besitzen und L²⁵ bis L²⁸ unabhängig voneinander H oder F, bevorzugt L²⁷ und L²⁸ beide H, besonders bevorzugt L²⁶ H bedeuten.

Vorzugsweise enthält das Flüssigkristallmedium Verbindungen, die ausgewählt sind aus der Gruppe der Verbindungen der Formeln II-1a bis II-1e, worin L²¹ und L²² beide F und/oder L²³ und L²⁴ beide F bedeuten.

In einer bevorzugten Ausführungsform enthält das Flüssigkristallmedium Verbindungen, die ausgewählt sind aus der Gruppe der Verbindungen der Formeln II-1a bis II-1i, worin L²¹, L²², L²³ und L²⁴ alle F bedeuten.

Speziell bevorzugte Verbindungen der Formel II-2 sind die Verbindungen der folgenden Formeln 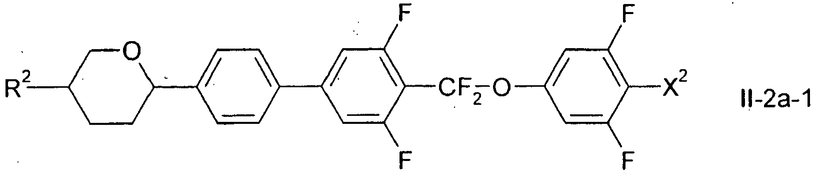 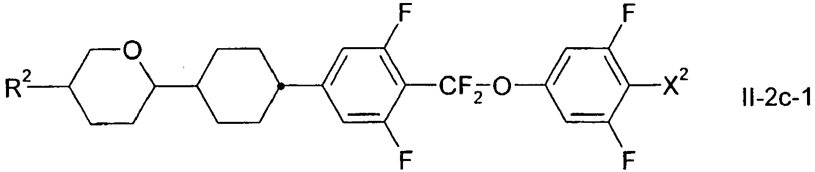 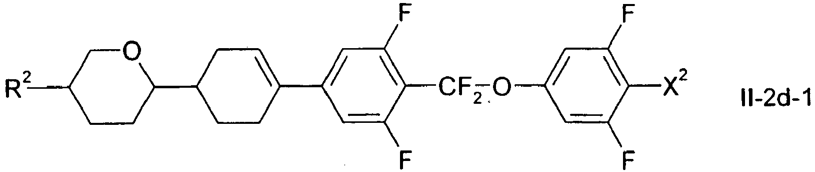 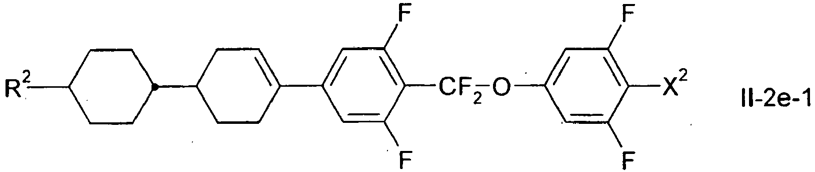 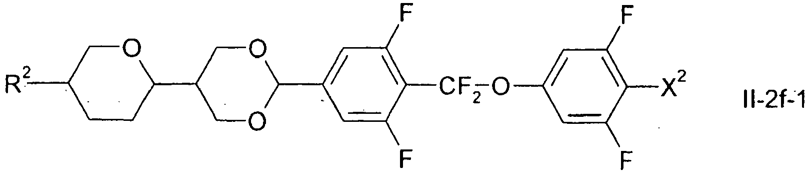 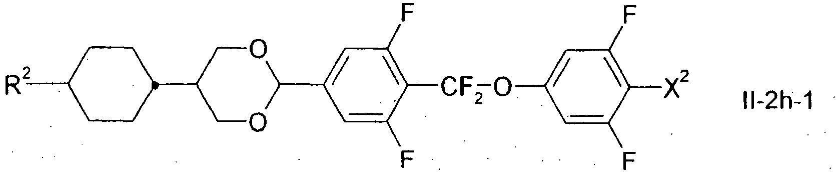 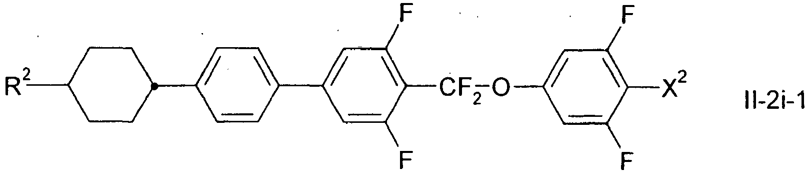 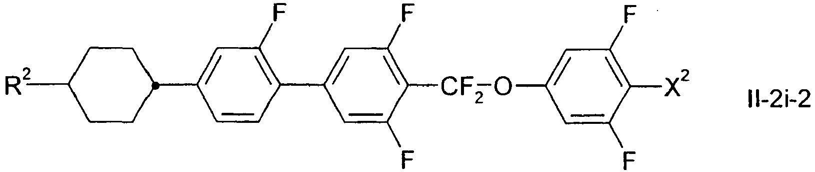 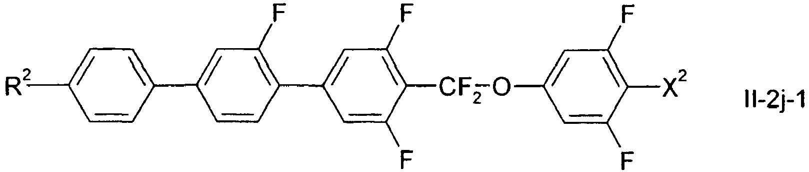 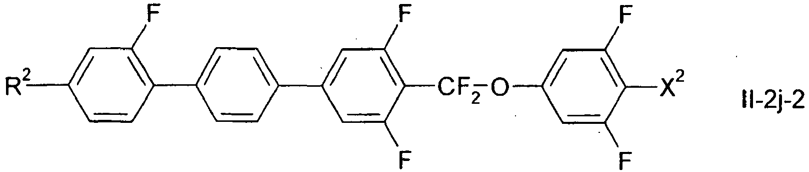 worin R² und X² die oben angegebene Bedeutungen besitzen und X² bevorzugt F bedeutet.

Vorzugsweise enthält das Flüssigkristallmedium eine oder mehrere Verbindungen der Formel II-2. Vorzugsweise sind diese Verbindungen der Formel II-3 ausgewählt aus der Gruppe der Verbindungen der Formeln II-3a bis II-3c 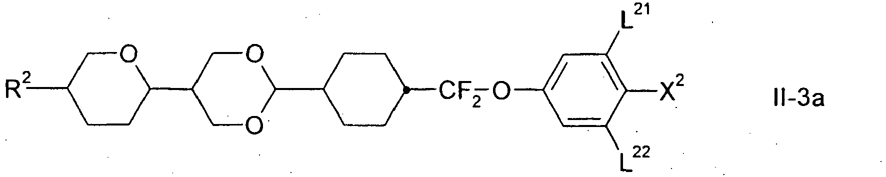 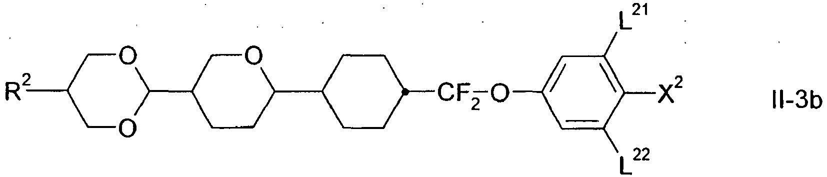 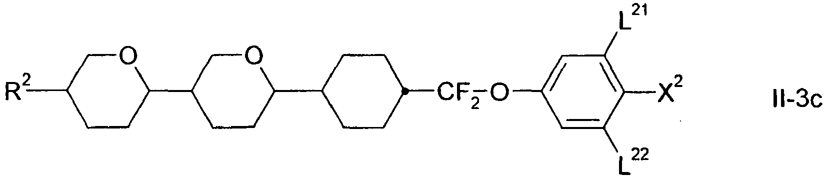 worin die Parameter die jeweiligen oben angegebenen Bedeutungen besitzen und L²¹ und L²² vorzugsweise beide F bedeuten.

In einer bevorzugten Ausführungsform enthält das Flüssigkristallmedium eine oder mehrere Verbindungen der Forme II-4, bevorzugt der Formel II-4a 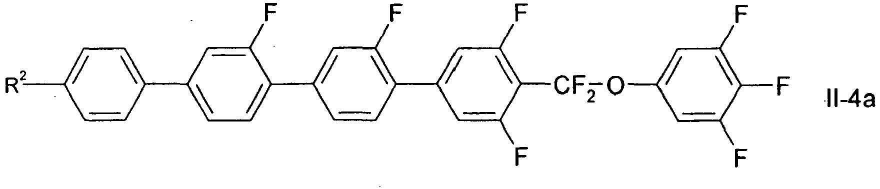 worin die Parameter die oben gegebene Bedeutung haben und X² bevorzugt F oder OCF₃, besonders bevorzugt F, bedeutet.

Vorzugsweise enthält das Flüssigkristallmedium eine oder mehrere Verbindungen der Formel III-1. Vorzugsweise sind die Verbindungen der Formel III-1 ausgewählt aus der Gruppe der Verbindungen der Formeln III-1a und
III-1b 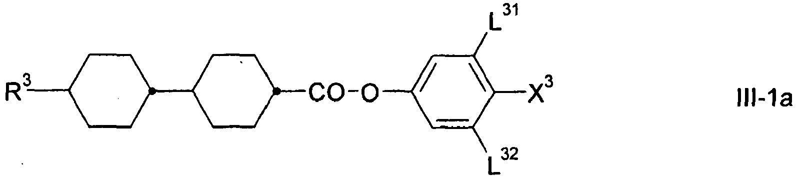 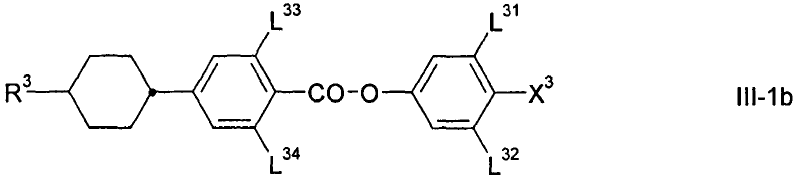 worin die Parameter die jeweiligen oben angegebenen Bedeutungen besitzen und die Parameter L³³ und L³⁴ unabhängig voneinander und von den anderen Parametern H oder F bedeuten.

Vorzugsweise enthält das Flüssigkristallmedium eine oder mehrere Verbindungen der Formel III-1a, die vorzugsweise aus der Gruppe der Verbindungen der Formeln III-1a-1 bis III-1a-3 ausgewählt sind 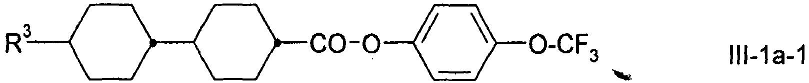 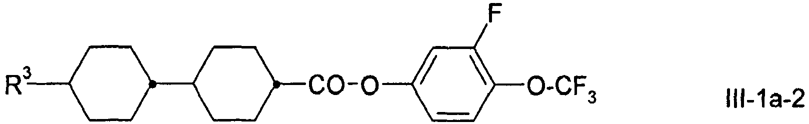 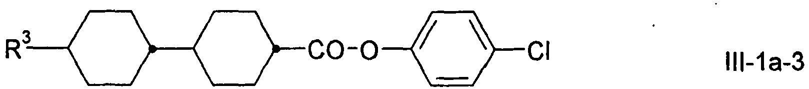 worin R³ die oben angegebene Bedeutung besitzt.

Vorzugsweise enthält das Flüssigkristallmedium eine oder mehrere Verbindungen der Formel III-1b, die vorzugsweise ausgewählt sind aus der Gruppe der Verbindungen der Formeln III-1b-1 bis III-1b-4, vorzugsweise III-1b4 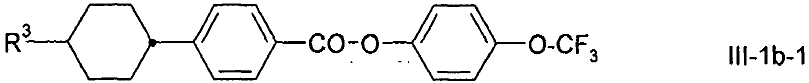 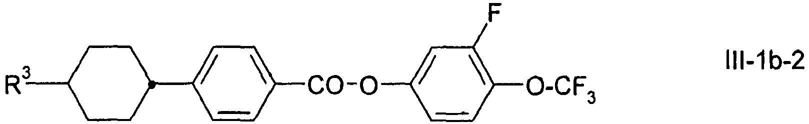 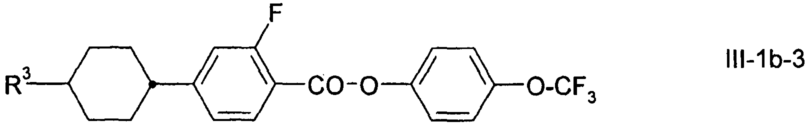 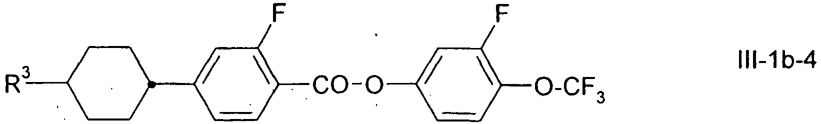 worin R³ die oben angegebene Bedeutung besitzt.

Vorzugsweise enthält das Flüssigkristallmedium eine oder mehrere Verbindungen der Formel III-2. Vorzugsweise sind die Verbindungen der Formel III-2 ausgewählt aus der Gruppe der Verbindungen der Formeln III-2a bis III-2j 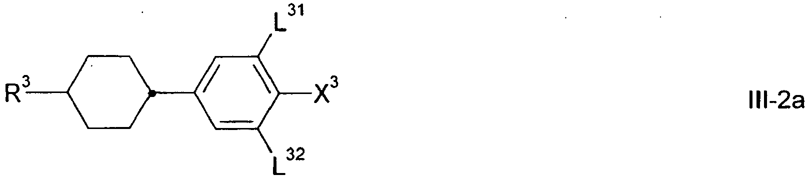 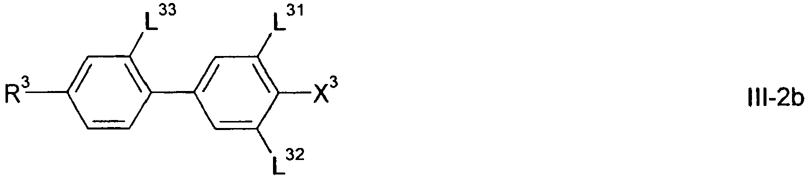 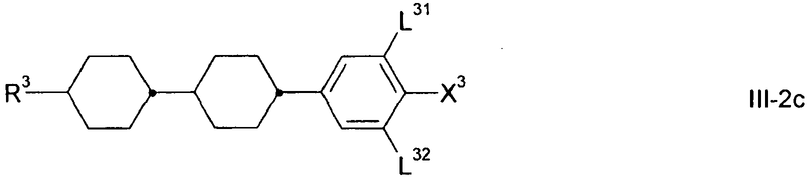 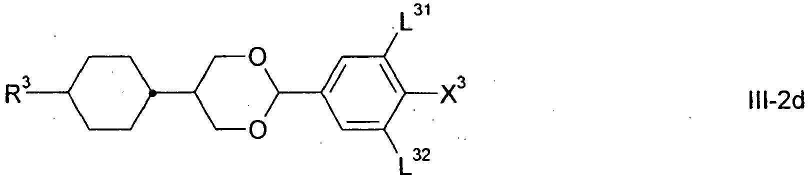 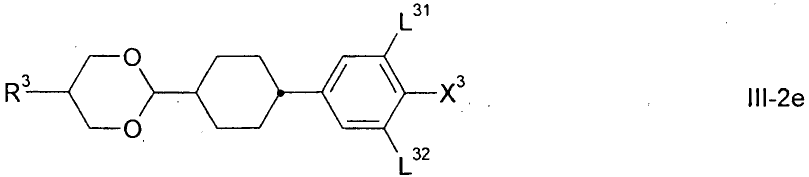 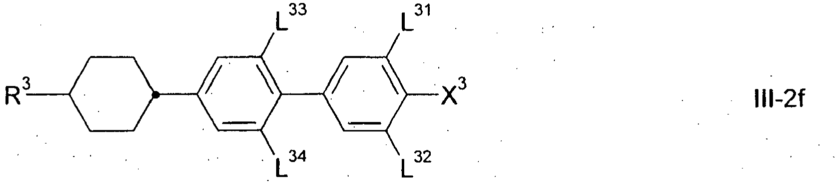 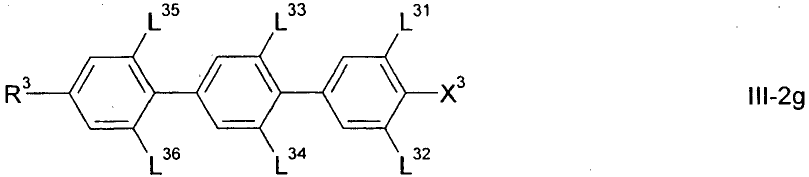 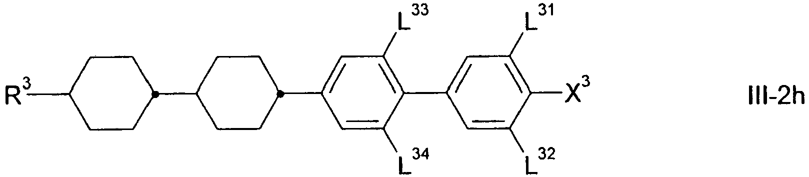 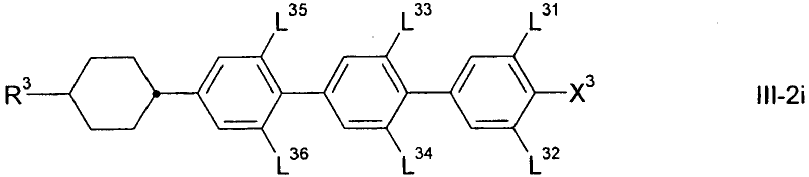 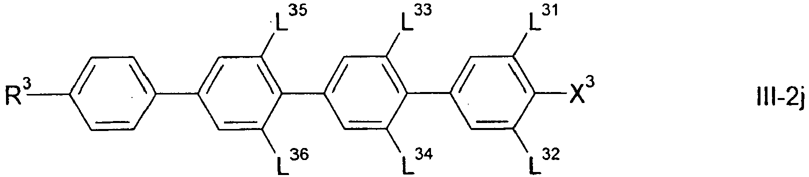 worin die Parameter die oben gegebene Bedeutung haben und bevorzugt worin die Parameter die jeweiligen oben angegebenen Bedeutungen besitzen und die Parameter L³⁵ und L³⁶ unabhängig voneinander und von den anderen Parametern H oder F bedeuten.

Vorzugsweise enthält das Flüssigkristallmedium eine oder mehrere Verbindungen der Formel III-2a, die vorzugsweise ausgewählt sind aus der Gruppe der Verbindungen der Formeln III-2a-4 bis III-2a-5 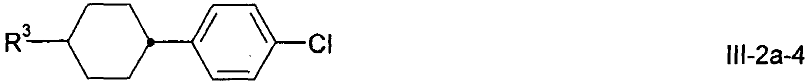 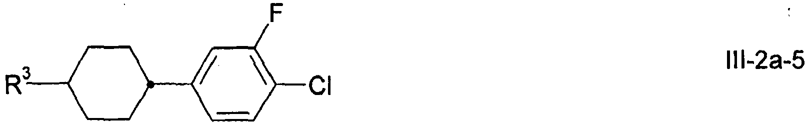 worin R³ die oben angegebene Bedeutung besitzt.

Vorzugsweise enthält das Flüssigkristallmedium eine oder mehrere Verbindungen der Formel III-2b, die vorzugsweise ausgewählt sind aus der Gruppe der Verbindungen der Formeln III-2b-3 und III-2b-4, vorzugsweise der Formel III-2b-4 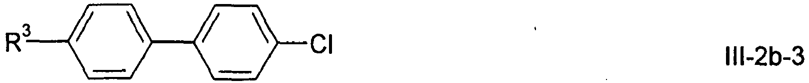 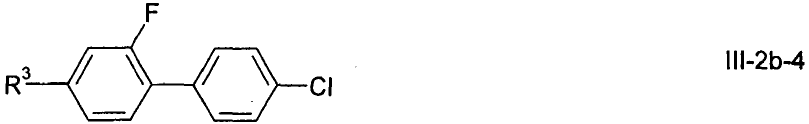 worin R³ die oben angegebene Bedeutung besitzt.

Vorzugsweise enthält das Flüssigkristallmedium eine oder mehrere Verbindungen der Formel III-2c, die vorzugsweise ausgewählt sind aus der Gruppe der Verbindungen der Formeln III-2c-1, III-2c-2 und III-2c-5 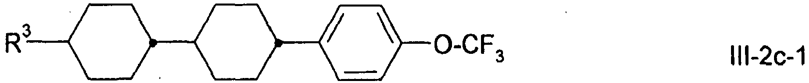 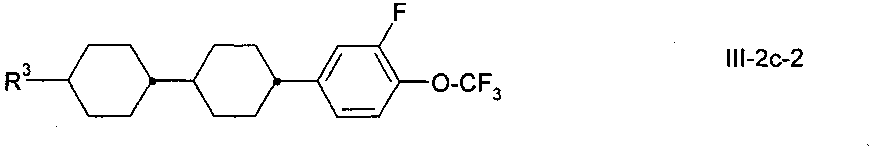 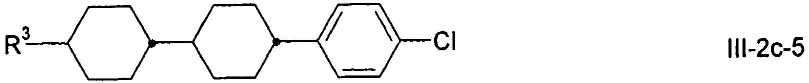 worin R³ die oben angegebene Bedeutung besitzt. Vorzugsweise enthält das Flüssigkristallmedium eine oder mehrere Verbindungen der Formel III-2g, die vorzugsweise ausgewählt sind aus der Gruppe der Verbindungen der Formel III-2g-5 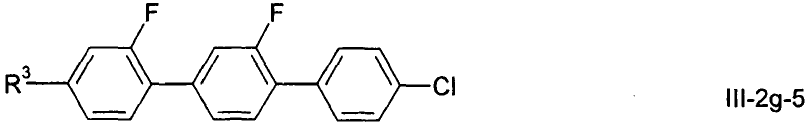 worin R³ die oben angegebene Bedeutung besitzt.

Vorzugsweise enthält das Flüssigkristallmedium eine oder mehrere Verbindungen der Formel III-2h, die bevorzugt ausgewählt sind aus der Gruppe der Verbindungen der Formeln III-1h-1 bis III-2h-3, bevorzugt der Formel III-2h-3 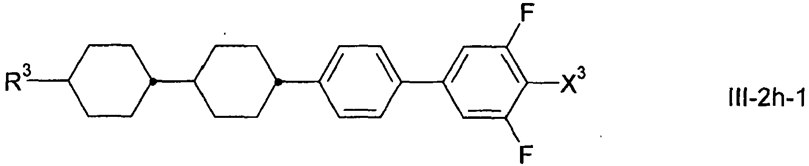 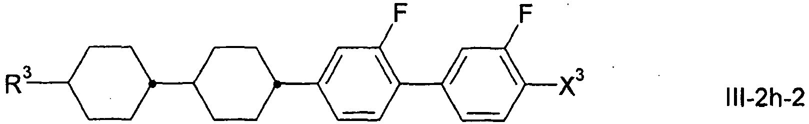 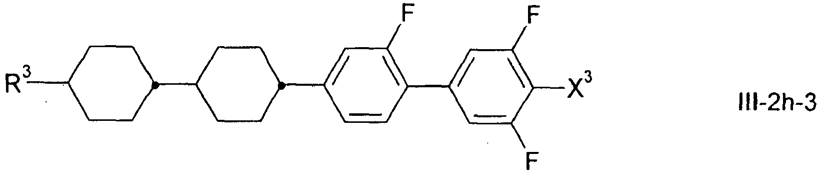 worin die Parameter die oben gegebene Bedeutung haben und bevorzugt X³ F bedeutet.

Vorzugsweise enthält das Flüssigkristallmedium eine oder mehrere Verbindungen der Formel III-2, die bevorzugt ausgewählt sind aus der Gruppe der Verbindungen der Formeln III-2i-1 und III-2i-2, bevorzugt der Formel III-2i-2 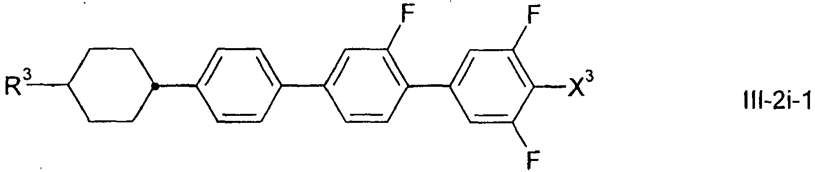 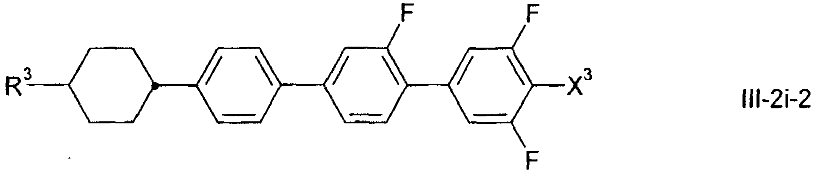 worin die Parameter die oben gegebene Bedeutung haben und bevorzugt X³ F bedeutet.

Vorzugsweise enthält das Flüssigkristallmedium eine oder mehrere Verbindungen der Formel III-2j, die bevorzugt ausgewählt sind aus der Gruppe der Verbindungen der Formeln III-2j-1 und III-2j-2, bevorzugt der Formel III-2j-1 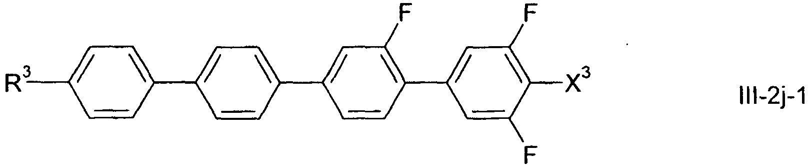 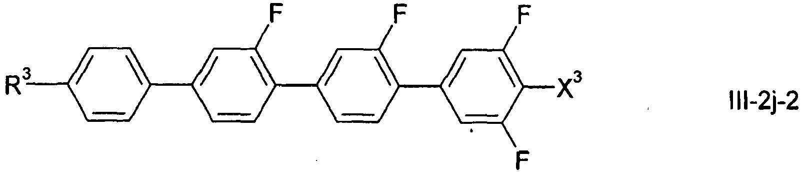 worin die Parameter die oben gegebene Bedeutung haben.

Alternativ oder zusätzlich zu den Verbindungen der Formeln III-1 und/oder III-2 können die Medien gemäß der vorliegenden Erfindung eine oder mehrere Verbindungen der Formel III-3 enthalten 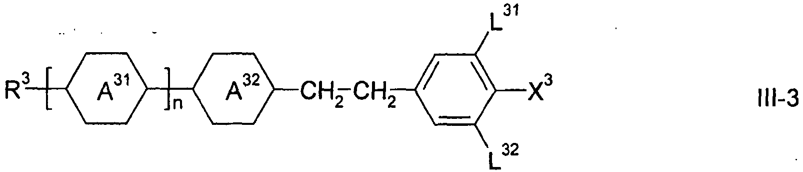 worin die Parameter die jeweiligen oben unter Formel III angegebenen Bedeutungen besitzen.

Vorzugsweise enthalten die flüssigkristallinen Medien gemäß der vorliegenden Erfindung eine oder mehrere dielektrisch neutrale Verbindungen mit einer dielektrischen Anisotropie im Bereich von -1,5 bis 3, bevorzugt ausgewählt aus der Gruppe der Verbindungen der Formeln IV und VI.

Vorzugsweise enthalten die flüssigkristallinen Medien gemäß der vorliegenden Erfindung eine oder mehrere Verbindungen ausgewählt aus der Gruppe der Verbindungen der Formeln IV-1 bis IV-6 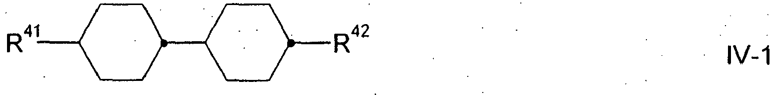 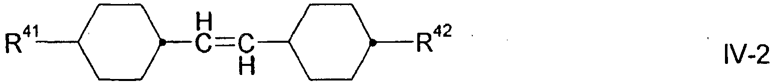 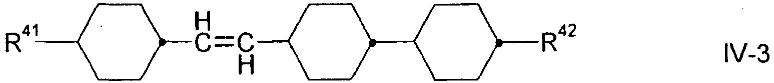 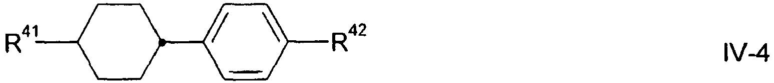 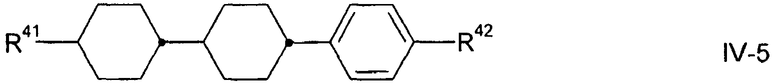 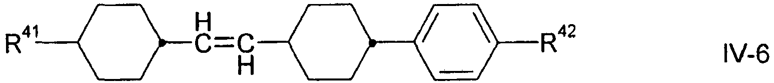 worin R⁴¹ und R⁴² die jeweiligen oben unter Formel IV angegebenen Bedeutungen besitzen und in den Formeln IV-1, IV-5 und IV-6 R⁴¹ vorzugsweise Alkyl oder Alkenyl, vorzugsweise Alkenyl, und R⁴² vorzugsweise Alkyl oder Alkenyl, vorzugsweise Alkyl bedeutet, in Formel IV-2 R⁴¹ und R⁴² vorzugsweise Alkyl bedeuten und in Formel IV-4 R⁴¹ vorzugsweise Alkyl oder Alkenyl, stärker bevorzugt Alkyl, und R⁴² vorzugsweise Alkyl oder Alkoxy, stärker bevorzugt Alkoxy bedeutet.

Vorzugsweise enthalten die flüssigkristallinen Medien gemäß der vorliegenden Erfindung eine oder mehrere Verbindungen ausgewählt aus der Gruppe der Verbindungen der Formeln IV-1, IV-4, IV-5 und IV-6, vorzugsweise eine oder mehrere Verbindungen der Formel IV-1 und eine oder mehrere Verbindungen ausgewählt aus der Gruppe der Formeln IV-4 und IV-5, stärker bevorzugt jeweils eine oder mehrere Verbindungen der Formeln IV-1, IV-4 und IV-5 und ganz bevorzugt jeweils eine oder mehrere Verbindungen Formeln IV-1, IV-4, IV-5 und IV-6.

In einer bevorzugten Ausführungsform enthalten die flüssigkristallinen Medien gemäß der vorliegenden Erfindung vorzugsweise eine oder mehrere Verbindungen der Formel IV-1, stärker bevorzugt ausgewählt aus ihren jeweiligen Unterformeln der Formel CC-n-m und/oder CC-n-Om und/oder CC-n-V und/oder CC-nV-m und/oder CC-Vn-m, stärker bevorzugt der Formel CC-n-m und/oder CC-n-V und/oder CC-nV-m und ganz besonders bevorzugt ausgewählt aus der Gruppe der Formeln CC-3-1, CC-3-2, CC-3-3, CC-3-4, CC-3-5, CC-3-V, CC-4-V, CC-5-V und CC-3-V1. Die Definitionen dieser Abkürzungen (Akronyme) sind unten in Tabelle D angegeben, bzw. aus den Tabellen A bis C zu ersehen.

In einer bevorzugten Ausführungsform enthalten die flüssigkristallinen Medien gemäß der vorliegenden Erfindung vorzugsweise eine oder mehrere Verbindungen der Formel IV-4, stärker bevorzugt ausgewählt aus ihren jeweiligen Unterformeln der Formel CP-V-n und/ oder CP-nV-m und/oder CP-Vn-m, stärker bevorzugt der Formel CP-nV-m und/oder CP-V2-n und ganz bevorzugt ausgewählt aus der Gruppe der Formeln CP-2V-1, CP-1V-2 und CP-V2-1. Die Definitionen dieser Abkürzungen (Akronyme) sind unten in Tabelle D angegeben; bzw. aus den Tabellen A bis C zu ersehen.

In einer bevorzugten Ausführungsform enthalten die flüssigkristallinen Medien gemäß der vorliegenden Erfindung vorzugsweise eine oder mehrere Verbindungen der Formel IV-5, stärker bevorzugt ausgewählt aus ihren jeweiligen Unterformeln der Formel CCP-V-n und/ oder CCP-nV-m und/oder CCP-Vn-m, stärker bevorzugt der Formel CCP-V-n und/oder CCP-V2-n und ganz bevorzugt ausgewählt aus der Gruppe der Formeln CCP-V-1 und CCP-V2-1. Die Definitionen dieser Abkürzungen (Akronyme) sind unten in Tabelle D angegeben, bzw. aus den Tabellen A bis C zu ersehen.

In einer ebenfalls bevorzugten Ausführungsform enthält das Flüssigkristallmedium vorzugsweise eine oder mehrere Verbindungen der Formel IV-1, stärker bevorzugt ausgewählt aus ihren jeweiligen Unterformeln der Formel CC-n-m, CC-n-V, CC-n-Vm, CC-V-V, CC-V-Vn und/oder CC-nV-Vm, stärker bevorzugt der Formeln CC-n-m und/ oder CC-n-V und/ oder CC-n-Vm und ganz bevorzugt ausgewählt aus der Gruppe der Formeln CC-3-1, CC-3-2, CC-3-3, CC-3-4, CC-3-5, CC-3-V, CC-4-V, CC-5-V und CC-3-V1 und insbesondere ausgewählt aus der Gruppe der Formeln CC-3-V, CC-4-V, CC-5-V CC-3-V1, CC-4-V1, CC-5-V1, CC-3-V2 und CC-V-V1. Die Definitionen dieser Abkürzungen (Akronyme) sind ebenfalls unten in Tabelle D angegeben, bzw. aus den Tabellen A bis C zu ersehen.

In einer weiteren bevorzugten Ausführungsform der vorliegenden Erfindung, bei der es sich um dieselbe wie die vorhergehende oder um eine andere handeln kann, enthalten die Flüssigkristallmischungen gemäß der vorliegenden Erfindung die Verbindungen der Formel IV ausgewählt aus der Gruppe der Verbindungen der Formeln IV-1 bis IV-6 wie oben gezeigt und gegebenenfalls der Formeln IV-7 bis IV-14: 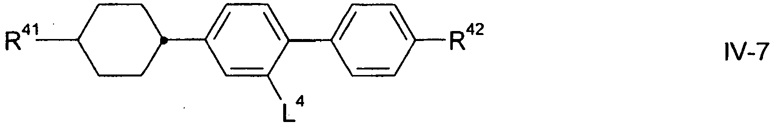 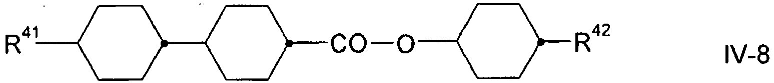 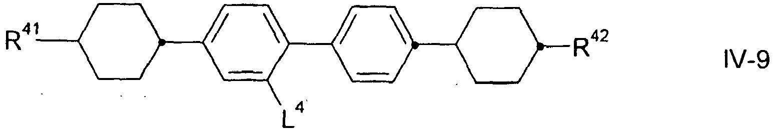 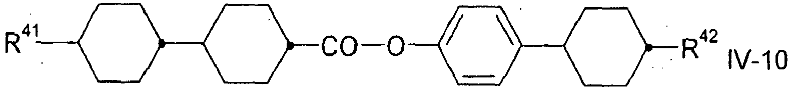 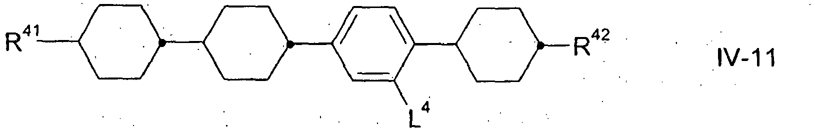 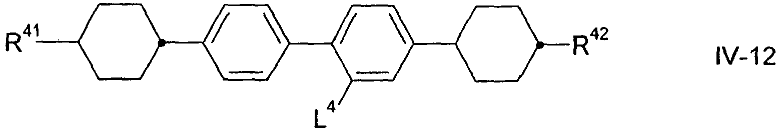 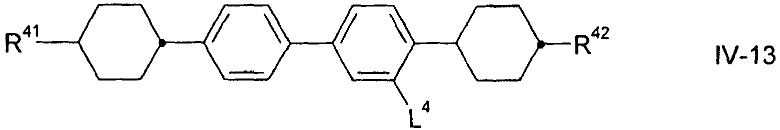 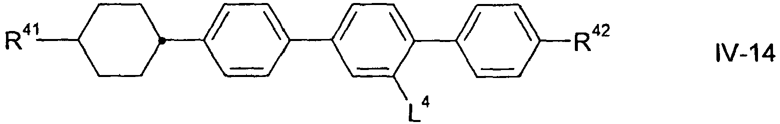 worin
- R⁴¹ und R⁴²: unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeuten und
- L⁴: H oder F bedeutet.

In einer bevorzugten Ausführungsform enthält das Flüssigkristallmedium vorzugsweise eine oder mehrere Verbindungen der Formel IV-7, stärker bevorzugt ausgewählt aus ihren jeweiligen Unterformeln der Formel CPP-3-2,
CPP-5-2 und CGP-3-2, stärker bevorzugt der Formel CPP-3-2 und/oder CGP-3-2 und ganz besonders bevorzugt der Formel CPP-3-2. Die Definitionen dieser Abkürzungen (Akronyme) sind unten in Tabelle D angegeben, bzw. aus den Tabellen A bis C zu ersehen.

Alternativ oder zusätzlich zu den Verbindungen der Formeln II und/oder III können die Medien gemäß der vorliegenden Erfindung eine oder mehrere dielektrisch positive Verbindungen der Formel V enthalten 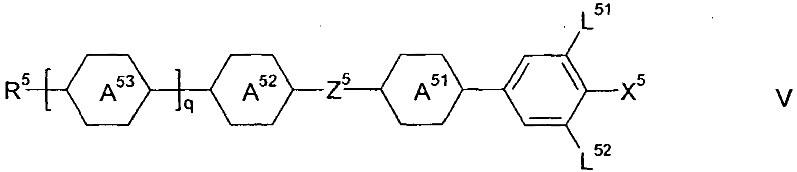 worin
- R⁵: Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen und vorzugsweise Alkyl oder Alkenyl bedeutet, 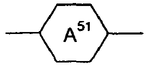 bis 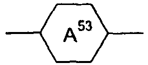 unabhängig voneinander 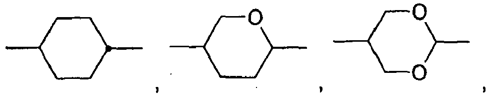 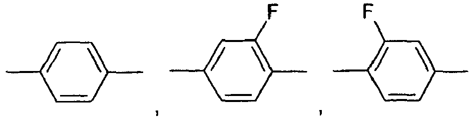 oder 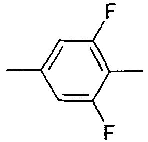 bedeuten,
- L⁵¹ und L⁵²: unabhängig voneinander H oder F bedeuten, vorzugsweise L⁵¹ F bedeutet, und
- X⁵: Halogen, halogeniertes Alkyl oder Alkoxy mit 1 bis 3 C-Atomen oder halogeniertes Alkenyl oder Alkenyloxy mit 2 oder 3 C-Atomen, vorzugsweise F, Cl, -OCF₃ oder -CF₃, ganz bevorzugt F, Cl oder -OCF₃ bedeutet,
- Z⁵: -CH₂CH₂-, -CF₂CF₂-, -COO-, *trans*- -CH=CH-, *trans-*-CF=CF-, -CH₂O- oder -CF₂O-, vorzugsweise -CH₂CH₂-, -COO- oder *trans*- -CH=CH- und ganz bevorzugt -COO- oder *trans-* -CH=CH- bedeutet und
- q: 0 oder 1 bedeutet.

Vorzugsweise enthalten die Medien gemäß der vorliegenden Erfindung eine oder mehrere Verbindungen der Formel V, vorzugsweise ausgewählt aus der Gruppe der Verbindungen der Formeln V-1 und V-2 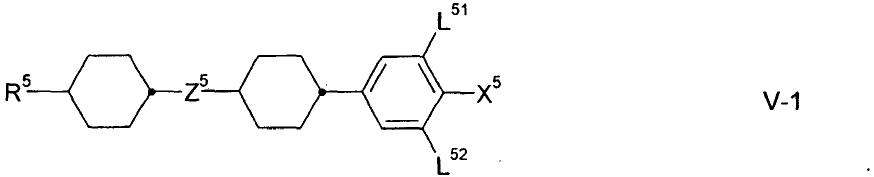 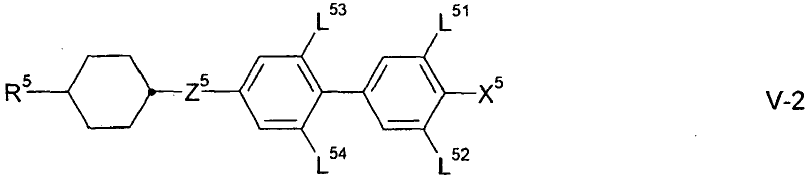 worin die Parameter die jeweiligen oben angegebenen Bedeutungen besitzen und die Parameter L⁵³ und L⁵⁴ unabhängig voneinander und von den anderen Parametern H oder F bedeuten und Z⁵ vorzugsweise -CH₂-CH₂- bedeutet.

Vorzugsweise sind die Verbindungen der Formel V-1 ausgewählt aus der Gruppe der Verbindungen der Formeln V-1a und V-1b 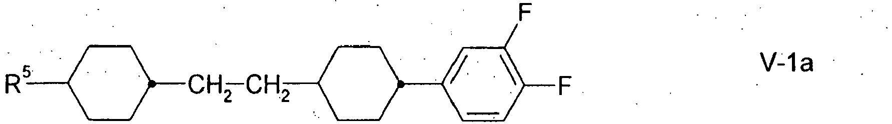 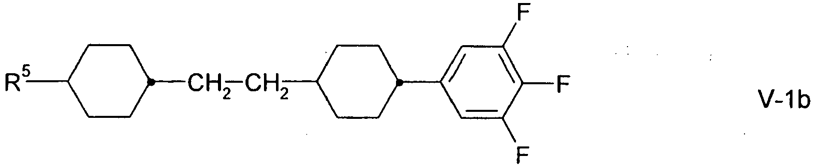 worin R⁵ die oben angegebene Bedeutung besitzt.

Vorzugsweise sind die Verbindungen der Formel V-2 ausgewählt aus der Gruppe der Verbindungen der Formeln V-2a bis V-2d 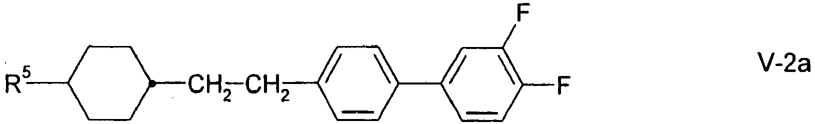 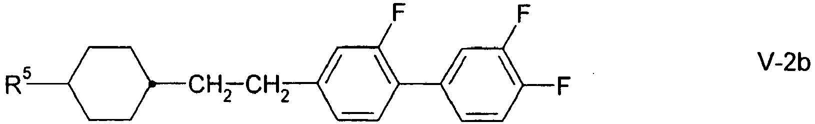 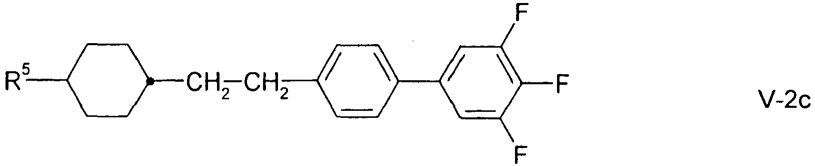 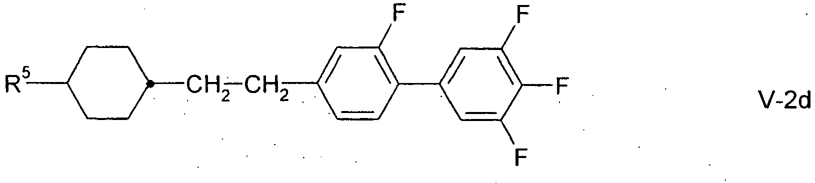 worin R⁵ die oben angegebene Bedeutung besitzt.

Vorzugsweise enthalten die flüssigkristallinen Medien gemäß der vorliegenden Erfindung zusätzlich eine oder mehrere dielektrisch neutrale Verbindungen mit einer dielektrischen Anisotropie im Bereich von -1,5 bis 3 der Formel VI 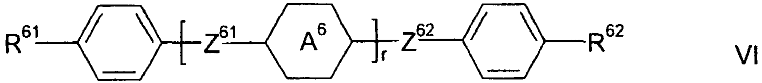 worin
- R⁶¹ und R⁶²: unabhängig voneinander die oben unter Formel II für R² angegebene Bedeutung besitzen, vorzugsweise R⁶¹ Alkyl und R⁶² Alkyl oder Alkenyl bedeutet, 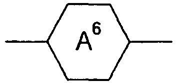 bei jedem Erscheinen unabhängig voneinander 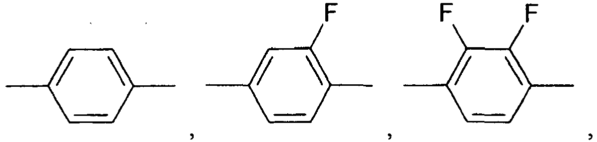 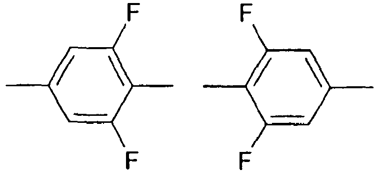 oder 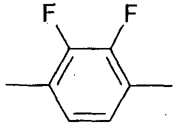 bedeuten,
vorzugsweise einer oder mehrere von 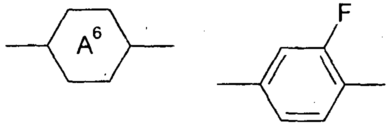 bedeuten,
- Z⁶¹ und Z⁶²: unabhängig voneinander und bei zweifachem Auftreten von Z⁶¹ auch diese unabhängig voneinander -CH₂CH₂-, -COO-, *trans-* -CH=CH-, *trans-* -CF=CF-, -CH₂O-, -CF₂O- oder eine Einfachbindung bedeuten, vorzugsweise eines oder mehrere von ihnen eine Einfachbindung bedeutet/bedeuten, und
- r: 0, 1 oder 2, vorzugsweise 0 oder 1, besonders bevorzugt 1, bedeutet.

Vorzugsweise enthalten die flüssigkristallinen Medien gemäß der vorliegenden Erfindung eine oder mehrere Verbindungen ausgewählt aus der Gruppe der Verbindungen der Formeln VI-1 und VI-2 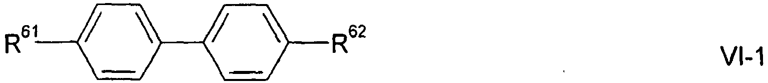 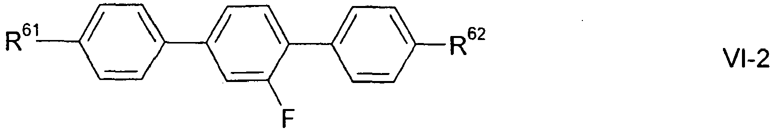 worin R⁶¹ und R⁶² die jeweiligen oben unter Formel VI angegebenen Bedeutungen besitzen und R⁶¹ vorzugsweise Alkyl bedeutet und in Formel VI-1 R⁶² vorzugsweise Alkenyl, vorzugsweise-(CH₂)₂-CH=CH-CH₃, und in Formel VI-2 R⁶² vorzugsweise Alkyl -(CH₂)₂-CH=CH₂ oder -(CH₂)₂-CH=CH-CH₃ bedeutet.

Vorzugsweise enthält die dielektrisch neutrale enthalten die flüssigkristallinen Medien gemäß der vorliegenden Erfindung eine oder mehrere Verbindungen ausgewählt aus der Gruppe der Verbindungen der Formeln VI-1 und VI-2, worin R⁶¹ vorzugsweise n-Alkyl bedeutet und in Formel VI-1 R⁶² vorzugsweise Alkenyl und in Formel VI-2 R⁶² vorzugsweise n-Alkyl bedeutet.

In einer bevorzugten Ausführungsform enthält das Flüssigkristallmedium vorzugsweise eine oder mehrere Verbindungen der Formel VI-1, stärker bevorzugt ihrer Unterformel PP-n-2Vm, noch stärker bevorzugt der Formel PP-1-2V1. Die Definitionen dieser Abkürzungen (Akronyme) sind unten in Tabelle D angegeben, bzw. aus den Tabellen A bis C zu ersehen.

In einer bevorzugten Ausführungsform enthält das Flüssigkristallmedium vorzugsweise eine oder mehrere Verbindungen der Formel VI-2, stärker bevorzugt ihrer Unterformeln PGP-n-m, PGP-n-2V und PGP-n-2Vm, noch stärker bevorzugt ihrer Unterformeln PGP-3-m, PGP-n-2V und PGP-n-V1, ganz bevorzugt ausgewählt aus den Formeln PGP-3-2, PGP-3-3, PGP-3-4, PGP-3-5, PGP-1-2V, PGP-2-2V und PGP-3-2V. Die Definitionen dieser Abkürzungen (Akronyme) sind ebenfalls unten in Tabelle D angegeben, bzw. aus den Tabellen A bis C zu ersehen.

Optional können die Flüssigkristallmischungen gemäß der vorliegenden Erfindung zusätzlich eine oder mehrere Verbindungen enthalten, die eine negative dielektrische Anisotropie aufweisen, vorzugsweise eine oder mehrere Verbindungen der Formel VII 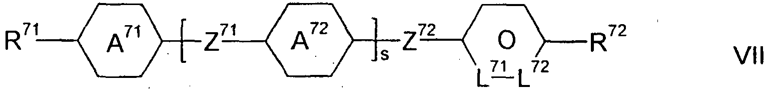 worin
- R⁷¹ und R⁷²: unabhängig voneinanderdie oben unter Formel II für R² angegebene Bedeutung besitzen, 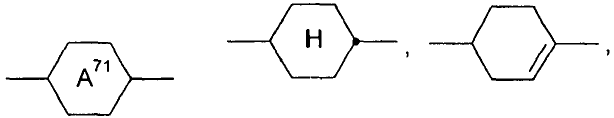 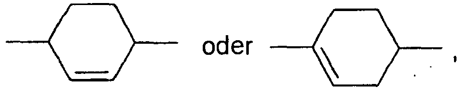 vorzugsweise 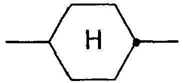 bedeutet, 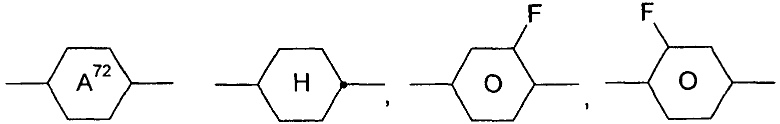 oder 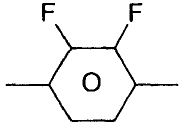 bedeutet,
- Z⁷¹ und Z⁷²: unabhängig voneinander -CH₂CH₂-, -COO-, *trans-*-CH=CH-, *trans-* -CF=CF-, -CH₂O-, -CF₂O- oder eine Einfachbindung bedeuten, vorzugsweise eines oder mehrere von ihnen eine Einfachbindung bedeutet/ bedeuten und ganz bevorzugt beide eine Einfachbindung bedeuten,
- L⁷¹ und L⁷²: unabhängig voneinander C-F oder N bedeuten, vorzugsweise eines oder mehrere von ihnen C-F bedeutet/bedeuten und ganz bevorzugt beide C-F bedeuten, und
- s: 0 oder 1 bedeutet.

Zusätzlich können die Flüssigkristallmischungen gemäß der vorliegenden Erfindung eine oder mehrere dielektrisch positive Verbindungen der Formel VIII 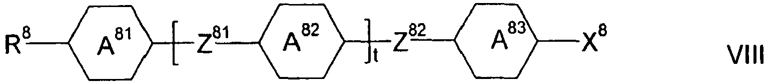 worin
- R⁸: die oben unter Formel II für R² angegebene Bedeutung besitzt, eines von 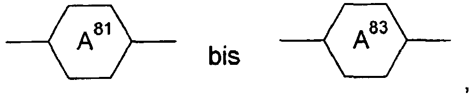 das vorhanden ist, 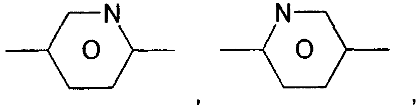 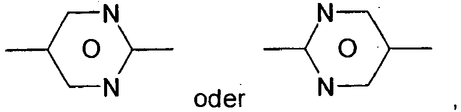 vorzugsweise 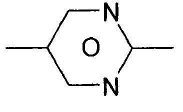 bedeutet,
vorzugsweise 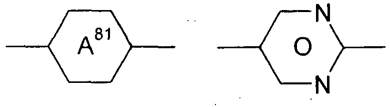 bedeutet, und die anderen dieselbe Bedeutung besitzen oder unabhängig voneinander 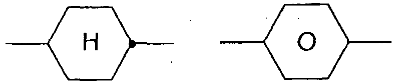 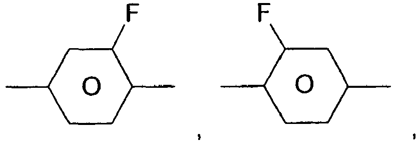 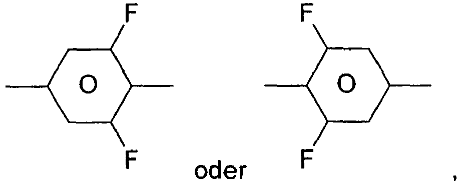 vorzugsweise, 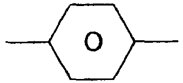 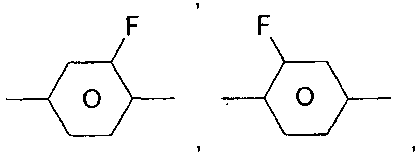 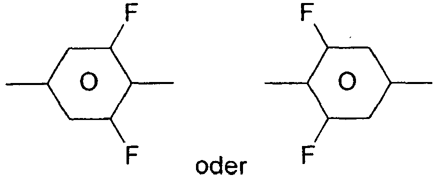 bedeuten,
- Z⁸¹ und Z⁸²: unabhängig voneinander -CH₂CH₂-, -COO-, *trans-*-CH=CH-, *trans-* -CF=CF-, -CH₂O-, -CF₂O- oder eine Einfachbindung bedeuten, vorzugsweise eines oder mehrere von ihnen eine Einfachbindung bedeutet/ bedeuten und ganz bevorzugt beide eine Einfachbindung bedeuten,
- t: 0, 1 oder 2, vorzugsweise 0 oder 1, stärker bevorzugt 1 bedeutet, und
- X⁸: die oben unter Formel II für X² angegebene Bedeutung besitzt oder alternativ unabhängig von R⁸ die für R⁸ angegebene Bedeutung besitzen kann und
wovon die Verbindungen der Formel I ausgenommen sind, enthalten.

Vorzugsweise enthalten die flüssigkristallinen Medien gemäß der vorliegenden Erfindung Verbindungen ausgewählt aus der Gruppe der Verbindungen der Formeln I bis VIII, vorzugsweise der Formeln I bis V und ganz bevorzugt der Formeln I bis III und/oder IV, stärker bevorzugt bestehen sie überwiegend, noch stärker bevorzugt bestehen sie im Wesentlichen und ganz bevorzugt bestehen sie vollständig daraus.

Vorzugsweise enthalten die Flüssigkristallmischungen gemäß der vorliegenden Erfindung neben den Verbindungen der Formel I Verbindungen der Formeln II und/oder III, bevorzugt der Formeln II und Verbindungen der Formel III. Besonders bevorzugt enthalten die Flüssigkristallmischungen gemäß der vorliegenden Erfindung zusätzlich eine oder mehrere Verbindungen der Formeln IV und/oder VI besonders bevorzugt der Formel IV.

Selbstverständlich können die Mischungen gemäß der vorliegenden Erfindung auch jeweils eine oder mehrere Verbindungen mehrerer der acht Formeln, Formeln I bis VIII, und sogar aller acht Formeln, Formeln I bis VIII, enthalten.

In dieser Anmeldung bedeutet enthalten im Zusammenhang mit Zusammensetzungen, dass die betreffende Entität, d.h. in der Regel das Medium, die angegebene oder Verbindung oder Verbindungen enthält, vorzugsweise in einer Gesamtkonzentration von 10 % oder mehr und ganz bevorzugt von 20 % oder mehr.

Überwiegend bestehen bedeutet in diesem Zusammenhang, dass die betreffende Entität 55 % oder mehr, vorzugsweise 60 % oder mehr und ganz bevorzugt 70 % oder mehr der angegebenen Verbindung oder Verbindungen enthält.

Im Wesentlichen bestehen bedeutet in diesem Zusammenhang, dass die betreffende Entität 80 % oder mehr, vorzugsweise 90 % oder mehr und ganz bevorzugt 95 % oder mehr der angegebenen Verbindung oder Verbindungen enthält.

Vollständig bestehen bedeutet in diesem Zusammenhang, dass die betreffende Entität 98 % oder mehr, vorzugsweise 99 % oder mehr und ganz bevorzugt 100,0 % der angegebenen Verbindung oder Verbindungen enthält.

Vorzugsweise enthält das Flüssigkristallmedium eine oder mehrere Verbindungen der Formel VII, vorzugsweise ausgewählt aus der Gruppe der Verbindungen der Formeln VII-1 bis VII-3 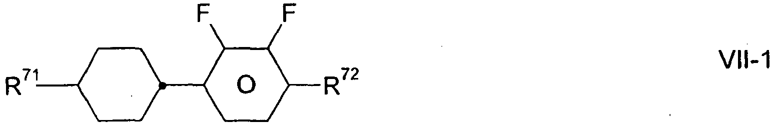 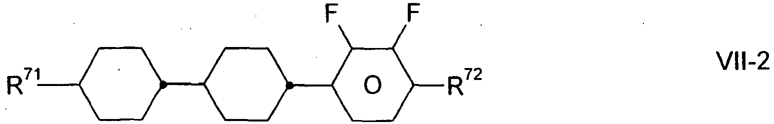 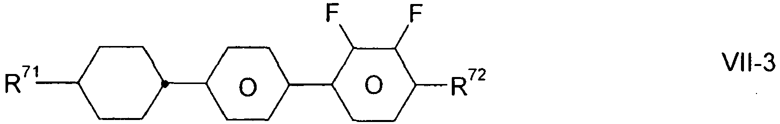 worin
- R⁷¹, und R⁷²: die jeweiligen oben unter Formel VII angegebenen Bedeutungen besitzen.

In den Formeln VII-1 bis VII-3 bedeutet R⁷¹ vorzugsweise n-Alkyl oder 1-E-Alkenyl und R⁷² vorzugsweise n-Alkyl oder Alkoxy.

Auch andere mesogene Verbindungen, die oben nicht explizit genannt sind, können gegebenenfalls und in vorteilhafter Weise in den Medien gemäß der vorliegenden Erfindung verwendet werden. Solche Verbindungen sind dem Fachmann bekannt.

Die Flüssigkristallmedien gemäß der vorliegenden Erfindung weisen einen Klärpunkt von 55°C oder mehr, bevorzugt von 60°C oder mehr, stärker bevorzugt von 65°C oder mehr, noch stärker bevorzugt von 70°C oder mehr und besonders bevorzugt von 75°C oder mehr, auf.

Vorzugsweise erstreckt sich die nematische Phase der erfindungsgemäßen Medien mindestens von 0°C oder weniger bis 70°C oder mehr, stärker bevorzugt mindestens von -20°C oder weniger bis 75°C oder mehr, ganz bevorzugt mindestens von -30°C oder weniger bis 75°C oder mehr und insbesondere mindestens von -40°C oder weniger bis 100°C oder mehr. In einzelnen bevorzugten Ausführungsformen kann es nötig sein, dass sich die nematische Phase der erfindungsgemäßen Medien bis zu einer Temperatur von 120°C oder mehr und sogar bis 130° oder mehr erstreckt.

Das Δε des Flüssigkristallmediums gemäß der Erfindung bei 1 kHz und 20°C beträgt vorzugsweise 2 oder mehr, stärker bevorzugt 4 oder mehr. Insbesondere beträgt Δε 20 oder weniger, bei Posi-VA-Anzeigen jedoch auch bis zu 30 oder weniger.

Das Δn der Flüssigkristallmedien gemäß der vorliegenden Erfindung liegt bei 589 nm (Na^{D}) und 20 °C vorzugsweise im Bereich von 0,070 oder mehr bis 0,150 oder weniger, stärker bevorzugt im Bereich von 0,080 oder mehr bis 0,140 oder weniger, noch stärker bevorzugt im Bereich von 0,090 oder mehr bis 0,135 oder weniger und ganz besonders bevorzugt im Bereich von 0,090 oder mehr bis 0,130 oder weniger.

In einer ersten bevorzugten Ausführungsform der vorliegenden Anmeldung beträgt das Δn der Flüssigkristallmedien gemäß der vorliegenden Erfindung vorzugsweise 0,080 oder mehr, stärker bevorzugt 0,090 oder mehr.

In dieser ersten bevorzugten Ausführungsform der vorliegenden Erfindung liegt das Δn der Flüssigkristallmedien bevorzugt im Bereich von 0,090 oder mehr bis 0,120 oder weniger, stärker bevorzugt im Bereich von 0,095 oder mehr bis 0,115 oder weniger und ganz besonderes bevorzugt im Bereich von 0,100 oder mehr bis 0,105 oder weniger, während Δε vorzugsweise im Bereich von 4 oder mehr bis 11 oder weniger, vorzugsweise im Bereich von 5 oder mehr bis 9 oder weniger und besonders bevorzugt im Bereich von 6 oder mehr bis 8 oder weniger der weniger liegt.

In dieser Ausführungsform erstreckt sich die nematische Phase der erfindungsgemäßen Medien vorzugsweise mindestens von -20 °C oder weniger bis 70 °C oder mehr, stärker bevorzugt mindestens von -20 °C oder weniger bis 70 °C oder mehr, ganz bevorzugt mindestens von -30 °C oder weniger bis 70 °C oder mehr und insbesondere mindestens von -40 °C oder weniger bis 95°C oder mehr.

In einer zweiten bevorzugten Ausführungsform der vorliegenden Erfindung liegt das Δn der Flüssigkristallmedien im Bereich von 0,115 oder mehr bis 0,140 oder weniger, stärker bevorzugt im Bereich von 0,120 oder mehr bis 0,135 oder weniger und ganz besonders bevorzugt im Bereich von 0,125 oder mehr bis 0,130 oder weniger, während Δε vorzugsweise 6 oder mehr, stärker bevorzugt 7 oder mehr beträgt und ganz bevorzugt im Bereich von 8,5 oder mehr bis 10 oder weniger liegt.

In dieser Ausführungsform erstreckt sich die nematische Phase der erfindungsgemäßen Medien vorzugsweise mindestens von -20 °C oder weniger bis 70 °C oder mehr, stärker bevorzugt mindestens von -20 °C oder weniger bis 70 °C oder mehr, ganz bevorzugt mindestens von -30 °C oder weniger bis 70 °C oder mehr und insbesondere mindestens von -40 °C oder weniger bis 75°C oder mehr.

In einer dritten bevorzugten Ausführungsform der vorliegenden Erfindung liegt das Δn der Flüssigkristallmedien im Bereich von 0,115 oder mehr bis 0,140 oder weniger, stärker bevorzugt im Bereich von 0,120 oder mehr bis 0,135 oder weniger und ganz bevorzugt im Bereich von 0,125 oder mehr bis 0,130 oder weniger, während Δε vorzugsweise 6 oder mehr, stärker bevorzugt 7 oder mehr beträgt und ganz bevorzugt im Bereich von 8,5 oder mehr bis 10 oder weniger liegt, liegt das Δn der Flüssigkristallmedien im Bereich von 0,070 oder mehr bis 0,120 oder weniger, stärker bevorzugt im Bereich von 0,075 oder mehr bis 0,115 oder weniger und ganz besonders bevorzugt im Bereich von 0,080 oder mehr bis 0,110 oder weniger, während Δε vorzugsweise 3,5 oder mehr beträgt, bevorzugt im Bereich von 4,0 oder mehr bis 7,0 oder weniger, stärker bevorzugt im Bereich von 4,5 oder mehr bis 6,0 oder weniger und besonders bevorzugt im Bereich von 5,0 oder mehr bis 5,5 oder weniger liegt.

In dieser Ausführungsform erstreckt sich die nematische Phase der erfindungsgemäßen Medien vorzugsweise mindestens von -20°C oder weniger bis 75°C oder mehr, stärker bevorzugt mindestens von -30°C oder weniger bis 70°C oder mehr, ganz bevorzugt mindestens von -30°C oder weniger bis 75°C oder mehr und insbesondere mindestens von -30°C oder weniger bis 80°C oder mehr.

In einer vierten bevorzugten Ausführungsform der vorliegenden Erfindung liegt das Δn der Flüssigkristallmedien bevorzugt im Bereich von 0,090 oder mehr bis 0,130 oder weniger, stärker bevorzugt im Bereich von 0,100 oder mehr bis 0,120 oder weniger und ganz besonders bevorzugt im Bereich von 0,115 oder mehr bis 0,120 oder weniger, während Δε vorzugsweise 10 oder mehr beträgt und bevorzugt im Bereich von 15 oder mehr bis 22 oder weniger, stärker bevorzugt im Bereich von 16 oder mehr bis 20 oder weniger und besonders bevorzugt im Bereich von 17 oder mehr bis 19 oder weniger liegt und alternativ bevorzugt im Bereich von 10 oder mehr bis 25 oder weniger, stärker bevorzugt im Bereich von 11 oder mehr bis 14 oder weniger und besonders bevorzugt im Bereich von 12 oder mehr bis 13 oder weniger liegt.

In diesen Ausführungsformen erstreckt sich die nematische Phase der erfindungsgemäßen Medien vorzugsweise mindestens von -10°C oder weniger bis 70°C oder mehr, stärker bevorzugt mindestens von -30°C oder weniger bis 75°C oder mehr und insbesondere mindestens von -40°C oder weniger bis 80°C oder mehr.

Bevorzugt werden für IPS-Anzeigen für Fernsehanwendungen Treiber mit Treiberspannungen von ca. 15,6 V oder von ca. 18 V verwendet.

Die Verbindungen der Formeln II und III werden vorzugsweise in einer Konzentration von 2 % bis 60 %, stärker bevorzugt von 3 % bis 35 % und ganz besonders bevorzugt von 4 % bis 30 % der Gesamtmischung verwendet.

Die Verbindungen der Formeln IV und VI werden vorzugsweise in einer Konzentration von 2 % bis 70 %, stärker bevorzugt von 5 % bis 65 %, noch stärker bevorzugt von 10 % bis 60 % und ganz besonders bevorzugt von 10 %, bevorzugt von 15 %, bis 55 % der Gesamtmischung verwendet.

Die Verbindungen der Formel VII werden vorzugsweise in einer Konzentration von 0 % bis 50 %, stärker bevorzugt von 1 % bis 40 %, noch stärker bevorzugt von 3 % bis 30 % und ganz bevorzugt von 5 % bis 20 % der Gesamtmischung verwendet.

Die Verbindungen der Formel VIII werden vorzugsweise in einer Konzentration von 0 % bis 40 %, stärker bevorzugt von 0 % bis 35 % und ganz bevorzugt von 1 % bis 30 % der Gesamtmischung verwendet. Gegebenenfalls können die erfindungsgemäßen Medien weitere Flüssigkristallverbindungen enthalten, um die physikalischen Eigenschaften einzustellen. Solche Verbindungen sind dem Fachmann bekannt. Ihre Konzentration in den Medien gemäß der vorliegenden Erfindung beträgt vorzugsweise 0 % bis 30 %, stärker bevorzugt 0,1 % bis 20 % und ganz bevorzugt 1 % bis 15 %.

Speziell in der zweiten bevorzugten Ausführungsform der vorliegenden Erfindung wie oben genannt enthält das Flüssigkristallmedium vorzugsweise eine oder mehrere Verbindungen der Formel IV, stärker bevorzugt der Formel IV-1, noch stärker bevorzugt ausgewählt aus ihren jeweiligen Unterformeln der Formel CC-n-V und/oder CC-n-Vm, stärker bevorzugt der Formel CC-n-V1 und/ oder CC-n-V und ganz bevorzugt ausgewählt aus der Gruppe der Formeln CC-3-V, CC-4-V, CC-5-V und CC-3-V1. Die Definitionen dieser Abkürzungen (Akronyme) sind unten in Tabelle D angegeben.

Die Konzentration der Verbindung der Formel CC-3-V in den erfindungsgemäßen die Medien beträgt bevorzugt 0 % bis 65 % und besonders bevorzugt 10 % bis 60 %. Sie kann in einer bevorzugten Ausführungsform 50 % bis 65 % betragen, besonders bevorzugt 55 % bis 60%.

Die Flüssigkristallmedien enthalten vorzugsweise insgesamt 50 % bis 100 %, stärker bevorzugt 70 % bis 100 % und ganz bevorzugt 80 % bis 100 % und insbesondere 90 % bis 100 % der Verbindungen der Formeln I, II, III, IV, V, VI und/oder VII, vorzugsweise der Formeln I, II, III, IV und V bzw. VI, vorzugsweise bestehen sie überwiegend daraus und ganz bevorzugt bestehen sie vollständig daraus.

Bezüglich der Verwendung der Verbindungen der Formeln IV und/oder VI, bevorzugt der Formel IV hat die vorliegenden Erfindung drei verschiedene Ausführungsformen. In der ersten dieser drei Ausführungsformen enthalten die Flüssigkristallmischungen wenige bis keine Verbindungen dieser Formeln, die eine oder mehrere Alkenylgruppen tragen (wie z.B. CC-3-V, CC-3-V, PP-1-2V1 und CPP-1-2V1). Vielmehr enthalten die Flüssigkristallmischungen gemäß dieser Ausführungsform vorzugsweise Verbindungen der Formeln IV und/ VI mit einer Alkylendgruppe und einer Alkyl- (wie z.B. CC-n-m, CP-n-m und PGP-nm) oder mit einer Alkylendgruppe und einer Alkoxyendgruppe (wie z.B. CC-n-Om und CP-n-Om). Bevorzugt besteht die Komponente, die die Verbindungen der Formeln IV und VI bilden überwiegend, noch stärker bevorzugt im Wesentlichen und ganz bevorzugt bestehen sie vollständig aus Verbindungen mit einer Alkylendgruppe und einer Alkyl- oder Alkoxyendgruppe.

In der zweiten dieser bevorzugten Ausführungsformen enthalten die Flüssigkristallmischungen eine oder mehrere Verbindungen der Formeln IV und/oder VI, die eine oder mehrere nicht-endständige Alkenylgruppen tragen (wie z.B. CC-3-V1, PP-1-2V1 und CCP-2V-1) aber nur wenige bis keine Verbindungen dieser Formeln, die eine oder mehrere endständige Alkenylgruppen tragen (wie z.B. CC-3-V, CCP-V-1 und PGP-2-2V). Vielmehr enthalten die Flüssigkristallmischungen gemäß dieser Ausführungsform vorzugsweise Verbindungen der Formeln IV und/ VI, die eine oder zwei nicht-endständige Alkenylgruppen tragen und/oder Verbindungen dieser Formeln mit einer Alkylendgruppe und einer Alkyl- oder Alkoxyendgruppe. Bevorzugt besteht die Komponente, die die Verbindungen der Formeln IV und VI bilden überwiegend, noch stärker bevorzugt im Wesentlichen und ganz bevorzugt bestehen sie vollständig aus Verbindungen mit einer oder zwei nicht-endständigen Alkenylgruppen und/oder Verbindungen mit einer Alkylendgruppe und einer Alkyl- oder Alkoxyendgruppe, bevorzugt aus Verbindungen mit einer oder zwei nicht-endständigen Alkenylgruppen. Der Anteil der entsprechenden Verbindungen mit einer oder mehreren nicht-endständigen Alkenylgruppen in den Flüssigkristallmischungen und bevorzugt in dieser Komponente beträgt dann bevorzugt 5 bis 40 %.

In der dritten dieser bevorzugten Ausführungsformen enthalten die Flüssigkristallmischungen, zusätzlich oder alternativ zu den bereits in den ersten beiden bevorzugten Ausführungsformen genannten Verbindungen der Formeln IV und/oder VI, eine oder mehrere Verbindungen dieser Formeln, die eine oder zwei endständige Alkenylgruppen tragen. In dieser Ausführungsform enthalten die Flüssigkristallmischungen vorzugsweise Verbindungen der Formeln IV und/ VI, die eine oder zwei endständige Alkenylgruppen tragen. Bevorzugt besteht die Komponente, die die Verbindungen der Formeln IV und VI bilden überwiegend, noch stärker bevorzugt im Wesentlichen und ganz bevorzugt bestehen sie vollständig aus Verbindungen mit einer oder zwei endständigen Alkenylgruppen. Der Anteil der entsprechenden Verbindungen mit einer oder mehreren endständigen Alkenylgruppen in den Flüssigkristallmischungen und bevorzugt in dieser Komponente beträgt dann bevorzugt 5 % oder mehr, bevorzugt 10 % oder mehr und bevorzugt 70 % oder weniger, bevorzugt 60 % oder weniger.

In der vorliegenden Anmeldung beschreibt der Ausdruck dielektrisch positiv Verbindungen oder Komponenten mit Δε > 3,0, dielektrisch neutral solche mit -1,5 ≤ Δε ≤ 3,0 und dielektrisch negativ solche mit Δε < -1,5. Δε wird bei einer Frequenz von 1 kHz und 20°C bestimmt. Die dielektrische Anisotropie der jeweiligen Verbindung wird aus den Ergebnissen einer Lösung von 10 % der jeweiligen einzelnen Verbindung in einer nematischen Host-Mischung bestimmt. Wenn die Löslichkeit der jeweiligen Verbindung in der Host-Mischung weniger als 10 % beträgt, wird die Konzentration auf 5 % reduziert. Die Kapazitäten der Testmischungen werden sowohl in einer Zelle mit homöotroper als auch mit homogener Orientierung bestimmt. Die Schichtdicke beträgt bei beiden Zelltypen ca. 20 µm. Die angelegte Spannung ist eine Rechteckwelle mit einer Frequenz von 1 kHz und einem Effektivwert von typischerweise 0,5 V bis 1,0 V, wird jedoch stets so ausgewählt, dass sie unterhalb der kapazitiven Schwelle für die jeweilige Testmischung liegt.

Δε ist als (ε_{∥} - ε_{⊥}) definiert, während ε_{Drchschn.} (ε_{∥} + 2 ε_{⊥}) / 3 ist.

Als Host-Mischung wird für dielektrisch positive Verbindungen die Mischung ZLI-4792 und für dielektrisch neutrale sowie für dielektrisch negative Verbindungen die Mischung ZLI-3086 verwendet, beide von Merck KGaA, Deutschland. Die absoluten Werte der dielektrischen Konstanten der Verbindungen werden aus der Änderung der jeweiligen Werte der Host-Mischung bei Zugabe der interessierenden Verbindungen bestimmt. Die Werte werden auf eine Konzentration der interessierenden Verbindungen von 100 % extrapoliert.

Komponenten, die bei der Messtemperatur von 20 °C eine nematische Phase aufweisen, werden als solche gemessen, alle anderen werden wie Verbindungen behandelt.

Der Ausdruck Schwellenspannung (Vₜₕ) bezeichnet in der vorliegenden Anmeldung die optische Schwelle und ist für 10 % relativen Kontrast (V₁₀) angegeben, der Ausdruck Sättigungsspannung bezeichnet die optische Sättigung und ist für 90 % relativen Kontrast (V₉₀) angegeben, in beiden Fällen, soweit nicht ausdrücklich etwas anderes angegeben ist. Die kapazitive Schwellenspannung (V₀), auch Freedericks-Schwelle V_{Fr} genannt, wird nur verwendet, wenn dies ausdrücklich genannt ist.

Die in dieser Anmeldung angegebenen Parameterbereiche schließen sämtlich die Grenzwerte ein, wenn nicht ausdrücklich etwas anderes angegeben ist.

Die unterschiedlichen für verschiedene Bereiche von Eigenschaften angegebenen oberen und unteren Grenzwerte ergeben in Kombination miteinander zusätzliche bevorzugte Bereiche.

In der gesamten Anmeldung gelten, wenn nicht ausdrücklich anders angegeben, die folgenden Bedingungen und Definitionen. Alle Konzentrationen sind in Massenprozent angegeben und beziehen sich jeweils auf die Gesamtmischung, alle Temperaturen und alle Temperaturunterschiede sind in Grad Celsius bzw. Differenzgrad angegeben. Alle physikalischen Eigenschaften werden nach "Merck Liquid Crystals, Physical Properties of Liquid Crystals", Stand Nov. 1997, Merck KGaA, Deutschland, bestimmt und sind für eine Temperatur von 20 °C aufgeführt, wenn nicht ausdrücklich anders angegeben. Die optische Anisotropie (Δn) wird bei einer Wellenlänge von 589,3 nm bestimmt. Die dielektrische Anisotropie (Δε) wird bei einer Frequenz von 1 kHz bestimmt. Die Schwellenspannungen sowie alle anderen elektrooptischen Eigenschaften werden mit bei Merck KGaA, Deutschland, hergestellten Testzellen bestimmt. Die Testzellen für die Bestimmung von Δε besitzen eine Schichtdicke von circa 20 µm. Bei der Elektrode handelt es sich um eine kreisförmige ITO-Elektrode mit einer Fläche von 1,13 cm² und einem Schutzring. Die Ausrichtungsschichten sind SE-1211 von Nissan Chemicals, Japan, für homöotrope Ausrichtung (ε_{∥}) und Polyimid AL-1054 von Japan Synthetic Rubber, Japan, für homogene Ausrichtung (ε_{⊥}). Die Bestimmung der Kapazitäten erfolgt mit einem Frequenzgang-Analysegerät Solatron 1260 unter Verwendung einer Sinuswelle mit einer Spannung von 0,3 Vᵣₘₛ. Als Licht wird bei den elektrooptischen Messungen weißes Licht verwendet. Dabei wird ein Aufbau mit einem im Handel erhältlichen Gerät DMS der Fa. Autronic-Melchers, Germany verwendet. Die charakteristischen Spannungen wurden unter senkrechter Beobachtung bestimmt. Die Schwellenspannung (V₁₀), "Mittgrau-Spannung" (V₅₀) und Sättigungsspannung (V₉₀) wurden für 10 %, 50 % bzw. 90 % relativen Kontrast bestimmt.

Die Flüssigkristallmischungen und flüssigkristallinen Medien gemäß der vorliegenden Erfindung können beispielsweise einen oder mehrere chirale Dotierstoffe, vorzugsweise ausgewählt aus der Gruppe bestehend aus Verbindungen der nachfolgenden Tabelle F, in den üblichen Konzentrationen enthalten. Die Gesamtkonzentration dieser chiralen Dotierstoffe liegt im Bereich von 0 % bis 10 %, vorzugsweise 0,1 % bis 6 %, bezogen auf die Gesamtmischung. Die Konzentrationen der einzelnen verwendeten Verbindungen liegen vorzugsweise jeweils im Bereich von 0,1 % bis 3 %. Die Konzentration dieser und ähnlicher Zusatzstoffe wird bei der Angabe der Werte und Konzentrationsbereiche der Flüssigkristallkomponenten und -verbindungen der Flüssigkristallmedien in dieser Anmeldung nicht berücksichtigt.

Ferner können den flüssigkristallinen Medien 0 bis 15%, vorzugsweise 0 bis 10%, eines oder mehrere Additive ausgewählt aus der Gruppe enthaltend pleochroitische Farbstoffe, Nanopartikel, Leitsalze, Komplexsalze und Substanzen zur Veränderung der dielektrischen Anisotropie, der Viskosität und/oder der Orientierung der nematischen Phasen zugesetzt werden. Geeignete und bevorzugte Leitsalze sind beispielsweise Ethyldimethyldodecyl-ammonium-4-hexoxybenzoat, Tetrabutylammoniumtetraphenylborat oder Komplexsalze von Kronenethern (vgl. z.B. Haller et al., Mol. Cryst. Liq. Cryst. 24, 249-258, 1973). Derartige Substanzen sind z.B. in DE-A-22 09 127, DE-A-22 40 864, DE-A-23 21 632, DE-A-23 38 281, DE-A-24 50 088, DE-A-26 37 430 und DE-A-28 53 728 beschrieben.

Die erfindungsgemäßen Flüssigkristallmischungen bestehen aus mehreren Verbindungen, vorzugsweise aus 3 bis 30, stärker bevorzugt aus 4 bis 20undn bei Flüssigkristallmischungen die Alkenylverbindungen enthalten, ganz bevorzugt aus 4 bis 16 Verbindungen. Diese Verbindungen werden auf herkömmliche Weise gemischt. In der Regel wird die gewünschte Menge der in der geringeren Menge verwendeten Verbindung in der in der größeren Menge verwendeten Verbindung gelöst. Liegt die Temperatur über dem Klärpunkt der in der höheren Konzentration verwendeten Verbindung, ist die Vervollständigung des Lösungsvorgangs besonders leicht zu beobachten. Es ist jedoch auch möglich, die Medien auf anderen üblichen Wegen, beispielsweise unter Verwendung von so genannten Vormischungen, bei denen es sich z.B. um homologe oder eutektische Mischungen von Verbindungen handeln kann, oder unter Verwendung von so genannten "Multi-Bottle"-Systemen, deren Bestandteile selbst gebrauchsfertige Mischungen sind, herzustellen.

Durch Zugabe geeigneter Zusatzstoffe können die Flüssigkristallmedien gemäß der vorliegenden Erfindung so modifiziert werden, dass sie in allen bekannten Arten von Flüssigkristallanzeigen verwendbar sind, entweder durch Verwendung der Flüssigkristallmedien als solcher, wie TN-, TN-AMD-, ECB-AMD-, VAN-AMD-, IPS-AMD-, FFS-AMD-, Posi-VA-LCDs oder in Verbundsystemen, wie PDLC, NCAP, PN LCDs und speziell in PSA-IPS-, PSA-FFS- und PSA-Posi-VA-LCDs.

Die polymerisierbaren Verbindungen werden bevorzugt im Display durch Bestrahlung mit UV-Strahlung für eine vorbestimmte Zeit polymerisiert. In einer bevorzugten Ausführungsform wird dabei eine elektrische Spannung an das Display angelegt. Die angelegte Spannung ist bevorzugt eine Wechselspannung (typischer Weise mit 1 kHz), bevorzugt im Bereich von 0,1 V bis 10 V, besonders bevorzugt im Bereich von 0,5 V bis 5 V. In einer besonders bevorzugten Ausführungsform ist die angelegte Spannung niedriger als die Schwellenspannung (V₁₀) der Flüssigkristallmischung und ganz besonders bevorzugt wird während der Polymerisation keine Spannung angelegt. Bei den Beispielen wird, sofern nicht explizit etwas anders angegeben ist, eine Quecksilberdampflampe mit 50 mW/cm² verwendet. Die Intensität wird mit einem Standard-UV-Meter (Modell Ushio UNI-Meter) mit einem 365 nm Bandpassfilter gemessen.

Alle Temperaturen, wie z.B. der Schmelzpunkt T(K,N) bzw. T(K,S), der Übergang von der smektischen (S) zur nematischen (N) Phase T(S,N) und der Klärpunkt T (N,I) der Flüssigkristalle sind in Grad Celsius angegeben. Alle Temperaturdifferenzen sind in Differenzgraden angegeben.

In der vorliegenden Erfindung und insbesondere in den folgenden Beispielen sind die Strukturen der mesogenen Verbindungen durch Abkürzungen angegeben, die auch als Akronyme bezeichnet werden. In diesen Akronymen sind die chemischen Formeln unter Verwendung der folgenden Tabellen A bis C wie folgt abgekürzt. Alle Gruppen CₙH₂ₙ₊₁, CₘH₂ₘ₊₁ und CₗH₂ₗ+₁ bzw. CₙH₂ₙ₋₁, CₘH₂ₘ₋₁ und CₗH₂ₗ₋₁ bedeuten geradkettiges Alkyl bzw. Alkenyl, vorzugsweise 1-*E*-Alkenyl, jeweils mit n, m bzw. I C-Atomen. In der Tabelle A werden die für die Ringelemente der Kernstrukturen der Verbindungen verwendeten Codes aufgeführt, während in der Tabelle B die Verknüpfungsgruppen gezeigt sind. Tabelle C gibt die Bedeutungen der Codes für die Endgruppen der linken bzw. rechten Seite. In Tabelle D sind Beispielstrukturen von Verbindungen mit ihren jeweiligen Abkürzungen zusammengestellt.

**Tabelle A: Ringelemente**

| | | | |
|---|---|---|---|
| **C** | 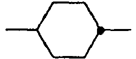 | | |
| **D** | 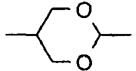 | **DI** | 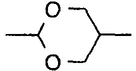 |
| **A** | 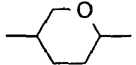 | **AI** | 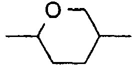 |
| **P** | 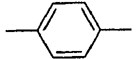 | | |
| **G** | 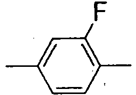 | **GI** | 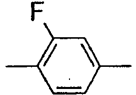 |
| **U** | 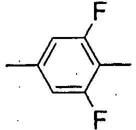 | **UI** | 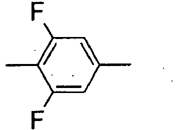 |
| **Y** | 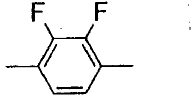 | | |
| **M** | 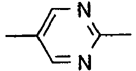 | **MI** | 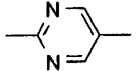 |
| **N** | 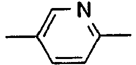 | **NI** | 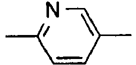 |
| **Np** | 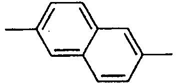 | | |
| **N3f** | 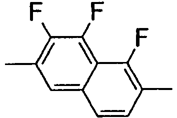 | **N3fl** | 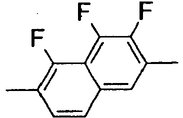 |
| **tH** | 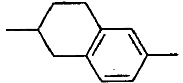 | **tHI** | 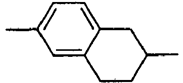 |
| **tH2f** | 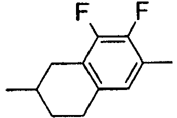 | **tH2fl** | 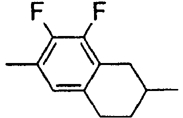 |
| **dH** | 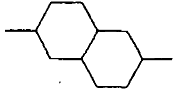 | | |
| **K** | 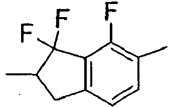 | **KI** | 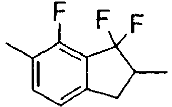 |
| **L** | 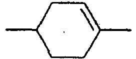 | **LI** | 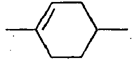 |
| **F** | 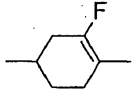 | **FI** | 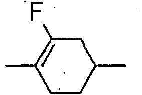 |

**Tabelle B: Verknüpfungsgruppen**

| | | | |
|---|---|---|---|
| **E** | -CH₂CH₂- | **Z** | -CO-O- |
| **V** | -CH=CH- | **ZI** | -O-CO- |
| **X** | -CF=CH- | **O** | -CH₂-O- |
| **XI** | -CH=CF- | **OI** | -O-CH₂- |
| **B** | -CF=CF- | **Q** | -CF₂-O- |
| **T** | -C=C- | **QI** | -O-CF₂- |
| **W** | -CF₂CF₂- | **T** | -C=C- |

**Tabelle C: Endgruppen**

| **Linke Seite** | **Rechte Seite,** | | |
|---|---|---|---|
| **Verwendung allein** | | | |
| **-n-** | CₙH₂ₙ₊₁- | **-n** | --CₙH₂ₙ₊₁ |
| **-nO-** | CₙH₂ₙ₊₁-O- | **-nO** | -O-CₙH₂ₙ₊₁ |
| **-V-** | CH₂=CH- | **-V** | -CH=CH₂ |
| **-nV-** | CₙH₂ₙ₊₁-CH=CH- | **-nV** | -CₙH₂ₙ-CH=CH₂ |
| **-Vn-** | CH₂=CH- CₙH₂ₙ₊₁- | **-Vn** | -CH=CH-CₙH₂ₙ₊₁ |
| **-nVm-** | CₙH₂ₙ₊₁-CH=CH-CₘH₂ₘ- | **-nVm** | -CₙH₂ₙ-CH=CH-CₘH₂ₘ₊₁ |
| **-N-** | N=C- | **-N** | -C≡N |
| **-S-** | S=C=N- | **-S** | -N=C=S |
| **-F-** | F- | **-F** | **-**F |
| **-CL-** | Cl- | **-CL** | -Cl |
| **-M-** | CFH₂- | **-M** | -CFH₂ |
| **-D-** | CF₂H- | **-D** | -CF₂H |
| **-T-** | CF₃- | **-T** | -CF₃ |
| **-MO-** | CFH₂O- | **-OM** | -OCFH₂ |
| **-DO-** | CF₂HO- | **-OD** | -OCF₂H |
| **-TO-** | CF₃O- | **-OT** | -OCF₃ |
| **-OXF-/-FXO-** | CF₂=CH-O- | **-OXF** | -O-CH=CF₂ |
| **-A-** | H-C=C- | **-A** | -C≡C-H |
| **-nA-** | CₙH₂ₙ₊₁-C≡C- | **-An** | -C≡C-CₙH₂ₙ₊₁ |
| **-NA-** | N=C-C=C- | **-AN** | -C≡C-C≡N |

| | **Verwendung zusammen mit anderen** | | |
|---|---|---|---|
| **-...A...-** | -C≡C- | **-...A...** | -C≡C- |
| **-...V...-** | CH=CH- | **-...v...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

worin n und m jeweils ganze Zahlen bedeuten und die drei Punkte "..." Platzhalter für andere Abkürzungen aus dieser Tabelle sind.

In der folgenden Tabelle werden Beispielstrukturen zusammen mit ihren jeweiligen Abkürzungen angegeben. Diese werden gezeigt, um die Bedeutung der Regeln für die Abkürzungen zu demonstrieren. Weiterhin stellen sie Verbindungen dar, die vorzugsweise verwendet werden.

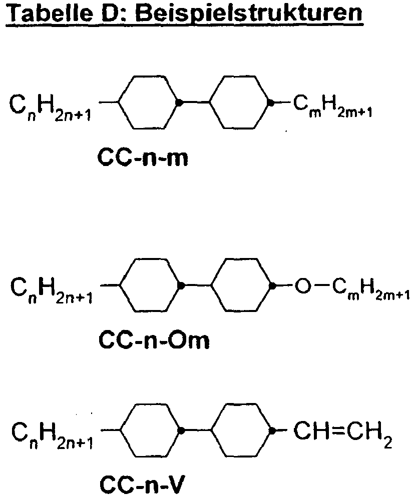

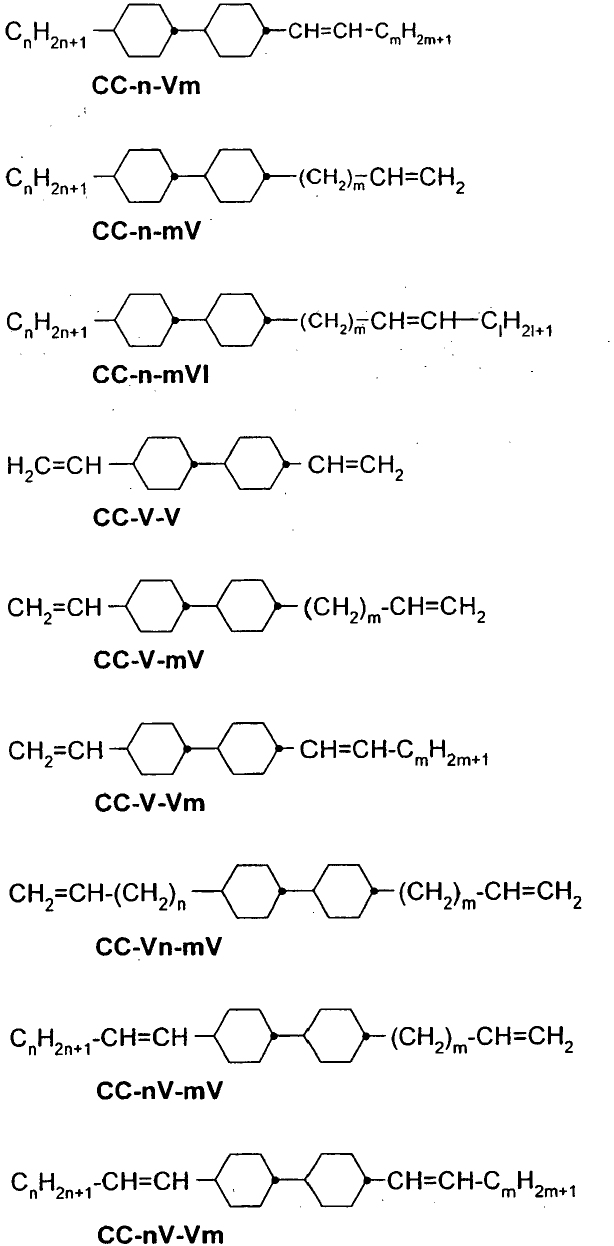

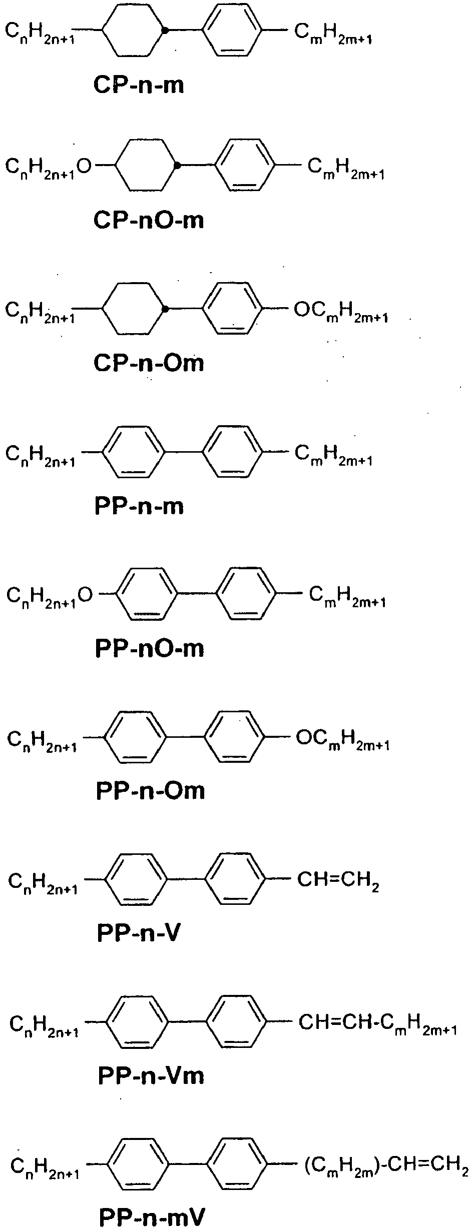

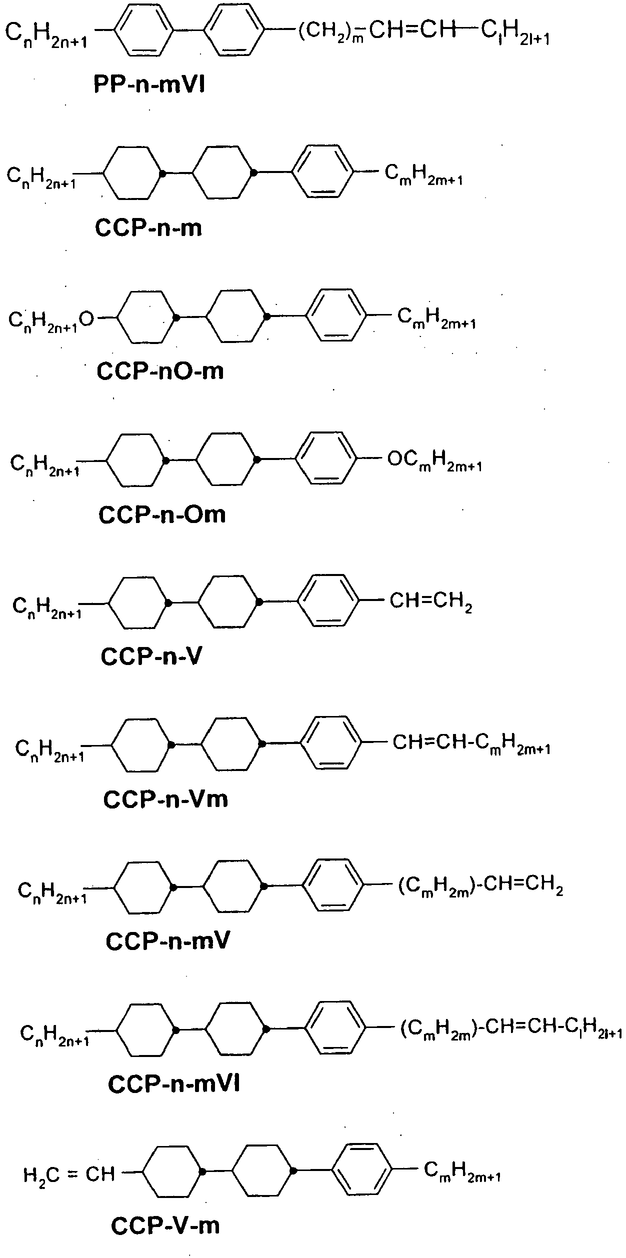

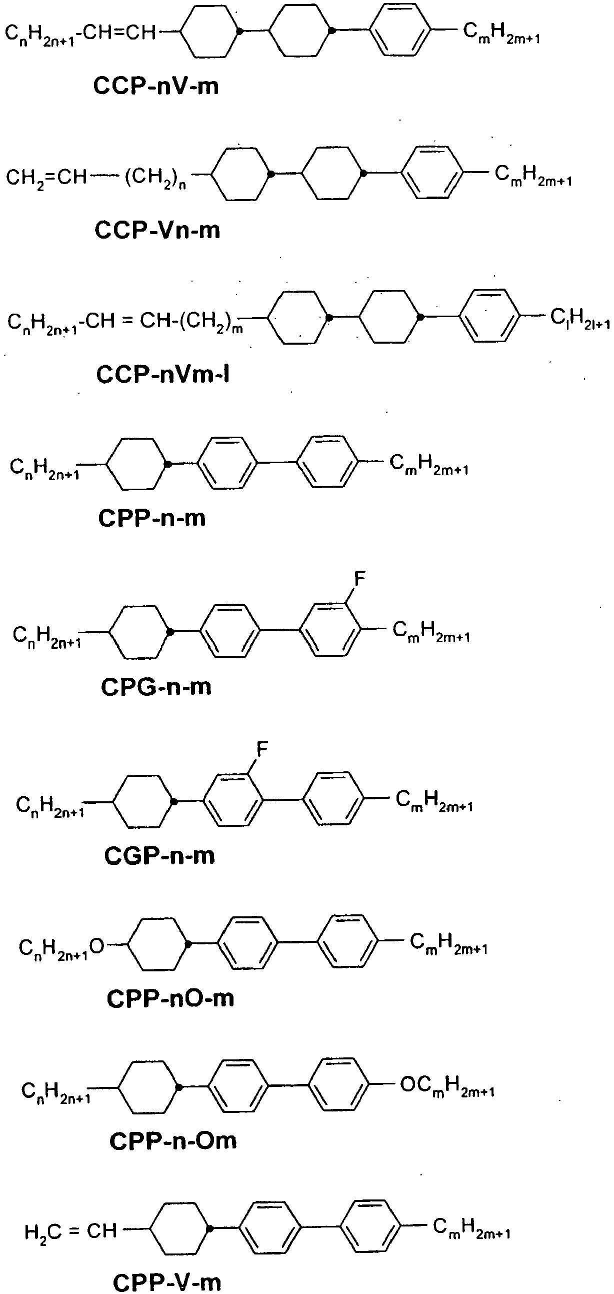

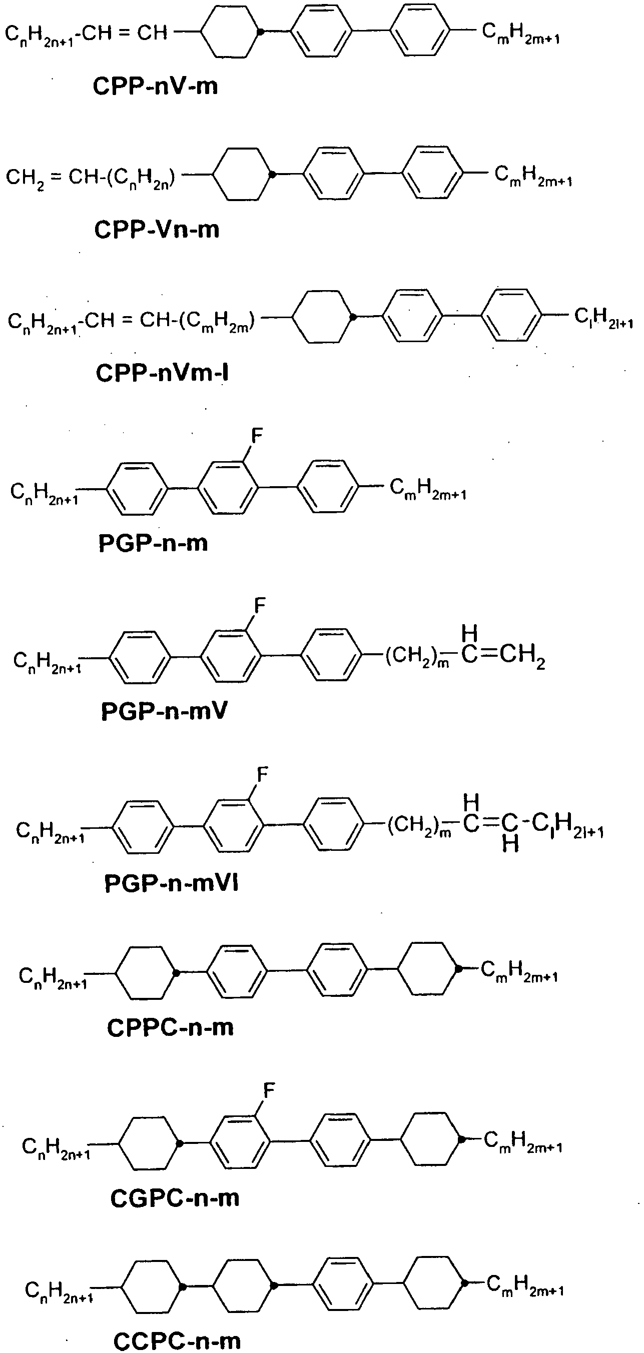

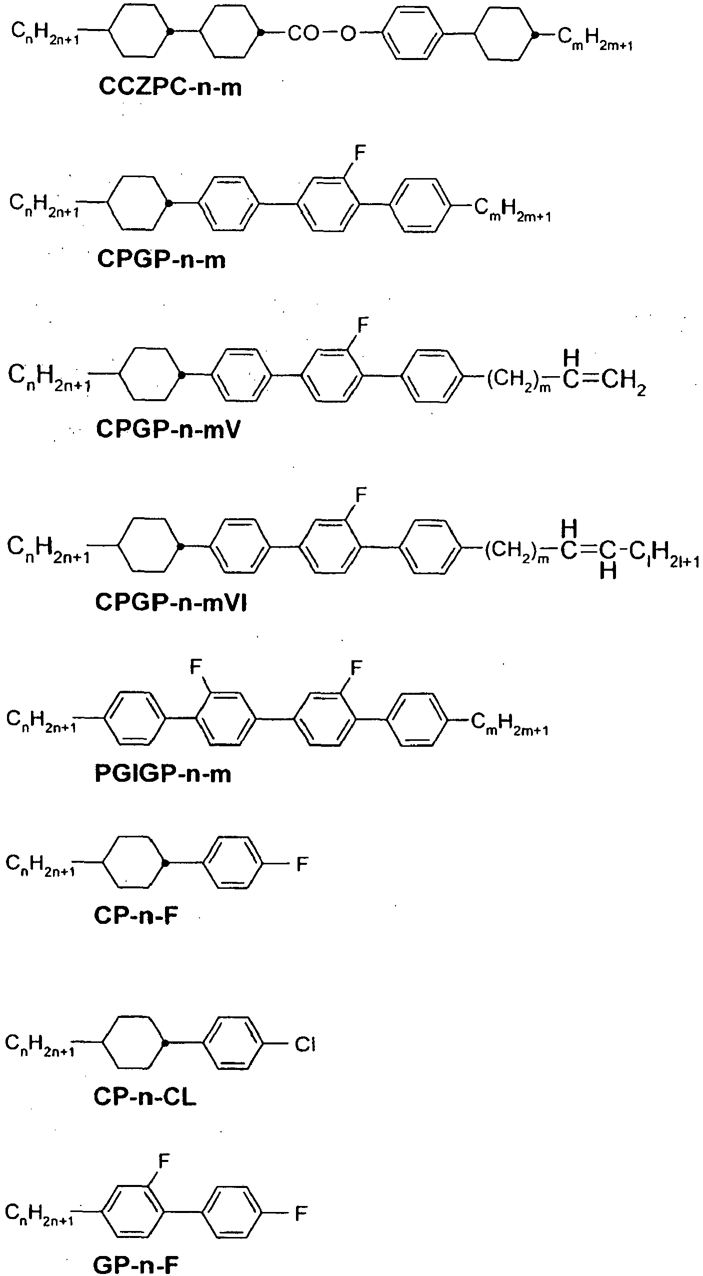

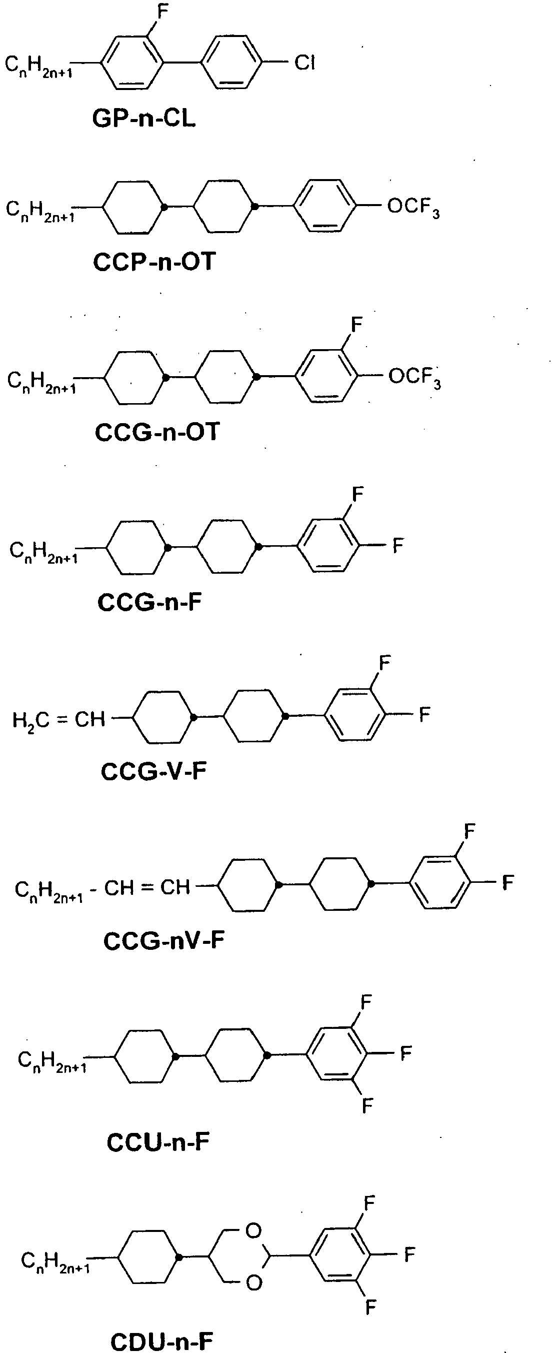

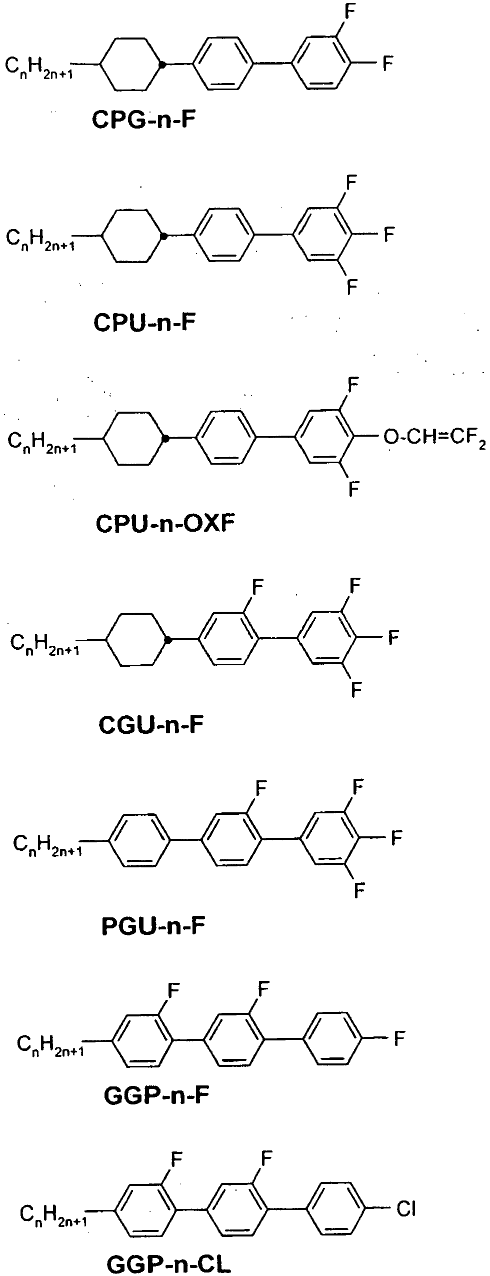

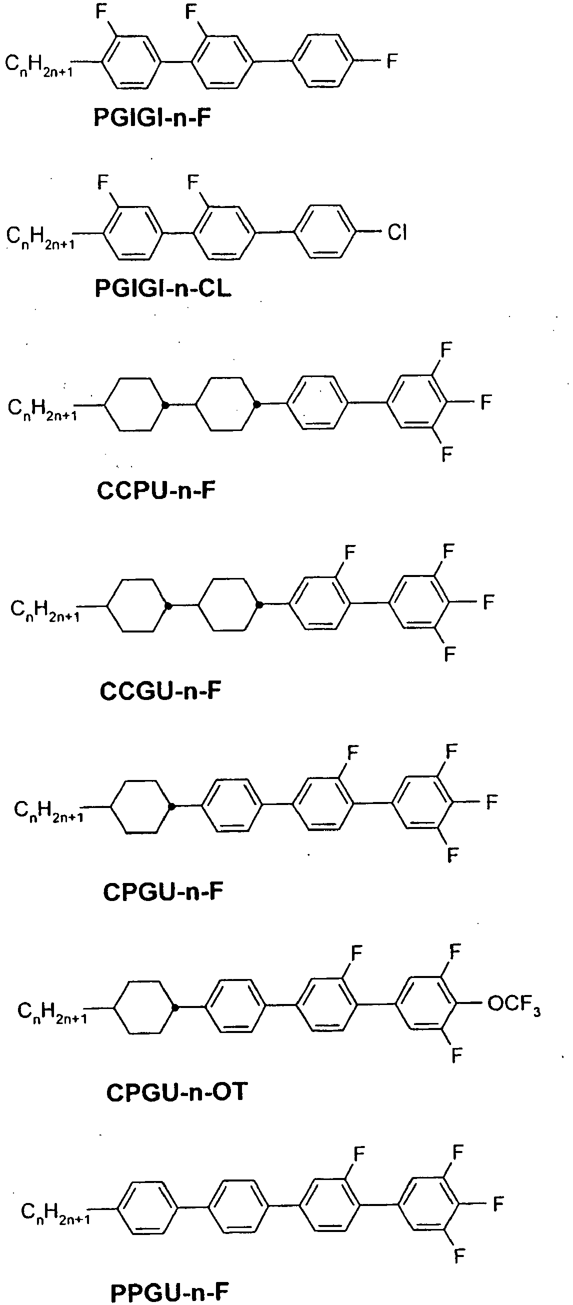

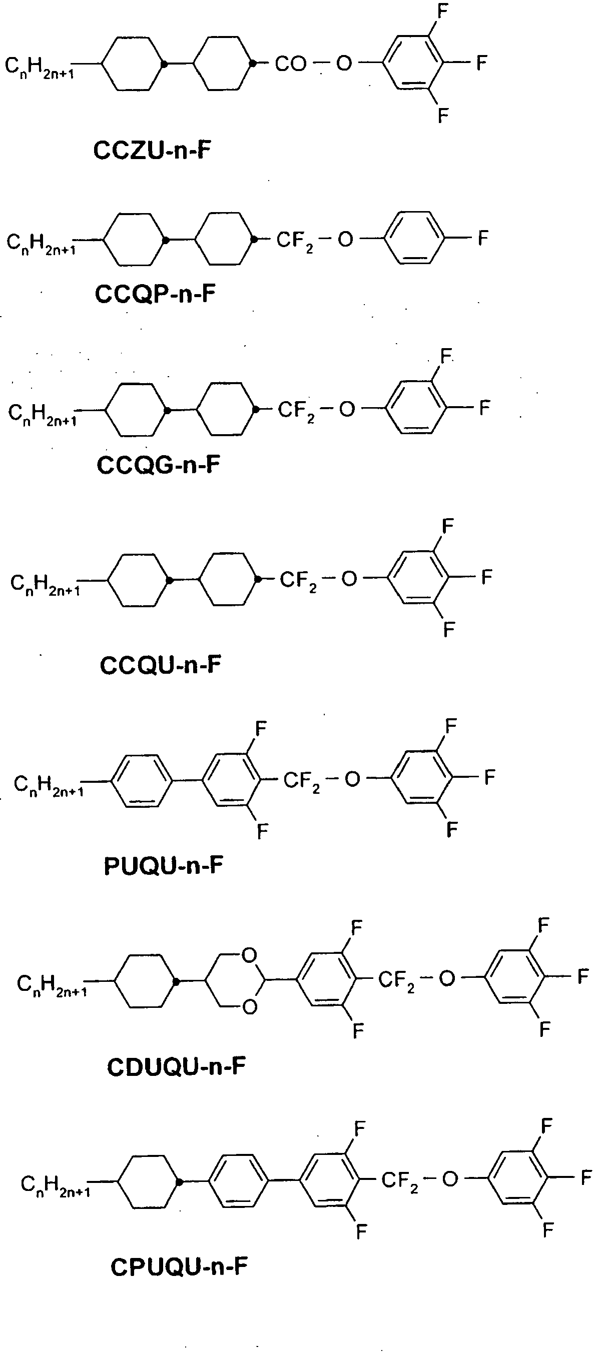

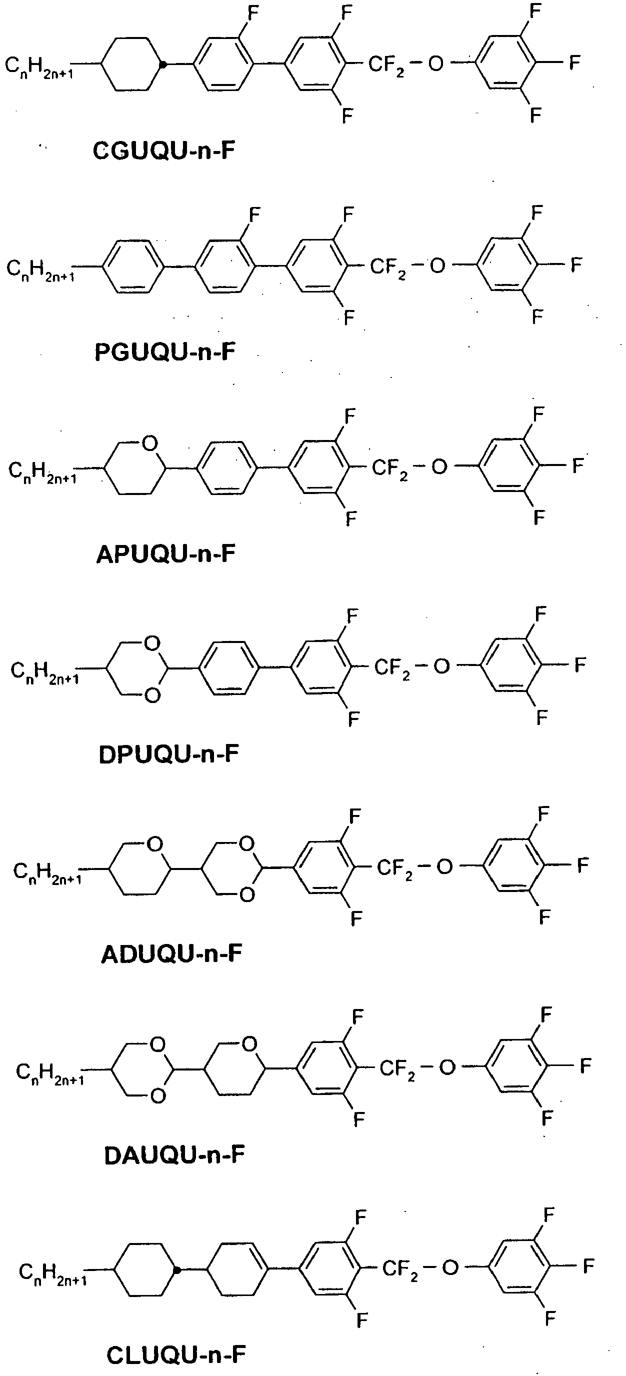

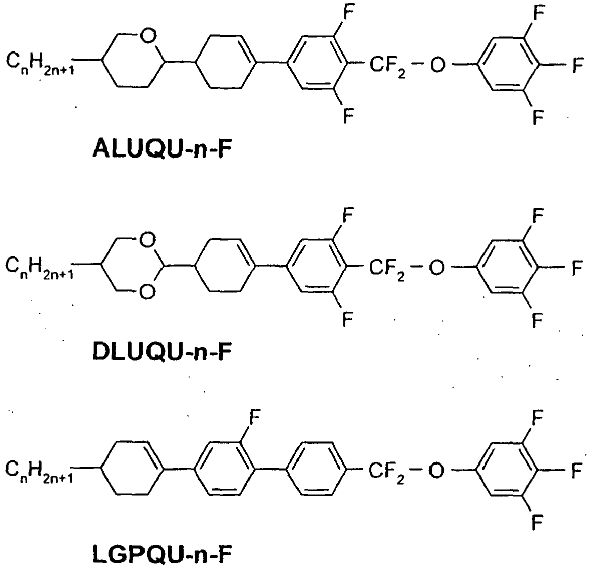

In der folgenden Tabelle, Tabelle E, sind Beispielverbindungen zusammengestellt, die in den mesogenen Medien gemäß der vorliegenden Erfindung als Stabilisator verwendet werden können.

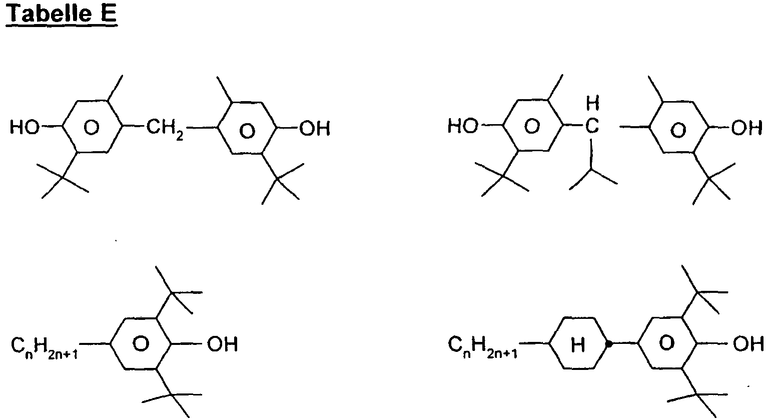

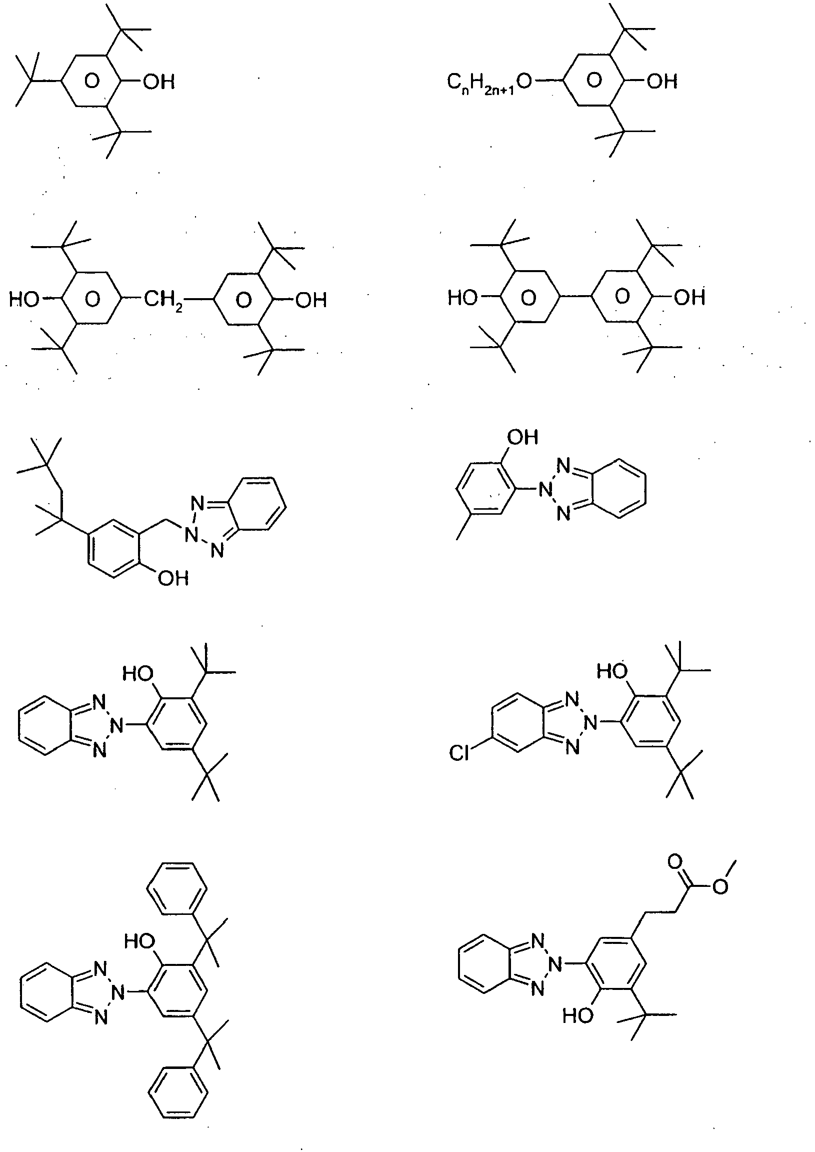

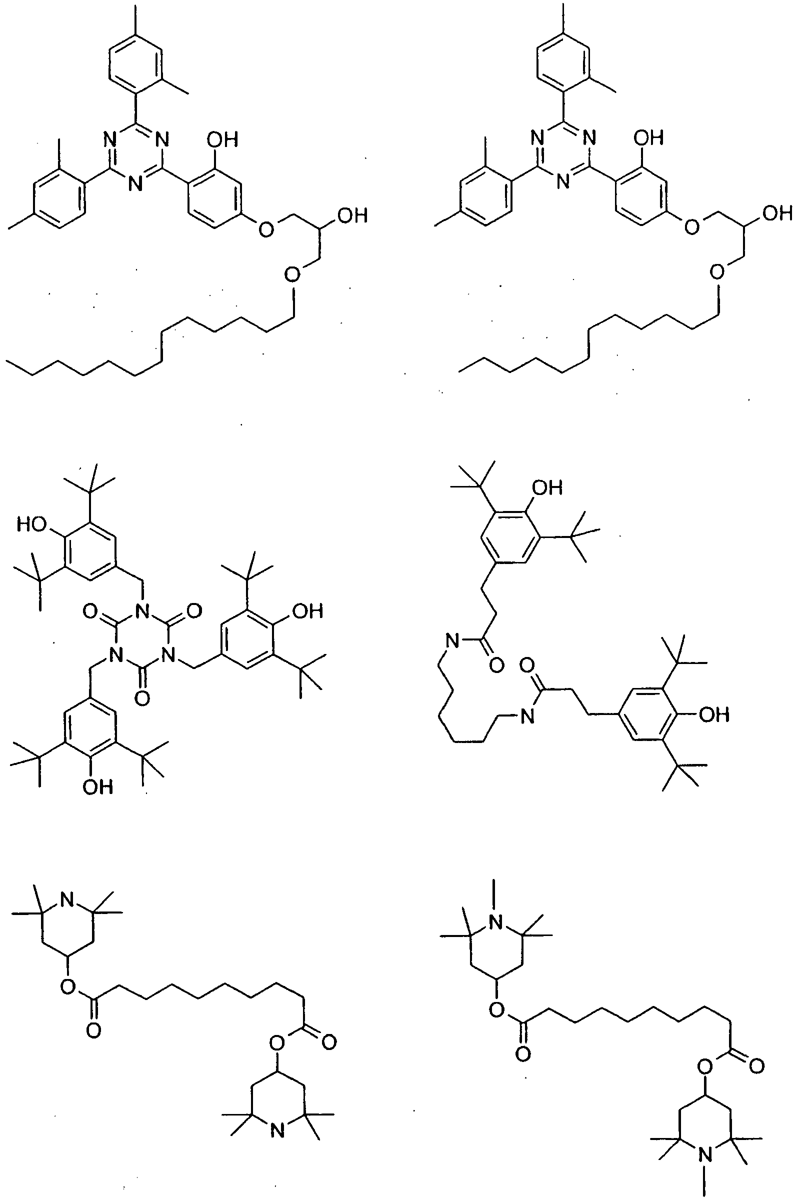

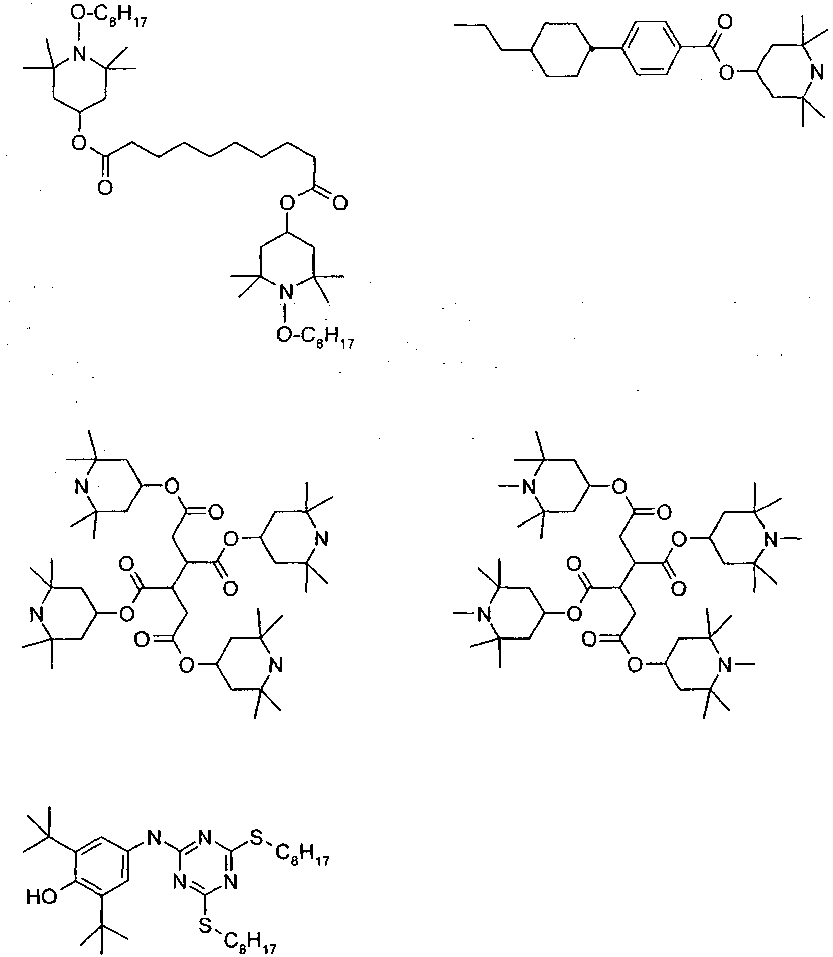

In einer bevorzugten Ausführungsform der vorliegenden Erfindung enthalten die mesogenen Medien eine oder mehrere Verbindungen ausgewählt aus der Gruppe der Verbindungen der Tabelle E.

In der folgenden Tabelle, Tabelle F, sind Beispielverbindungen zusammengestellt, die in den mesogenen Medien gemäß der vorliegenden Erfindung vorzugsweise als chirale Dotierstoffe verwendet werden können.

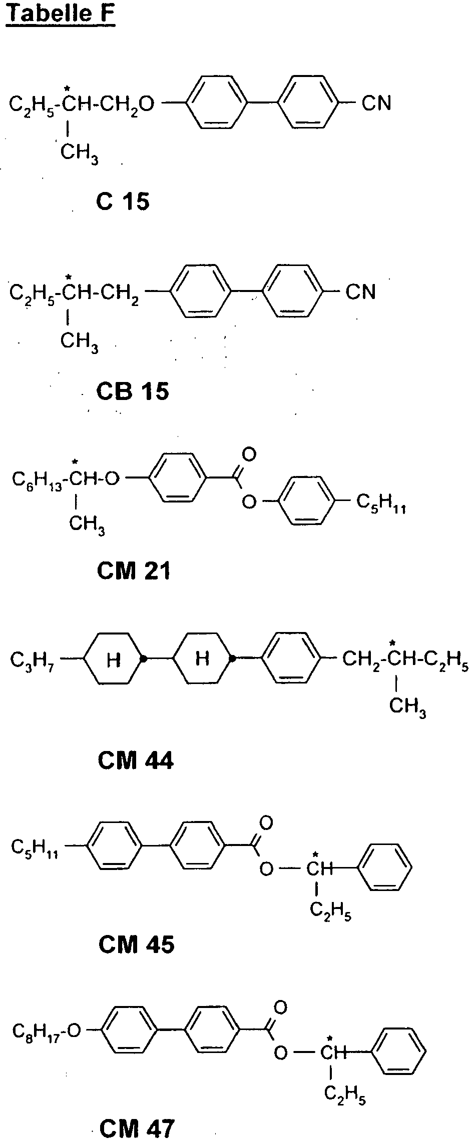

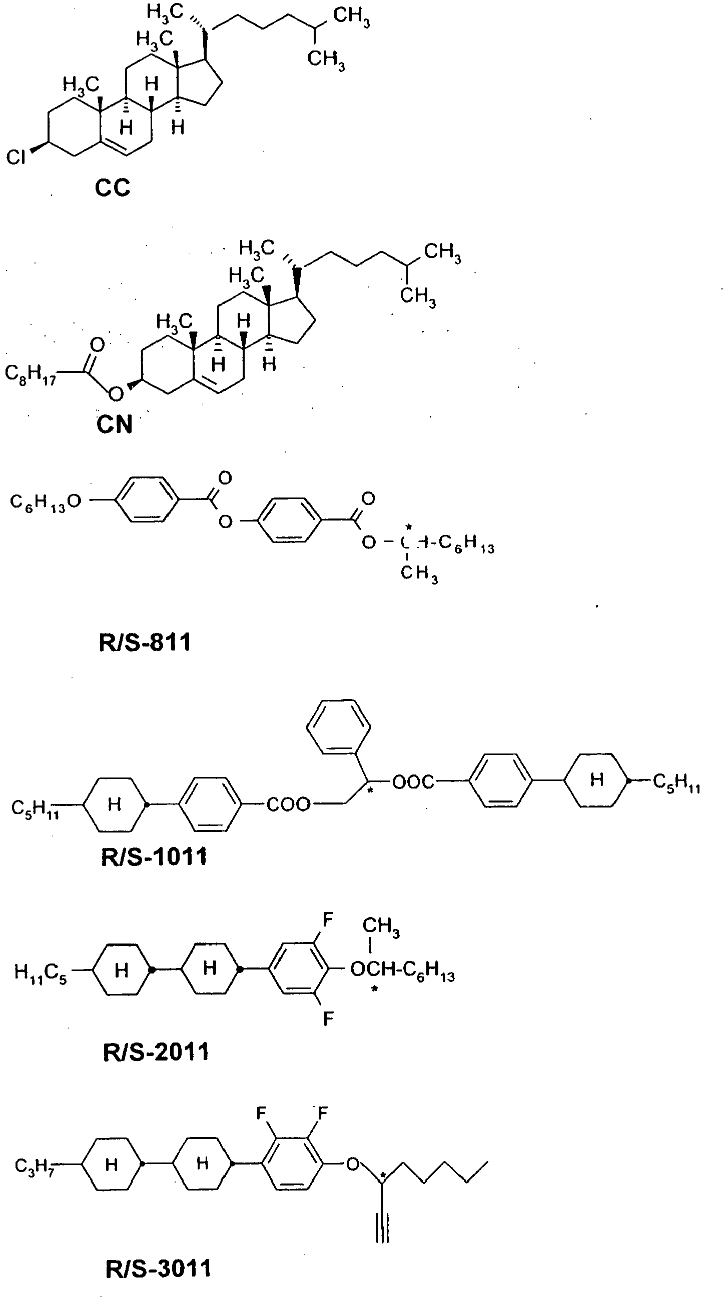

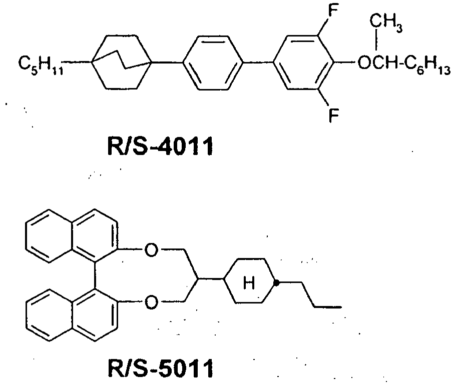

In einer bevorzugten Ausführungsform der vorliegenden Erfindung enthalten die mesogenen Medien eine oder mehrere Verbindungen ausgewählt aus der Gruppe der Verbindungen der Tabelle F.

In der folgenden Tabelle, Tabelle G, sind Beispielverbindungen zusammengestellt, die in den mesogenen Medien gemäß der vorliegenden Erfindung vorzugsweise als reaktive, mesogene Verbindungen verwendet werden können.

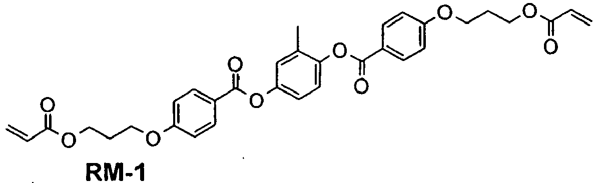

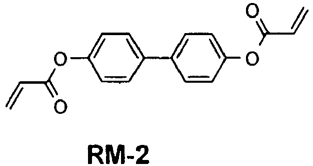

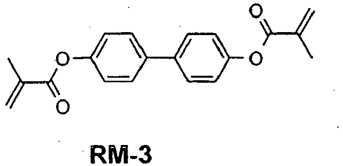

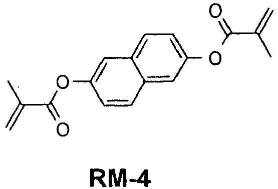

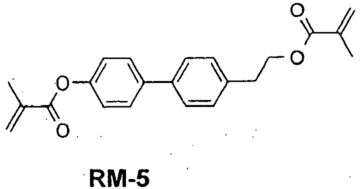

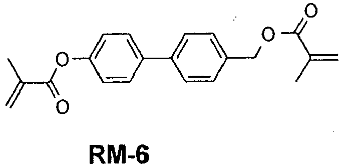

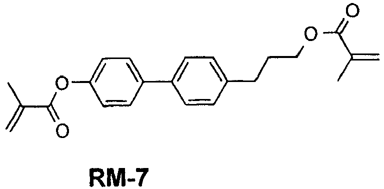

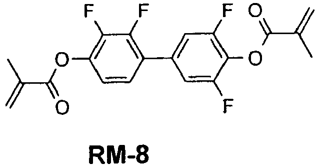

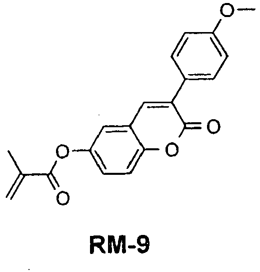

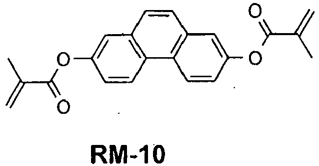

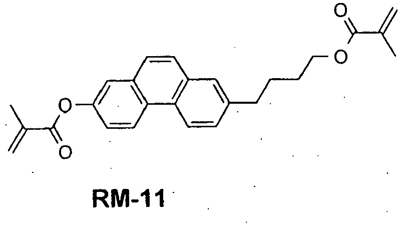

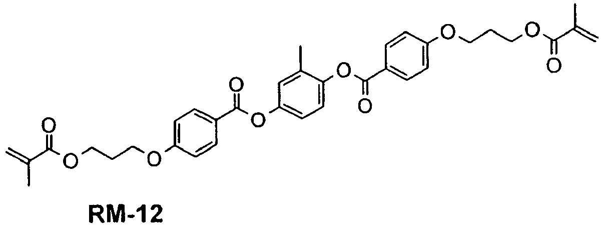

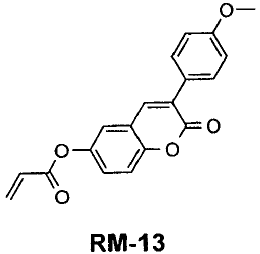

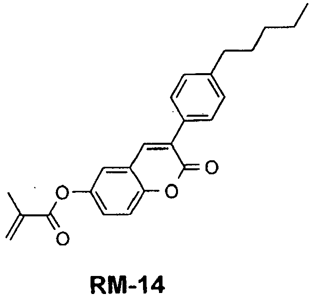

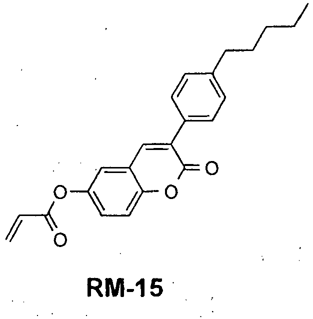

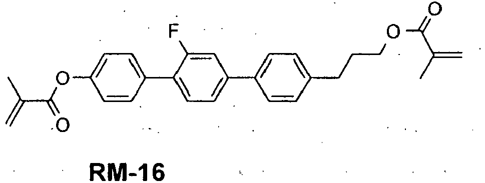

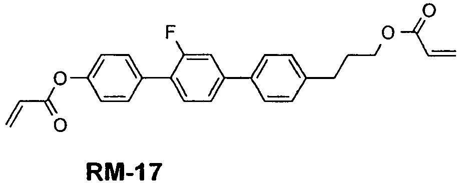

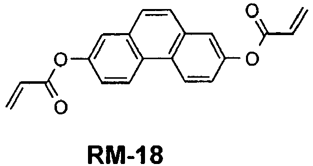

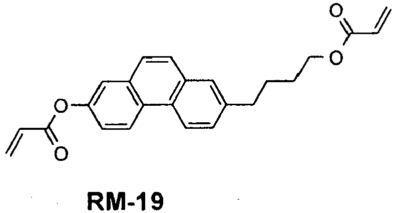

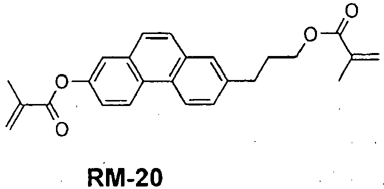

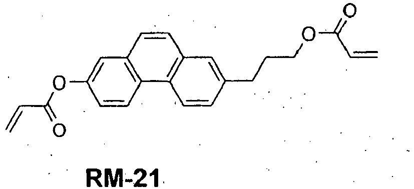

In einer bevorzugten Ausführungsform der vorliegenden Erfindung enthalten die mesogenen Medien eine oder mehrere Verbindungen ausgewählt aus der Gruppe der Verbindungen der Tabelle G.

Vorzugsweise enthalten die mesogenen Medien gemäß der vorliegenden Anmeldung zwei oder mehr, vorzugsweise vier oder mehr, Verbindungen ausgewählt aus der Gruppe bestehend aus den Verbindungen der obigen Tabellen.

Die Flüssigkristallmedien gemäß der vorliegenden Erfindung enthalten vorzugsweise
- sieben oder mehr, vorzugsweise acht oder mehr Verbindungen, vorzugsweise Verbindungen mit drei oder mehr, vorzugsweise vier oder mehr unterschiedlichen Formeln, ausgewählt aus der Gruppe der Verbindungen der Tabelle D und/oder
- eine oder mehr, vorzugsweise zwei oder mehr, Verbindungen mit unterschiedlichen Formeln, ausgewählt aus der Gruppe der Verbindungen der Tabelle G.

### Beispiele

Die folgenden Beispiele erläutern die vorliegende Erfindung, ohne sie in irgendeiner Weise zu begrenzen. Sie zeigen dem Fachmann jedoch bevorzugte Mischungskonzepte mit bevorzugt einzusetzenden Verbindungen und deren jeweiligen Konzentrationen sowie deren Kombinationen miteinander.

Aus den physikalischen Eigenschaften wird dem Fachmann deutlich, welche Eigenschaften zu erzielen sind und in welchen Bereichen sie modifizierbar sind. Insbesondere ist also die Kombination der verschiedenen Eigenschaften, die vorzugsweise erreicht werden können, für den Fachmann illustriert.

### Beispiel 1

Es wird eine Flüssigkristallmischung (A) mit der Zusammensetzung und den Eigenschaften wie in der folgenden Tabelle angegeben hergestellt.

**Tabelle 1: Zusammensetzung und Eigenschaften der Mischung A**

| Zusammensetzung | | | Physikalische Eigenschaften | | |
|---|---|---|---|---|---|
| Verbindung | | | T(N,I) | = 80,0 | °C |

| Nr. | Abkürzung | c/% | | | |
|---|---|---|---|---|---|
| 1 | CCQU-2-F | 12,0 | nₑ(20 °C, 589,3 nm) | = 1,5533 | |
| 2 | CCQU-3-F | 13,0 | Δn (20 °C, 589,3 nm) | = 0,0788 | |
| 3 | CCQU-5-F | 10,0 | | | |
| 4 | PUQU-3-F | 5,0 | ε\|\| (20 °C, 1 kHz) | = 11,1 | |
| 5 | APUQU-2-F | 7,0 | Δε (20°C, 1 kHz) | = 7,8 | |
| 6 | CCGU-3-F | 5,0 | | | |
| 7 | CP-3-CL | 3,0 | γ₁ (20 °C) | = 93 | mPa·s |
| 8 | CP-3-O1 | 8,0 | | | |
| 9 | CC-2-3 | 20,0 | k₁ (20 °C) | = 13,0 | pN |
| 10 | CC-3-4 | 4,0 | k₃/k₁(20 °C) | = 0,99 | |
| 11 | CCP-3-1 | 7,0 | | | |
| 12 | CCP-3-3 | 6,0 | V₀ (20 °C) | = 1,37 | V |
| Σ | | 100,0 | | | |

Diese Mischung eignet sich sehr gut für Anzeigen im IPS-Modus. Die Mischung wird in drei Teile geteilt. Der erste Teil wird direkt in eine IPS-Zelle gefüllt und untersucht. Je einer der beiden weiteren Teile wird mit 0,5 % bzw. 1,0 % des reaktiven Mesogens RM-1 der Formel 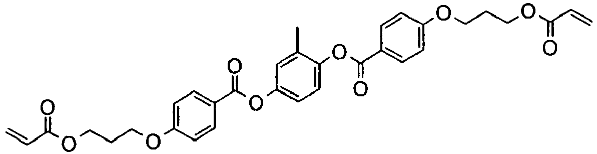 versetzt, in IPS-Zellen gefüllt und das reaktive Mesogen durch UV-Strahlung polymerisiert. Es wird kein Initiator verwendet. Hier beträgt die Intensität abweichend von den Standardbedingungen 45 mW/cm². Dabei werden jeweils drei Bestrahlungszeiten von 2, 4 bzw. 6 Minuten verwendet. Anschließend werden die Zellen untersucht.

**Tabelle 2: Eigenschaften der mit 0,5 % RM-1 stabilisierten Mischungen A**

| | | | | |
|---|---|---|---|---|
| Beispiel | 1.1.0 | 1.1.1 | 1.1.2 | 1.1.3 |
| c(RM-1)/% | 0,5 | | | |
| t(UV) /min | 0 | 2 | 4 | 6 |

| Eigenschaft | | | | |
|---|---|---|---|---|
| V₁₀ /V | 2,51 | 2,56 | 2,60 | 2,62 |
| V_{op.} /V | 5,86 | 6,05 | 6,23 | 6,28 |
| tₒₙ /ms | 21,1 | 21,5 | 21,5 | 21,4 |
| t_{off} /ms | 40,5 | 38,0 | 35,5 | 33,6 |
| tₛᵤₘ /ms | 61,6 | 59,0 | 57,0 | 55,0 |

**Tabelle 3: Eigenschaften der mit 1,0 % RM-1 stabilisierten Mischungen A**

| | | | | |
|---|---|---|---|---|
| Beispiel | 1.2.0 | 1.2.1 | 1.2.2 | 1.2.3 |
| c(RM-1)/% | 1,0 | | | |
| t(UV) /min | 0 | 2 | 4 | 6 |

| Eigenschaft | | | | |
|---|---|---|---|---|
| V₁₀ /V | 2,54 | 2,79 | 2,96 | 3,12 |
| V_{op.} /V | 5,93 | 6,73 | 7,29 | 7,86 |
| tₒₙ /ms | 21,8 | 17,8 | 15,7 | 16,2 |
| t_{off} /ms | 40,9 | 32,7 | 28,4 | 24,3 |
| tₛᵤₘ /ms | 62,7 | 50,5 | 44,1 | 40,5 |

Wie den beiden obigen Tabellen zu entnehmen ist, verringert sich die Schaltzeit der polymerstabilisierten Mischungen gegenüber den nicht stabilisierten Mischungen signifikant. Der Effekt nimmt mit zunehmender Aushärtzeit deutlich zu. Er ist bei Verwendung von 1 % RM-1 deutlich stärker ausgeprägt als bei Verwendung von 0,5 % RM.

### Beispiel 2

Es wird eine weitere Flüssigkristallmischung (Flüssigkristallmischung B) mit der Zusammensetzung und den Eigenschaften wie in der folgenden Tabelle angegeben hergestellt.

**Tabelle 4: Zusammensetzung und Eigenschaften der Mischung B**

| Zusammensetzung | | | Physikalische Eigenschaften | | |
|---|---|---|---|---|---|
| Vebindung | | | T(N,I) | = 102,5 | °C |

| Nr. | Abkürzung | c/% | | | |
|---|---|---|---|---|---|
| 1 | CCQG-2-F | 6,0 | nₑ(20 °C, 589,3 nm) = | 1,5854 | |
| 2 | CCQG-3-F | 6,0 | Δn (20 °C, 589,3 nm) = | 0,1050 | |
| 3 | CCQU-2-F | 11,0 | | | |
| 4 | CCQU-3-F | 10,0 | ε\|\| (20 °C, 1 kHz) | = 9,2 | |
| 5 | CCQU-5-F | 10,0 | Δε (20 °C, 1 kHz) | = 6,0 | |
| 6 | CPU-3-F | 6,0 | | | |
| 7 | CP-3-CL | 17,0 | γ₁ (20 °C) | = 132 | mPa·s |
| 8 | CC-3-4 | 16,0 | | | |
| 9 | CPGP-5-2 | 9,0 | k₁ (20 °C) | = 14,1 | pN |
| 10 | CPGP-5-3 | 9,0 | k₃/k₁(20°C) | = 1,10 | |
| Σ | | 100,0 | | | |
| | | | V₀ (20 °C) | = 1,61 | V |

Diese Mischung eignet sich sehr gut für Anzeigen im FFS-Modus. Die Mischung wird, wie bei Beispiel 1, in drei Teile geteilt. Der erste Teil wird direkt in eine FFS-Zelle (Schichtdicke 3,6 µm, W = 4,0 µm, L = 6,0 µm, Tiltwinkel 2°, Schlitzwinkel 10°) gefüllt und untersucht. Die beiden weiteren Teile werden hier beide mit 1,0 % des reaktiven Mesogens RM-1 versetzt, in FFS-Zellen gefüllt und das reaktive Mesogen durch UV-Strahlung polymerisiert. Es wird kein Initiator verwendet. Hier beträgt die Intensität gemäß den Standardbedingungen 50 mW/cm². Bei einem dieser beiden weiteren Teile wird die Polymerisation durchgeführt wie unter Beispiel 1 beschrieben, bei dem zweiten dieser weiteren Teile wird während der UV-Bestrahlung eine Spannung von 1,6 V (rms) an die Zellen angelegt. Dabei werden wieder, wie bei Beispiel 1, jeweils drei Bestrahlungszeiten von 2, 4 bzw. 6 Minuten verwendet. Anschließend werden die Zellen untersucht.

**Tabelle 5: Eigenschaften der mit 1,0 % RM-1 im spannungsfreien Zustand stabilisierten Mischungen B**

| | | | | |
|---|---|---|---|---|
| Beispiel | 2.1.0 | 2.1.1 | 2.1.2 | 2.1.3 |
| c(RM-1)/% | 1,0 | | | |
| U_{stab.} /V | 0 | | | |
| t(UV) /min | 0 | 2 | 4 | 6 |

| Eigenschaft | | | | |
|---|---|---|---|---|
| V₁₀ /V | 2,09 | 2,17 | 2,20 | 2,25 |
| V_{op.} /V | 5,43 | 5,50 | 5,53 | 5,58 |
| tₒₙ /ms | 34,6 | 34,0 | 32,8 | 32,0 |
| t_{off} /ms | 63,2 | 52,5 | 48,3 | 45,4 |
| tₛᵤₘ /ms | 97,8 | 86,5 | 81,1 | 77,4 |

**Tabelle 6: Eigenschaften der mit 1,0 % RM-1 unter Spannung stabilisierten Mischungen B**

| | | | | |
|---|---|---|---|---|
| Beispiel | 2.2.0 | 2.2.1 | 2.2.2 | 2.2.3 |
| c(RM-1)/% | 1,0 | | | |
| U_{stab.} /V | 1,6 | | | |
| t(UV) /min | 0 | 2 | 4 | 6 |

| Eigenschaft | | | | |
|---|---|---|---|---|
| V₁₀ /V | 2,16 | 2,12 | 2,05 | n.b. |
| V_{op.} /V | 5,68 | 5,88 | 5,65 | n.b. |
| tₒₙ /ms | 37,7 | 34,2 | 30,7 | n.b. |
| t_{off} /ms | 63,3 | 45,9 | 42,0 | n.b. |
| tₛᵤₘ /ms | 101,0 | 80,1 | 72,7 | n.b. |

| | | | | |
|---|---|---|---|---|
| Bemerkungen: n.b.: nicht bestimmt, | | | | |

Wie den beiden vorhergehenden Tabellen zu entnehmen ist, verringert sich die Schaltzeit der polymerstabilisierten Mischungen gegenüber den nicht stabilisierten Mischungen signifikant. Der Effekt nimmt mit zunehmender Aushärtzeit deutlich zu. Er ist bei der Polymerisierung unter Anlegung einer Spannung deutlich stärker ausgeprägt als bei der Polymerisierung ohne angelegte Spannung.

### Beispiel 3

Es wird eine weitere Flüssigkristallmischung (Flüssigkristallmischung C) mit der Zusammensetzung und den Eigenschaften wie in der folgenden Tabelle angegeben hergestellt.

**Tabelle 7: Zusammensetzung und Eigenschaften der Mischung C**

| Zusammensetzung | | | Physikalische Eigenschaften | | |
|---|---|---|---|---|---|
| Verbindung | | | T(N,I) | = 75,0 | °C |

| Nr. | Abkürzung | c/% | | | |
|---|---|---|---|---|---|
| 1 | CCQU-3-F | 4,5 | nₑ(20 °C, 589,3 nm) | = 1,5866 | |
| 2 | CCQU-5-F | 6,0 | Δn (20 °C, 589,3 nm) | = 0,1031 | |
| 3 | CCU-3-F | 10,0 | | | |
| 4 | CCU-5-F | 10,0 | ε\|\| (20 °C, 1 kHz) | = 11,4 | |
| 5 | PGU-3-F | 12,0 | Δε (20 °C, 1 kHz) | = 8,0 | |
| 6 | PGUQU-3-F | 4,0 | | | |
| 7 | CCGU-3-F | 5,0 | γ₁ (20 °C) | = 85 | mPa·s |
| 8 | CC-3-V | 30,0 | | | |
| 9 | CP-3-O1 | 6,5 | | | |
| 10 | PGP-2-4 | 3,0 | | | |
| 11 | PGP-2-5 | 4,0 | | | |
| Σ | | 100,0 | | | |

Diese Mischung eignet sich sehr gut für Anzeigen im IPS-Modus. Die Mischung wird, wie bei Beispiel 1, in drei Teile geteilt. Der erste Teil wird direkt in eine IPS-Zelle gefüllt und untersucht. Einer der beiden weiteren Teile wird hier mit 0,3 % des reaktiven Mesogens RM-3 versetzt, der andere wird mit 0,3 % des reaktiven Mesogens RM-4 versetzt. Beide werden in IPS-Zellen gefüllt und das reaktive Mesogen durch UV-Strahlung polymerisiert. Es wird kein Initiator verwendet. Anschließend werden die Zellen untersucht.

### Beispiel 4

Es wird eine weitere Flüssigkristallmischung (Flüssigkristallmischung D) mit der Zusammensetzung und den Eigenschaften wie in der folgenden Tabelle angegeben hergestellt.

**Tabelle 8: Zusammensetzung und Eigenschaften der Mischung D**

| Zusammensetzung | | | Physikalische Eigenschaften | | |
|---|---|---|---|---|---|
| Verbidung | | | T(N,I) | = 75,0 | °C |

| Nr. | Abkürzung | c/% | | | |
|---|---|---|---|---|---|
| 1 | CCQU-3-F | 12,0 | nₑ(20 °C, 589,3 nm) | = 1,5865 | |
| 2 | CCQU-5-F | 8,0 | Δn (20 °C, 589,3 nm) | = 0,1030 | |
| 3 | CCG-3-OT | 7,0 | | | |
| 4 | CCU-1-F | 6,0 | ε\|\| (20 °C, 1 kHz) | = 11,2 | |
| 5 | CCU-3-F | 14,0 | Δε (20 °C, 1 kHz) | = 7,6 | |
| 6 | CPG-3-F | 10,0 | | | |
| 7 | CPU-3-F | 13,0 | γ₁ (20 °C) | = 109 | mPa·s |
| 8 | CC-2-3 | 8,0 | | | |
| 9 | CC-3-01 | 10,0 | | | |
| 10 | PGP-2-3 | 6,0 | | | |
| 11 | PGP-2-4 | 6,0 | | | |
| Σ | | 100,0 | | | |

Diese Mischung eignet sich sehr gut für Anzeigen im IPS-Modus. Die Mischung wird, wie bei Beispiel 1, in drei Teile geteilt. Der erste Teil wird direkt in eine IPS-Zelle gefüllt und untersucht. Einer der beiden weiteren Teile wird hier mit 0,3 % des reaktiven Mesogens RM-3 versetzt, der andere wird hier mit 0,3 % des reaktiven Mesogens RM-4 versetzt. Beide werden in IPS-Zellen gefüllt und das reaktive Mesogen durch UV-Strahlung polymerisiert. Es wird kein Initiator verwendet. Anschließend werden die Zellen untersucht.

### Beispiel 5

Es wird eine weitere Flüssigkristallmischung (Flüssigkristallmischung E) mit der Zusammensetzung und den Eigenschaften wie in der folgenden Tabelle angegeben hergestellt.

**Tabelle 10: Zusammensetzung und Eigenschaften der Mischung E**

| Zusammensetzung | | | Physikalische Eigenschaften | | |
|---|---|---|---|---|---|
| Verbindung | | | T(N,I) | = 75,0 | °C |

| Nr. | Abkürzung | c/% | | | |
|---|---|---|---|---|---|
| 1 | CCQU-3-F | 12,0 | nₑ(20 °C, 589,3 nm) | = 1,5745 | |
| 2 | CCQU-5-F | 9,0 | Δn (20 °C, 589,3 nm) | = 0,0990 | |
| 3 | PUQU-3-F | 9,0 | | | |
| 4 | APUQU-2-F | 8,0 | ε\|\| (20 °C, 1 kHz) | = 19,4 | |
| 5 | APUQU-3-F | 8,0 | Δε (20 °C, 1 kHz) | = 15,2 | |
| 6 | PGUQU-3-F | 4,0 | | | |
| 7 | CCP-3-OT | 5,0 | γ₁ (20 °C) | = 122 | mPa·s |
| 8 | CCU-3-F | 13,0 | | | |
| 9 | CCGU-3-F | 5,0 | k₁(20 °C) | = 11,5 | pN |
| 10 | CC-2-3 | 12,0 | k₃/k₁(20 °C) | = 1,10 | |
| 11 | CP-3-02 | 15,0 | | | |
| Σ | | 100,0 | V₀(20 °C) | = 0,91 | V |

Diese Mischung eignet sich sehr gut für Anzeigen im IPS-Modus. Die Mischung wird, wie bei Beispiel 1, in drei Teile geteilt. Der erste Teil wird direkt in eine IPS-Zelle gefüllt und untersucht. Einer der beiden weiteren Teile wird hier mit 0,3 % des reaktiven Mesogens RM-3 versetzt, der andere wird hier mit 0,3 % des reaktiven Mesogens RM-4 versetzt. Beide werden in IPS-Zellen gefüllt und das reaktive Mesogen durch UV-Strahlung polymerisiert. Es wird kein Initiator verwendet. Anschließend werden die Zellen untersucht.

Anschließend wird die Mischung in Zellen mit interdigitalen Elektroden und homeotroper Ausgangsorientierung auf einer entsprechenden Polyimidorientierungsschicht (Posi-VA) mit einer Schichtdicke von ca. 4 µm untersucht. Hierzu wird die erneut hergestellte Mischung wieder in drei neue Teile geteilt. Der erste Teil wird direkt in eine entsprechende Zelle gefüllt und untersucht. Je einer der beiden weiteren Teile wird mit 1,0 % bzw. 2,0 % des reaktiven Mesogens RM-1 versetzt, in entsprechende Zellen gefüllt und das reaktive Mesogen durch UV-Strahlung polymerisiert. Es wird kein Initiator verwendet. Die Bestrahlung erfolgt mit einem UVA Cube Gerät. Hier beträgt die Intensität abweichend von den Standardbedingungen 100 mW/cm². Dabei werden jeweils drei Bestrahlungszeiten von 2, 4 bzw. 6 Minuten verwendet. Außerdem werden jeweils zwei Serien von Belichtungen an verschiedenen Zellen durchgeführt. Bei der ersten Serie wird keine Spannung an die interdigitalen Elektroden angelegt, wohingegen bei der zweiten Serie eine Rechteck-Wechselspannung mit einem rms-Wert von 4 V an die Elektroden angelegt wird. Anschließend werden die Zellen untersucht.

Mit steigender Bestrahlungszeit nimmt die Schaltzeit in allen Fällen ab. Bei einer Bestrahlungszeit von 6 Minuten wird nahezu ein stabiler Endwert erreicht. Die maximale Reduzierung der Schaltzeit beträgt bis zu ca. 30 %. Der Verringerung der der Schaltzeit ist bei Verwendung von 2 % RM größer als bei der Verwendung von 1 % RM. Die Reduzierung der Schaltzeiten erfolgt sowohl in der Serie in der keine Spannung bei der Polymerisation angelegt wird, als auch bei der Serie mit einer angelegten Spannung von 4 V. Bei der Serie ohne eine angelegte Spannung ist die Schaltzeitverbesserung stärker ausgeprägt.

Das Anlegen einer Spannung von 4 V bei der Polymerisation führt außerdem zu einer geringfügigen Erhöhung der Schwellenspannung und zu einer leichten Erhöhung der Dunkeltransmission, also der Resttransmission im ungeschalteten Zustand der Zellen.

### Beispiel 6

Es wird eine weitere Flüssigkristallmischung (Flüssigkristallmischung F) mit der Zusammensetzung und den Eigenschaften wie in der folgenden Tabelle angegeben hergestellt.

**Tabelle 11: Zusammensetzung und Eigenschaften der Mischung F**

| Zusammensetzung | | | Physikalische Eigenschaften | | |
|---|---|---|---|---|---|
| Verbindung | | | T(N,I) | = 90,3 | °C |

| Nr. | Abkürzung | c/% | | | |
|---|---|---|---|---|---|
| 1 | CCQU-2-F | 8,0 | nₑ(20 °C, 589,3 nm) | = 1,5584 | |
| 2 | CCQU-3-F | 8,5 | Δn (20 °C, 589,3 nm) | = 0,0800 | |
| 3 | CCQU-5-F | 8,0 | | | |
| 4 | PUQU-3-F | 6,5 | ε\|\| (20 °C, 1 kHz) | = 10,2 | |
| 5 | CCG-V-F | 2,0 | Δε (20 °C, 1 kHz) | = 7,1 | |
| 6 | CCU-1-F | 5,5 | | | |
| 7 | CCU-2-F | 7,0 | γ₁ (20 °C) | = 98 | mPa·s |
| 8 | CCU-3-F | 9,0 | | | |
| 9 | CCU-5-F | 3,0 | k₁ (20 °C) | = 12,3 | pN |
| 10 | CC-3-V | 20,0 | k₃/k₁(20 °C) | = 1,37 | |
| 11 | CCP-V-1 | 12,5 | | | |
| 12 | CCP-V2-1 | 10.0 | V₀ (20 °C) | = 1,39 | V |
| Σ | | 100,0 | | | |

Diese Mischung eignet sich sehr gut für Anzeigen im IPS-Modus. Die Mischung wird in zwei Teile geteilt. Der erste Teil wird direkt in eine IPS-Zelle gefüllt und untersucht. Der zweite Teile wird hier mit 0,5 % des reaktiven Mesogens RM-3 versetzt, in eine IPS-Zelle gefüllt und das reaktive Mesogen durch UV-Strahlung polymerisiert. Es wird kein Initiator verwendet. Anschließend werden die Zellen untersucht.

### Beispiel 7

Es wird eine weitere Flüssigkristallmischung (Flüssigkristallmischung G) mit der Zusammensetzung und den Eigenschaften wie in der folgenden Tabelle angegeben hergestellt.

**Tabelle 12: Zusammensetzung und Eigenschaften der Mischung G**

| Zusammensetzung | | | Physikalische Eigenschaften | | |
|---|---|---|---|---|---|
| Verbindung | | | T(N,I) | = 90,6 | °C |

| Nr. | Abkürzung | c/% | | | |
|---|---|---|---|---|---|
| 1 | PUQU-3-F | 8,0 | nₑ(20 °C, 589,3 nm) | = 1,5894 | |
| 2 | CCG-V-F | 8,0 | Δn (20 °C, 589,3 nm) | = 0,1006 | |
| 3 | CCU-3-F | 3,0 | | | |
| 4 | CPU-3-F | 8,5 | ε\|\| (20 °C, 1 kHz) | = 9,7 | |
| 5 | CGU-3-F | 8,0 | Δε (20 °C, 1 kHz) | = 6,5 | |
| 6 | PGU-3-F | 3,5 | | | |
| 7 | CCGU-3-F | 5,0 | γ₁ (20 °C) | = 66 | mPa·s |
| 8 | CC-3-V | 25,0 | | | |
| 9 | CC-3-V1 | 5,0 | k₁ (20 °C) | = 12,9 | pN |
| 10 | CCP-V-1 | 13,0 | k₃/k₁(20 °C) | = 1,27 | |
| 11 | CCP-V2-1 | 12,0 | | | |
| Σ | | 100,0 | | | |

Diese Mischung eignet sich sehr gut für Anzeigen im IPS-Modus. Die Mischung wird in zwei Teile geteilt. Der erste Teil wird direkt in eine IPS-Zelle gefüllt und untersucht. Der zweite Teile wird hier mit 1,0 % des reaktiven Mesogens RM-4 versetzt, in eine IPS-Zelle gefüllt und das reaktive Mesogen durch UV-Strahlung polymerisiert. Es wird kein Initiator verwendet. Anschließend werden die Zellen untersucht.

### Beispiel 8

Es wird eine weitere Flüssigkristallmischung (Flüssigkristallmischung H) mit der Zusammensetzung und den Eigenschaften wie in der folgenden Tabelle angegeben hergestellt.

**Tabelle 13: Zusammensetzung und Eigenschaften der Mischung H**

| Zusammensetzung | | | Physikalische Eigenschaften | | |
|---|---|---|---|---|---|
| Verbindung | | | T(N,I) | = 89,5 | °C |

| Nr. | Abkürzung | c/% | | | |
|---|---|---|---|---|---|
| 1 | PUQU-3-F | 3,0 | nₑ(20 °C, 589,3 nm) | = 1,6268 | |
| 2 | APUQU-3-F | 9,5 | Δn (20 °C, 589,3 nm) | = 0,1297 | |
| 3 | CP-3-CL | 3,5 | | | |
| 4 | GGP-3-CL | 5,5 | ε\|\| (20 °C, 1 kHz) | = 10,2 | |
| 5 | PGU-2-F | 5,5 | Δε (20 °C, 1 kHz) | = 6,9 | |
| 6 | PGU-3-F | 8,0 | | | |
| 7 | CC-3-V | 29,0 | γ₁ (20 °C) | = 84 | mPa·s |
| 8 | CCP-V-1 | 18,0 | | | |
| 9 | CCP-V2-1 | 10,0 | k₁ (20°C) | = 14,2 | pN |
| 10 | PGP-2-3 | 8.0 | k₃/k₁(20 °C) | = 1,06 | |
| Σ | | 100,0 | | | |
| | | | V₀ (20 °C) | = 1,51 | V |

Diese Mischung eignet sich sehr gut für Anzeigen im IPS-Modus. Die Mischung wird in zwei Teile geteilt. Der erste Teil wird direkt in eine IPS-Zelle gefüllt und untersucht. Der zweite Teile wird hier, wie bei Beispiel 7, mit 1,0 % des reaktiven Mesogens RM-4 versetzt, in eine IPS-Zelle gefüllt und das reaktive Mesogen durch UV-Strahlung polymerisiert. Es wird kein Initiator verwendet. Anschließend werden die Zellen untersucht.

## Patentansprüche

1. Flüssigkristallines Medium mit positiver dielektrischer Anisotropie, **dadurch gekennzeichnet, dass** es
- eine oder mehrere polymerisierbare Verbindungen und
- eine oder mehrere dielektrisch positive Verbindungen der Formel III 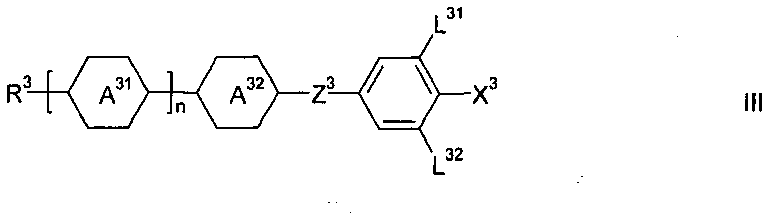 worin
R³ Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeuten, 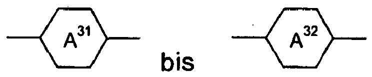 bei jedem Erscheinen unabhängig voneinander 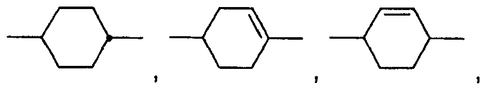 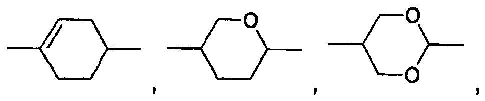 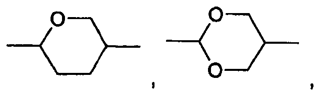 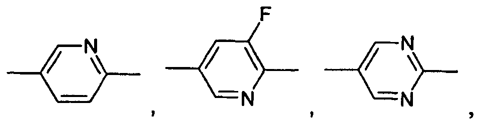 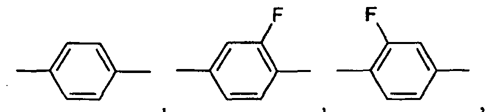 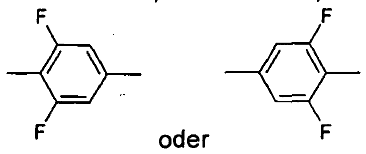 bedeuten
L³¹ und L³² unabhängig voneinander H oder F bedeuten,
X³ Cl, -O-CH=CF₂ oder -OCF₃ bedeuten,
Z³ -CH₂CH₂-, -CF₂CF₂-, -COO-, *trans-* -CH=CH-, *trans-*-CF=CF-, -CH₂O- oder eine Einfachbindung bedeutet und
n 0,1, 2 oder 3 bedeuten, und
- eine oder mehrere dielektrisch neutrale Verbindungen ausgewählt aus der Gruppe der Verbindungen der Formeln IV und VI 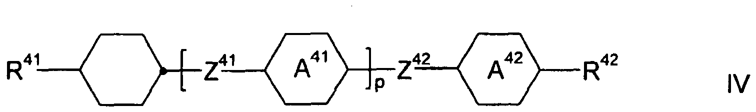 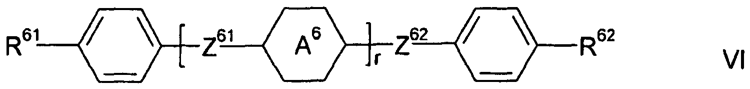 worin
R⁴¹ und R⁴² unabhängig voneinander die unter Formel II für R² angegebene Bedeutung besitzen, 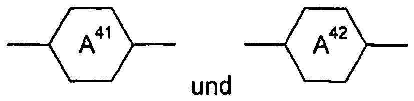 unabhängig voneinander und bei zweifachem Auftreten von 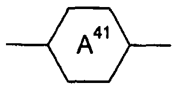 auch diese unabhängig voneinander 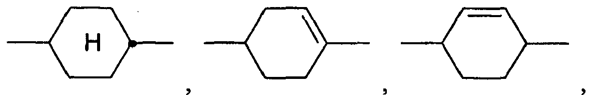 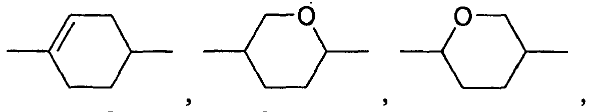 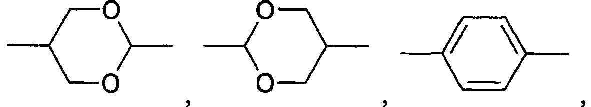 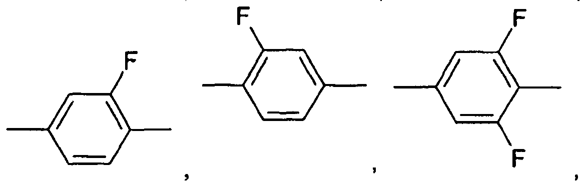 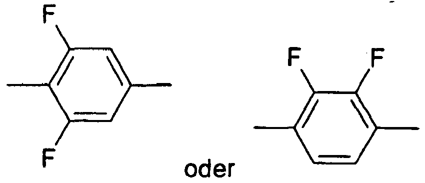 bedeuten,
Z⁴¹ und Z⁴² unabhängig voneinander und bei zweifachem Auftreten von Z⁴¹ auch diese unabhängig voneinander -CH₂CH₂-, -COO-, *trans-* -CH=CH-, *trans-* -CF=CF-, -CH₂O-, -CF₂O- -C≡C- oder eine Einfachbindung bedeuten und
p 0, 1 oder 2 bedeutet,
R⁶¹ und R⁶² unabhängig voneinander die für R² angegebene Bedeutung besitzen, 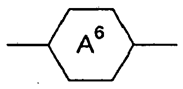 und bei zweifachem Auftreten bei jedem Auftreten unabhängig voneinander 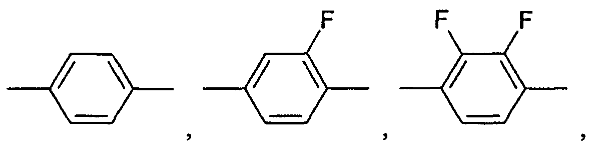 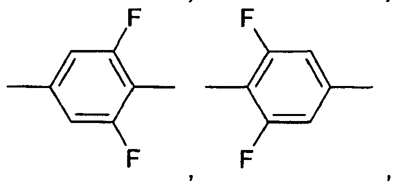 oder 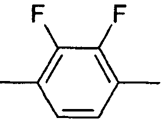 bedeuten,
Z⁶¹ und Z⁶² unabhängig voneinander und bei zweifachem Auftreten von Z⁶¹ auch diese unabhängig voneinander -CH₂CH₂-, -COO-, *trans-* -CH=CH-, *trans-* -CF=CF-, -CH₂O-, -CF₂O- oder eine Einfachbindung bedeuten und
r 0, 1 oder 2 bedeutet, enthält und
- eine nematische Phase und
- einen Klärpunkt von 55°C oder mehr aufweisen.

2. Medium nach Anspruch 1, **dadurch gekennzeichnet, dass** die Konzentration der polymerisierbaren Verbindungen im Medium im Bereich von 0,05 % bis 10 % liegt.

3. Medium nach einem oder mehreren der Ansprüche 1 und 2, **dadurch gekennzeichnet, dass** es eine oder mehrere Verbindungen der Formel I
R^{a}-A¹-(Z¹-A²)ₘ₁-R^{b} I
worin
R^{a} und R^{b} unabhängig voneinander P, P-Sp-, H, halogen, SF₅, NO₂, eine Alkyl-, Alkenyl- oder Alkinylgruppe bedeuten und wobei bevorzugt mindestens einer von R^{a} and R^{b} P-Sp-bedeutet,
P bei jedem Erscheinen unabhängig voneinander eine polymerisierbare Gruppe bedeutet,
Sp bei jedem Erscheinen unabhängig voneinander eine Abstandsgruppe oder eine Einfachbindung bedeutet,
A¹ and A² unabhängig voneinander und auch A² bei jedem Erscheinen unabhängig voneinander eine aromatische, heteroaromatische, alicyclische oder heterocyclische Gruppe bedeuten, deren Ring bevorzugt 4 to 25 Atome, bevorzugt C-Atome, enthält, die auch annelierte Ringe umfasst und die optional ein- oder mehrfach durch L substituiert sein kann,
Z¹ bei jedem Erscheinen unabhängig voneinander -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, CR⁰R⁰⁰ oder eine Einfachbindung bedeutet,
L P, P-Sp-, OH, CH₂OH, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonlyoxy oder Alkoxycarbonyloxy mit 1 bis 25 C-Atomen, worin auch ein oder mehrere H-Atome durch F, Cl, P oder P-Sp- ersetzt sein können,
R⁰ und R⁰⁰ unabhängig voneinander H oder Alkyl mit 1 bis 12 C-Atomen,
R^{x} P, P-Sp-, H, Halogen, geradkettiges, verzweigtes oder cyclisches Alkyl mit 1 bis 25 C-Atomen, worin auch eine oder mehrere nicht benachbarte CH₂-Gruppen durch -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, P oder P-Sp- ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen,
m1 0, 1, 2, 3 oder 4 bedeutet und
n1 0, 1, 2, 3 oder 4 bedeutet,
wobei mindestens einer aus der Gruppe der Substituenten R^{a}, R^{b} und der vorhandnen Substituenten L eine Gruppe P oder P-Sp- bedeutet mindestens eine solche Gruppe enthält,
(als polymerisierbare Verbindungen) enthält.

4. Medium nach einem oder mehreren der Ansprüche 1 bis 3, **dadurch gekennzeichnet, dass** es eine oder mehrere Verbindungen der Formel II 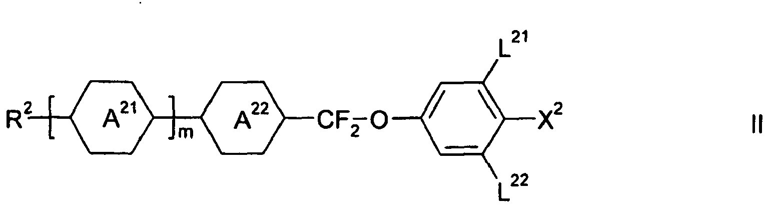 worin
R² Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeutet, 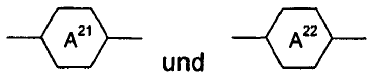 bei jedem Erscheinen unabhängig voneinander 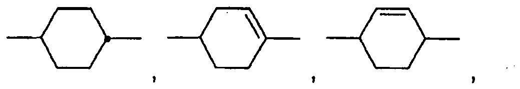 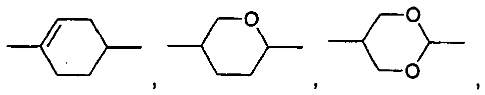 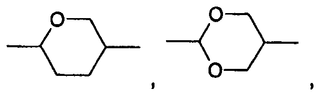 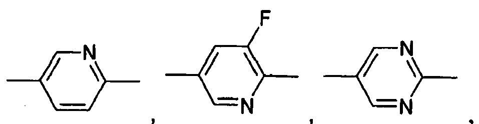 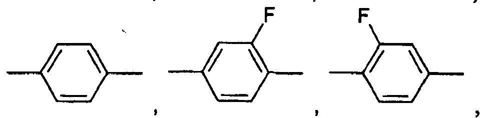 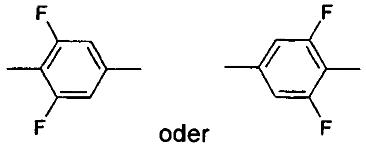 bedeuten
L²¹ und L²² unabhängig voneinander H oder F bedeuten,
X² Halogen, halogeniertes Alkyl oder Alkoxy mit 1 bis 3 C-Atomen oder halogeniertes Alkenyl oder Alkenyloxy mit 2 oder 3 C-Atomen bedeutet,
m² 0, 1, 2 oder 3 bedeutet,
enthält.

5. Medium nach einem oder mehreren der Ansprüche 1 bis 4, **dadurch gekennzeichnet, dass** es eine oder mehrere Verbindungen der Formel III, wie in Anspruch 1 angegeben, worin X³ Cl bedeutet, enthält.

6. Medium nach einem oder mehreren der Ansprüche 1 bis 5, **dadurch gekennzeichnet, dass** es eine oder mehrere dielektrisch neutrale Verbindungen der Formel IV, wie in Anspruch 1 angegeben, enthält.

7. Medium nach einem oder mehreren der Ansprüche 1 bis 6, **dadurch gekennzeichnet, dass** es eine oder mehrere dielektrisch neutrale Verbindungen der Formel VI, wie in Anspruch 1 angegeben, enthält.

8. Flüssigkristallanzeige, **dadurch gekennzeichnet, dass** sie ein Medium nach einem oder mehreren der Ansprüche 1 bis 7 enthält.

9. Anzeige, **dadurch gekennzeichnet, dass** sie ein Medium nach einem oder mehreren der Ansprüche 1 bis 7 enthält, das durch Polymerisation der polymerisierbaren Verbindung(en) stabilisiert ist.

10. Anzeige nach Anspruch 8 oder 9, **dadurch gekennzeichnet, dass** sie durch eine Aktivmatrix adressiert wird.

11. Anzeige nach einem oder mehreren der Ansprüche 8 bis 10, **dadurch gekennzeichnet, dass** sie eine PS-IPS- oder eine PS-FFS-Anzeige ist.

12. Anzeige nach einem oder mehreren der Ansprüche 8 bis 10, **dadurch gekennzeichnet, dass** sie eine PS-Posi-VA-Anzeige ist.

13. Verwendung eines Mediums nach einem oder mehreren der Ansprüche 1 bis 7 in einer Flüssigkristallanzeige.

14. Verfahren zur Herstellung einer Flüssigkristallanzeige, **dadurch gekennzeichnet, dass** ein Medium nach einem oder mehreren der Ansprüche 1 bis 7 in der Anzeige durch Polymerisation der polymerisierbaren Verbindung(en) stabilisiert wird.

15. Verfahren nach Anspruch 14, **dadurch gekennzeichnet, dass** während der Polymerisation der polymerisierbaren Verbindung(en) keine elektrische Spannung anliegt.

## Claims

1. Liquid-crystalline medium having positive dielectric anisotropy, **characterised in that** it comprises
- one or more polymerisable compounds and
- one or more dielectrically positive compounds of the formula III 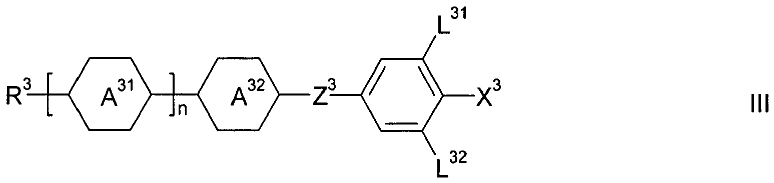 in which
R³ denotes alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms, 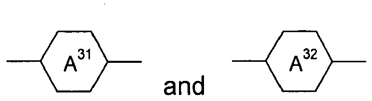 on each appearance, independently of one another, denote 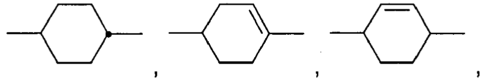 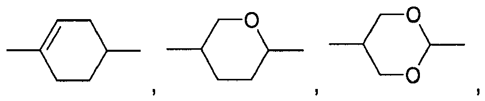 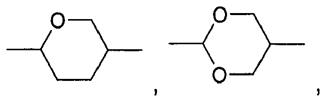 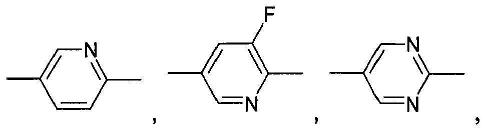 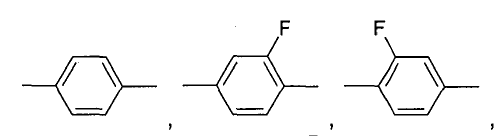 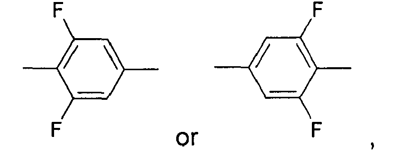
L³¹ and L³², independently of one another, denote H or F,
X³ denotes Cl, -O-CH-CF₂ or -OCF₃,
Z³ denotes -CH₂CH₂-, -CF₂CF₂-, -COO-, *trans*-CH=CH-, *trans*-CF=CF-, -CH₂O- or a single bond, and
n denotes 0, 1, 2 or 3, and
- one or more dielectrically neutral compounds selected from the group of the compounds of the formulae IV and VI 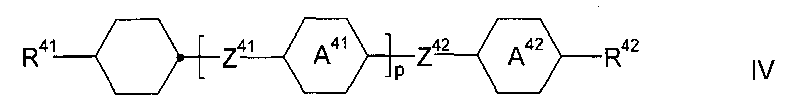 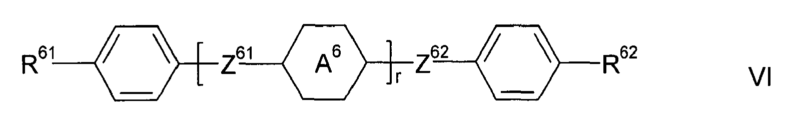 in which
R⁴¹ and R⁴², independently of one another, have the meaning indicated for R² under formula II, 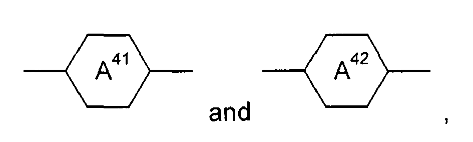 independently of one another and, if 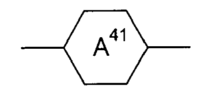 occurs twice, also these independently of one another, denote 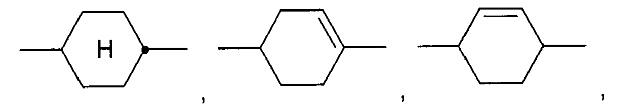 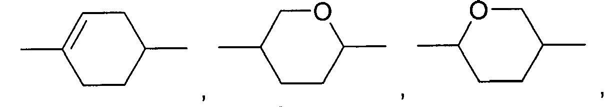 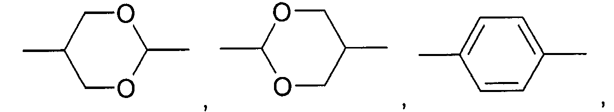 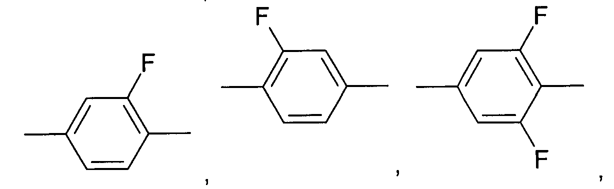 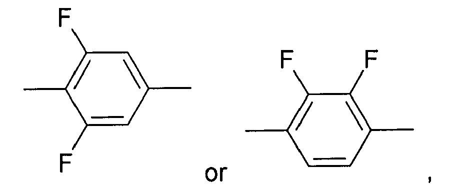
Z⁴¹ and Z⁴², independently of one another and, if Z⁴¹ occurs twice, also these independently of one another, denote -CH₂CH₂-, -COO-, *trans*-CH=CH-, *trans*-CF=CF-, -CH₂O-, -CF₂O-, -C≡C- or a single bond, and
p denotes 0, 1 or 2,
R⁶¹ and R⁶², independently of one another, have the meaning indicated for R², 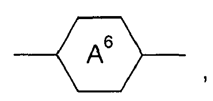 and if it occurs twice, independently of one another on each occurrence, denotes 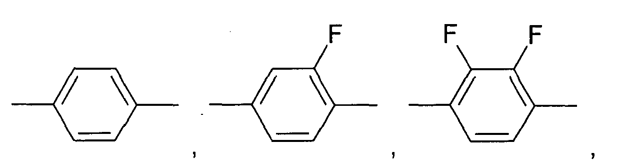 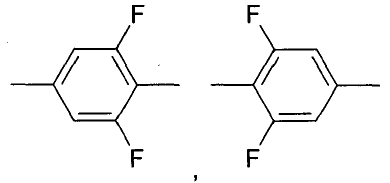 or 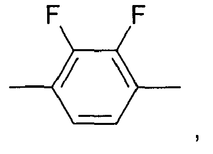
Z⁶¹ and Z⁶², independently of one another and, if Z⁶¹ occurs twice, also these independently of one another, denote -CH₂CH₂-, -COO-, *trans*-CH=CH-, *trans*-CF=CF-, -CH₂O-, -CF₂O- or a single bond, and
r denotes 0, 1 or 2, and
- a nematic phase and
- has a clearing point of 55°C or more.

2. Medium according to Claim 1, **characterised in that** the concentration of the polymerisable compounds in the medium is in the range from 0.05% to 10%.

3. Medium according to one or more of Claims 1 and 2, **characterised in that** it comprises (as polymerisable compounds) one or more compounds of the formula I
R^{a}-A¹-(Z¹-A²)ₘ₁-R^{b} I
in which
R^{a} and R^{b}, independently of one another, denote P, P-Sp-, H, halogen, SF₅, NO₂, an alkyl, alkenyl or alkynyl group, where at least one of R^{a} and R^{b} preferably denotes P-Sp-,
P on each appearance, independently of one another, denotes a polymerisable group,
Sp on each appearance, independently of one another, denotes a spacer group or a single bond,
A¹ and A², independently of one another and also A² independently of one another on each appearance, denote an aromatic, heteroaromatic, alicyclic or heterocyclic group, whose ring preferably contains 4 to 25 atoms, preferably C atoms, which also comprises fused rings and which may optionally be mono- or polysubstituted by L,
Z¹ on each appearance, independently of one another, denotes -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, CR⁰R⁰⁰ or a single bond,
L denotes P, P-Sp-, OH, CH₂OH, F, CI, Br, I, -CN, -NO₂, -NCO, -NCS, -OCN, -SCN, -C(=O)N(R^{x})₂, -C(=O)Y¹, -C(=O)R^{x}, -N(R^{x})₂, optionally substituted silyl, optionally substituted aryl having 6 to 20 C atoms, or straight-chain or branched alkyl, alkoxy, alkylcarbonyl, alkoxy-carbonyl, alkylcarbonyloxy or alkoxycarbonyloxy having 1 to 25 C atoms, in which, in addition, one or more H atoms may be replaced by F, Cl, P or P-Sp-,
R⁰ and R⁰⁰, independently of one another, denote H or alkyl having 1 to 12 C atoms,
R^{x} denotes P, P-Sp-, H, halogen, straight-chain, branched or cyclic alkyl having 1 to 25 C atoms, in which, in addition, one or more non-adjacent CH₂ groups may be replaced by -O-, -S-, -CO-, -CO-O-, -O-CO-, -O-CO-O-in such a way that O and/or S atoms are not linked directly to one another, and in which, in addition, one or more H atoms may be replaced by F, Cl, P or P-Sp-, an optionally substituted aryl or aryloxy group having 6 to 40 C atoms, or an optionally substituted heteroaryl or heteroaryloxy group having 2 to 40 C atoms,
m1 denotes 0, 1, 2, 3 or 4, and
n1 denotes 0, 1, 2, 3 or 4,
where at least one substituent from the group of the substituents R^{a}, R^{b} and the substituents L present denotes a group P or P-Sp- or contains at least one such group.

4. Medium according to one or more of Claims 1 to 3, **characterised in that** it comprises one or more compounds of the formula II 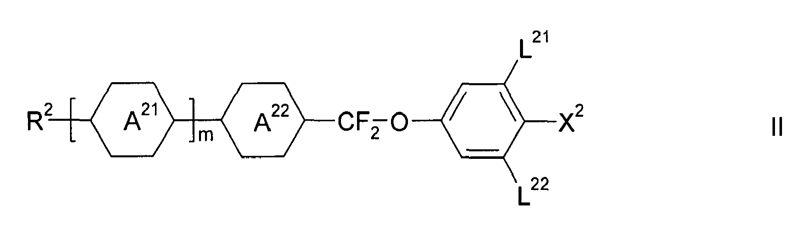 in which
R² denotes alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms, 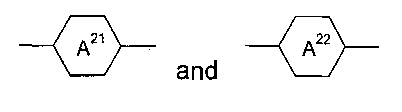 on each appearance, independently of one another, denote 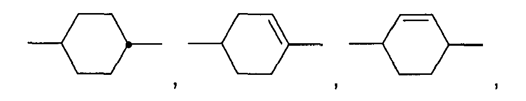 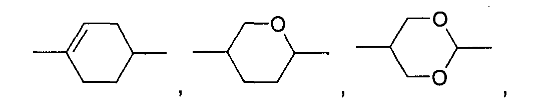 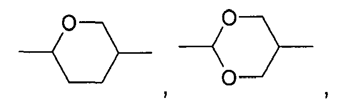 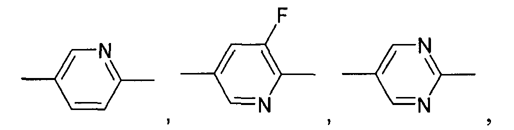 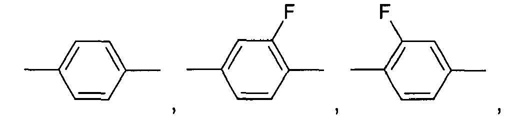 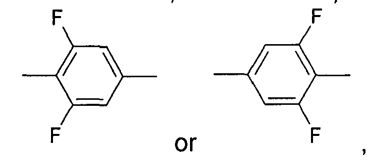
L²¹ and L²², independently of one another, denote H or F,
X² denotes halogen, halogenated alkyl or alkoxy having 1 to 3 C atoms or halogenated alkenyl or alkenyloxy having 2 or 3 C atoms,
m denotes 0, 1, 2 or 3.

5. Medium according to one or more of Claims 1 to 4, **characterised in that** it comprises one or more compounds of the formula III, as indicated in Claim 1, in which X³ denotes Cl.

6. Medium according to one or more of Claims 1 to 5, **characterised in that** it comprises one or more dielectrically neutral compounds of the formula IV, as indicated in Claim 1.

7. Medium according to one or more of Claims 1 to 6, **characterised in that** it comprises one or more dielectrically neutral compounds of the formula VI, as indicated in Claim 1.

8. Liquid-crystal display, **characterised in that** it contains a medium according to one or more of Claims 1 to 7.

9. Display, **characterised in that** it contains a medium according to one or more of Claims 1 to 7 which has been stabilised by polymerisation of the polymerisable compound(s).

10. Display according to Claim 8 or 9, **characterised in that** it is addressed by an active matrix.

11. Display according to one or more of Claims 8 to 10, **characterised in that** it is a PS-IPS or PS-FFS display.

12. Display according to one or more of Claims 8 to 10, **characterised in that** it is a PS-positive-VA display.

13. Use of a medium according to one or more of Claims 1 to 7 in a liquid-crystal display.

14. Process for the production of a liquid-crystal display, **characterised in that** a medium according to one or more of Claims 1 to 7 is stabilised in the display by polymerisation of the polymerisable compound(s).

15. Process according to Claim 14, **characterised in that** no electrical voltage is applied during the polymerisation of the polymerisable compound(s).

## Revendications

1. Milieu cristallin liquide présentant une anisotropie diélectrique positive, **caractérisé en ce qu'**il comprend :
- un ou plusieurs composés polymérisables et
- un ou plusieurs composés diélectriquement positifs de la formule III 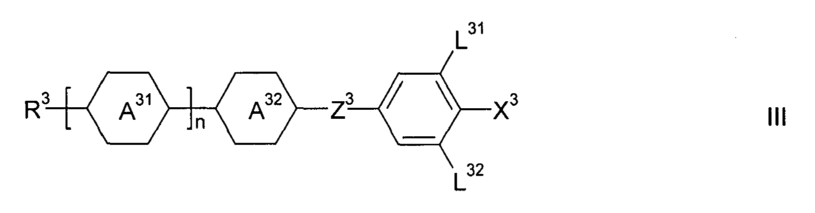 dans laquelle
R³ représente alkyle, alcoxy, alkyle fluoré ou alcoxy fluoré comportant de 1 à 7 atomes de C, alkényle, alkényloxy, alcoxyalkyle ou alkényle fluoré comportant de 2 à 7 atomes de C, 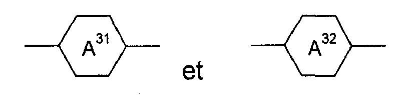 représentent, pour chaque occurrence indépendamment les unes des autres, 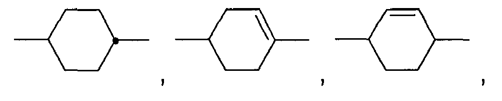 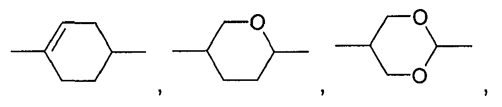 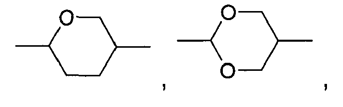 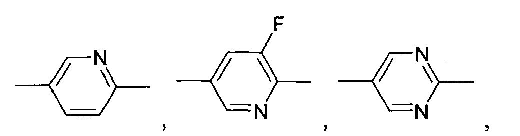 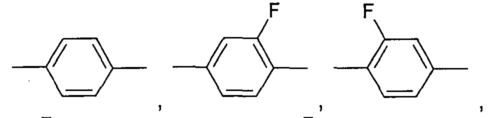 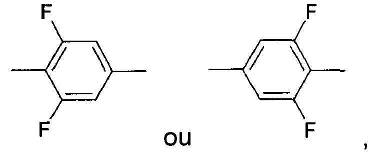
L³¹ et L³² representent, indépendamment l'un de l'autre, H ou F,
X³ représente Cl, -O-CH-CF₂ ou -OCF₃,
Z³ représente -CH₂CH₂-, -CF₂CF₂-, -COO-, *trans*-CH=CH-, *trans*-CF=CF-, -CH₂O- ou une liaison simple, et
n représente 0, 1, 2 ou 3, et
- un ou plusieurs composés diélectriquement neutres choisis parmi le groupe des composés des formules IV et VI 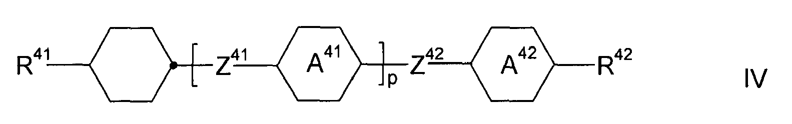 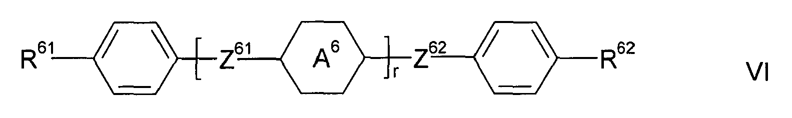 dans lesquelles
R⁴¹ et R⁴² présentent, indépendamment l'un de l'autre, la signification indiquée pour R² sous la formule II, 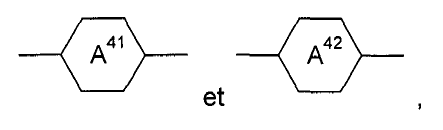 représentent, indépendamment l'un de l'autre, et, si 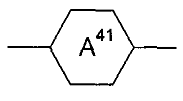 est présent selon deux occurrences, ces occurrences représentent, également indépendamment l'une de l'autre, 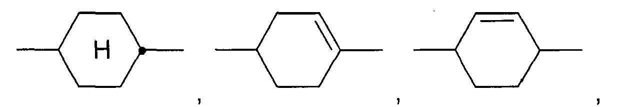 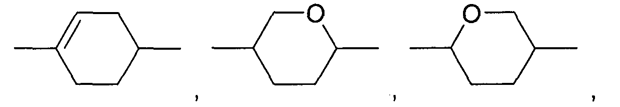 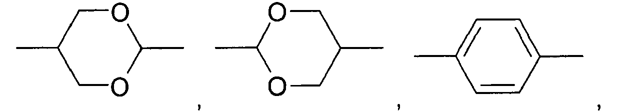 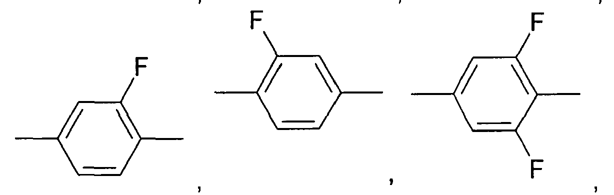 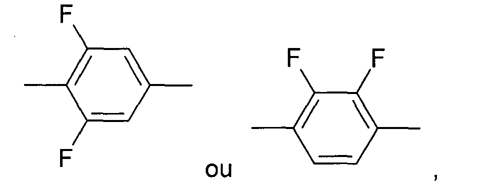
Z⁴¹ et Z⁴² représentent, indépendamment l'un de l'autre, et, si Z⁴¹ est présent selon deux occurrences, ces occurrences représentent, également indépendamment l'une de l'autre, -CH₂CH₂-, -COO-, *trans*-CH=CH-, *trans*-CF=CF-, -CH₂O-, -CF₂O-, -C≡C- ou une liaison simple, et
p représente 0, 1 ou 2,
R⁶¹ et R⁶² présentent, indépendamment l'un de l'autre, la signification indiquée pour R², 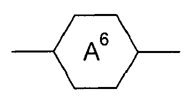 représente, et s'il est présent selon deux occurrences, ces occurrences représentent, indépendamment l'une de l'autre, 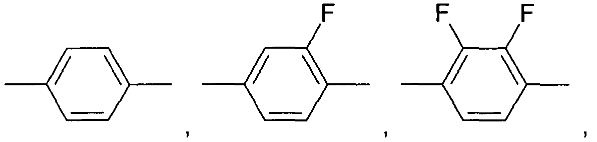 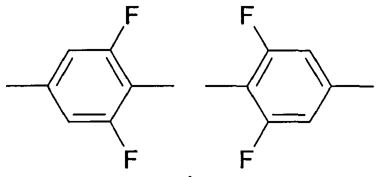 ou 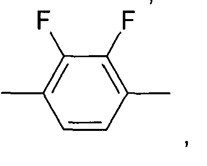
Z⁶¹ et Z⁶² représentent, indépendamment l'un de l'autre, si Z⁶¹ est présent selon deux occurrences, ces occurrences représentent, également indépendamment l'une de l'autre, -CH₂CH₂-, -COO-, *trans*-CH=CH-, *trans*-CF=CF-, -CH₂O-, -CF₂O- ou une liaison simple, et
r représente 0, 1 ou 2, et
- une phase nématique et
- présente un point d'éclaircissement de 55°C ou plus.

2. Milieu selon la revendication 1, **caractérisé en ce que** la concentration des composés polymérisables dans le milieu est dans la plage de 0,05% à 10%.

3. Milieu selon une ou plusieurs des revendications 1 et 2, **caractérisé en ce qu'**il comprend (en tant que composés polymérisables) un ou plusieurs composés de la formule I
R^{a}-A¹-(Z¹-A²)ₘ₁-R^{b} I
dans laquelle
R^{a} et R^{b} représentent, indépendamment l'un de l'autre, P, P-Sp-, H, halogène, SF₅, NO₂, un groupe alkyle, alkényle ou alkynyle, où au moins l'un de R^{a} et R^{b} représente de préférence P-Sp-,
P représente, pour chaque occurrence indépendamment de l'autre ou des autres, un groupe polymérisable,
Sp représente, pour chaque occurrence indépendamment de l'autre ou des autres, un groupe d'espaceur ou une liaison simple,
A¹ et A² représentent, indépendamment l'un de l'autre et les occurrences de A² représentent, également indépendamment les unes des autres dans le cas de plusieurs occurrences, un groupe aromatique, hétéroaromatique, alicyclique ou hétérocyclique, dont un cycle contient de préférence de 4 à 25 atomes, de préférence des atomes de C, lequel comprend également des cycles fusionnés et lequel peut en option être mono- ou polysubstitué par L,
Z¹ représente, et pour chaque occurrence, indépendamment des autres, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, CR⁰R⁰⁰ ou une liaison simple,
L représente P, P-Sp-, OH, CH₂OH, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, silyle en option substitué, aryle en option substitué comportant de 6 à 20 atomes de C, ou alkyle, alcoxy, alkylcarbonyle, alcoxycarbonyle, alkylcarbonyloxy ou alcoxycarbonyloxy en chaîne droite ou ramifié comportant de 1 à 25 atomes de C, où, en outre, un ou plusieurs atomes de H peut/peuvent être remplacé(s) par F, Cl, P ou P-Sp-,
R⁰ et R⁰⁰ représentent, indépendamment l'un de l'autre, H ou alkyle comportant de 1 à 12 atomes de C,
R^{x} représente P, P-Sp-, H, halogène, alkyle en chaîne droite, ramifié ou cyclique comportant de 1 à 25 atomes de C, où, en outre, un ou plusieurs groupes CH₂ non adjacents peut/peuvent être remplace(s) par -O-, -S-, -CO-, -CO-O-, -O-CO-, -O-CO-O- de telle sorte que des atomes de O et/ou de S ne soient pas liés directement les uns aux autres, et où, en outre, un ou plusieurs atomes de H peut/peuvent être remplacé(s) par F, Cl, P ou P-Sp-, un groupe aryle ou aryloxy en option substitué comportant de 6 à 40 atomes de C, ou un groupe hétéroaryle ou hétéroaryloxy en option substitué comportant de 2 à 40 atomes de C,
m1 représente 0, 1, 2, 3 ou 4, et
n1 représente 0, 1, 2, 3 ou 4,
où au moins un substituant pris parmi le groupe des substituants R^{a}, R^{b} et les substituants L présents représente un groupe P ou P-Sp- ou contient au moins un tel groupe.

4. Milieu selon une ou plusieurs des revendications 1 à 3, **caractérisé en ce qu'**il comprend un ou plusieurs composés de la formule II 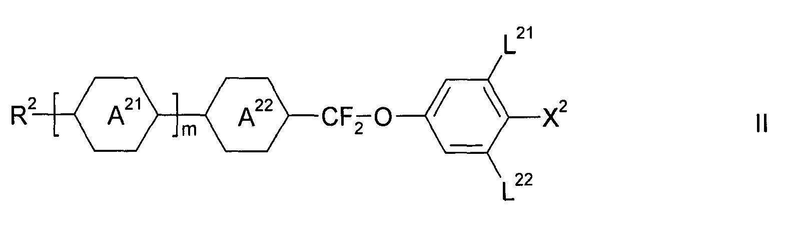 dans laquelle
R² représente alkyle, alcoxy, alkyle fluoré ou alcoxy fluoré comportant de 1 à 7 atomes de C, alkényle, alkényloxy, alcoxyalkyle ou alkényle fluoré comportant de 2 à 7 atomes de C, 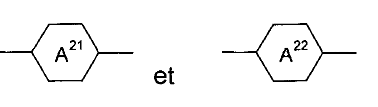 représentent, pour chaque occurrence indépendamment les unes des autres, 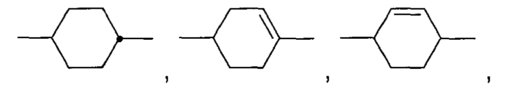 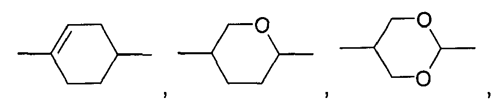 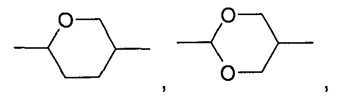 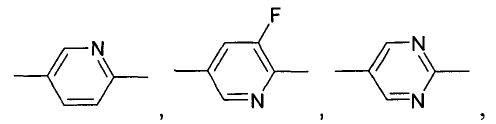 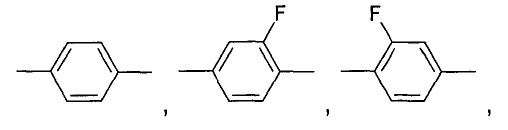 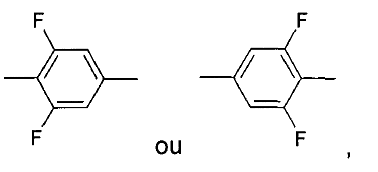
L²¹ et L²² représentent, indépendamment l'un de l'autre, H ou F,
X² représente halogène, alkyle ou alcoxy halogéné comportant de 1 à 3 atomes de C ou alkényle ou alkényloxy halogéné comportant 2 ou 3 atomes de C,
m représente 0, 1, 2 ou 3.

5. Milieu selon une ou plusieurs des revendications 1 à 4, **caractérisé en ce qu'**il comprend un ou plusieurs composés de la formule III, comme indiqué selon la revendication 1, où X³ représente Cl.

6. Milieu selon une ou plusieurs des revendications 1 à 5, **caractérisé en ce qu'**il comprend un ou plusieurs composés diélectriquement neutres de la formule IV, comme indiqué selon la revendication 1.

7. Milieu selon une ou plusieurs des revendications 1 à 6, **caractérisé en ce qu'**il comprend un ou plusieurs composés diélectriquement neutres de la formule VI, comme indiqué selon la revendication 1.

8. Affichage à cristaux liquides, **caractérisé en ce qu'**il contient un milieu selon une ou plusieurs des revendications 1 à 7.

9. Affichage, **caractérisé en ce qu'**il contient un milieu selon une ou plusieurs des revendications 1 à 7 qui a été stabilisé par polymérisation du/des composé(s) polymérisable(s).

10. Affichage selon la revendication 8 ou 9, **caractérisé en ce qu'**il est adressé au moyen d'une matrice active.

11. Affichage selon une ou plusieurs des revendications 8 à 10, **caractérisé en ce qu'**il s'agit d'un affichage PS-IPS ou PS-FFS.

12. Affichage selon une ou plusieurs des revendications 8 à 10, **caractérisé en ce qu'**il s'agit d'un affichage PS-positif-VA.

13. Utilisation d'un milieu selon une ou plusieurs des revendications 1 à 7 dans un affichage à cristaux liquides.

14. Procédé pour la production d'un affichage à cristaux liquides, **caractérisé en ce qu'**un milieu selon une ou plusieurs des revendications 1 à 7 est stabilisé dans l'aflichage par polymérisation du/des composé(s) polymérisable(s).

15. Procédé selon la revendication 14, **caractérisé en ce qu'**aucune tension électrique n'est appliquée pendant la polymérisation du/des composé(s) polymérisable(s).
